# EUROPÄISCHE PATENTSCHRIFT

(11) **EP 3 512 905 B1**
(45) Veröffentlichungstag und Bekanntmachung des Hinweises auf die Patenterteilung: **24.08.2022**
(21) Anmeldenummer: 17768393.5
(22) Anmeldetag: 05.09.2017
(51) Int. Cl.: C08G 75/22, C07D 263/57, C09K 11/00, C08G 61/00, C08G 63/00, C08G 73/00, D01D 4/00, D01F 6/74, H01B 1/00, H01L 51/00

(54) **VERFAHREN ZUR HERSTELLUNG EINES POLYBENZAZOLPOLYMERS (P)**
METHOD FOR PRODUCING A POLYBENZAZOL POLYMER (P)
PROCÉDÉ DE FABRICATION D'UN POLYMÈRE DE TYPE POLYBENZAZOLE (P)

(30) Priorität: 14.09.2016 EP 16188838
(43) Veröffentlichungstag der Anmeldung: 24.07.2019
(73) Patentinhaber: BASF SE, 67056 Ludwigshafen am Rhein (DE)
(72) Erfinder: HOECKER, Johannes David, 67056 Ludwigshafen (DE); MASSONNE, Klemens, 67056 Ludwigshafen (DE); BRILL, Marcel, 67056 Ludwigshafen (DE); MERGER, Martin, 67056 Ludwigshafen (DE); RUCH, Joachim, 67056 Ludwigshafen (DE); FLEISCHEL, Olivier, 67056 Ludwigshafen (DE); HERMANUTZ, Frank, 73770 Denkendorf (DE); UNOLD, Joerg, 71686 Remseck am Neckar (DE)
(74) Vertreter: BASF IP Association
(86) Internationale Anmeldenummer: PCT/EP2017/072232
(87) Internationale Veröffentlichungsnummer: WO 2018/050489

(56) Entgegenhaltungen:
- EP-A1- 1 106 716
- WO-A1-2014/029748
- CN-A- 103 880 767
- US-A- 5 089 591

## Beschreibung

Die vorliegende Erfindung betrifft ein Verfahren zur Herstellung eines Polybenzazolpolymers (P) durch Umsetzen eines Reaktionsgemisches (R_{G}), welches mindestens eine aromatische Dicarboxylverbindung der allgemeinen Formel (I), mindestens eine aromatische Diaminoverbindung der allgemeinen Formel (IIa), (IIb), (IIc) und/oder (IId) sowie mindestens eine ionische Flüssigkeit (IL) enthält. Die vorliegende Erfindung betrifft außerdem das Polybenzazolpolymer (P), welches durch das erfindungsgemäße Verfahren erhältlich ist sowie die Verwendung des Polybenzazolpolymers (P), beispielsweise als Fasermaterial.

Polybenzazolpolymere stellen eine Klasse organischer Polymere dar, die vor allem als Hochleistungsfasern eingesetzt werden und aufgrund ihrer außergewöhnlichen Zugfestigkeit in ihren Eigenschaften sogar Glas-, Keramik- und Carbonfasern übertreffen. Organische Hochleistungsfasern wie Polybenzazolpolymere werden zunehmend in technisch anspruchsvollen Bereichen eingesetzt, da sie sich insbesondere durch außergewöhnlich hohe Festigkeiten und Elastizitätsmodule sowie durch hohe Temperaturbeständigkeit, Flammhemmung und Chemikalienresistenz auszeichnen.

Im Gegensatz zu metallischen Werkstoffen sind polymere Materialien auf Basis von Polybenzazolpolymeren aber oft anfällig gegenüber Abbauprozessen unter natürlichen Umwelteinflüssen, die zu einer schnellen Alterung und damit zu einer Verschlechterung der Eigenschaften bis hin zur Unbrauchbarkeit führen. Unter Einwirkung äußerer Umwelteinflüsse wie UV-Strahlung und Feuchtigkeit findet ein rascher Abbau statt, wodurch letztlich die mechanischen Eigenschaften und insbesondere die Zugfestigkeit deutlich herabgesetzt werden. Durch die schnelle Alterung müssen Materialien auf Basis von Polybenzazolpolymeren entweder nach kurzer Zeit ausgewechselt werden oder in entsprechender Weise durch Verbundkonstruktion mit beständigeren Materialien gegenüber Umwelteinflüssen geschützt werden. Durch Ummantelung kann die Alterung zwar verlangsamt werden, allerdings verhindert die geringe Alterungsbeständigkeit eine universelle Einsetzbarkeit von Materialien auf Basis von Polybenzazolpolymeren über wenige Spezialbereiche hinaus.

Die Herstellung von Polybenzazolpolymeren ist bekannt und im Stand der Technik beschrieben:
So wird in "Kumar et al., Rigid-Rod Polymeric Fibers, Journal of Applied Polymer Science, Vol. 100, 791-802 (2006)" die Herstellung von Polybenzazolpolymeren aus Terephthalsäure und einer aromatischen Diaminoverbindung, die zwei weitere Substituenten aufweist, offenbart, wobei die zwei weiteren Substituenten Aminogruppen, Hydroxygruppen oder Thiolgruppen sein können. Die Umsetzung dieser Ausgangsverbindungen erfolgt dabei in Gegenwart von Polyphosphorsäure, welche gleichzeitig als Lösungsmittel, Katalysator und wasserentziehendes Mittel dient. Alternativ dazu kann statt Polyphosphorsäure auch Methansulfonsäure, Chlorsulfonsäure oder Trifluoressigsäure als Lösungsmittel verwendet werden. Die Verwendung dieser Säuren wird vor allem deshalb als vorteilhaft angeführt, da durch deren Einsatz Polybenzazolpolymere in-situ ohne weitere Trennverfahren hergestellt werden können.

Ebenso beschreibt die US 5,089,591 ein Verfahren zur Herstellung von Polybenzazolpolymeren, in dem in einer Säure gelöste Polybenzazololigomere bei Temperaturen oberhalb von 150 °C und einer Scherrate von mindestens 10 sec⁻¹ umgesetzt werden. Geeignete Säuren als Lösungsmittel sind dabei Schwefelsäure, Methansulfonsäure, Trifluormethansulfonsäure und Polyphosphorsäure.

US 2001/003130 A1 offenbart ein Verfahren zur Herstellung von Polybenzazoleoyl-benzazolen, welche durch Umsetzung von aromatischen Dicarboxylaten mit zweifach substituierten aromatischen Diaminoverbindungen erhalten werden, wobei die zwei weiteren Substituenten Hydroxygruppen, Thiolgruppen oder Aminogruppen sein können. Die Synthese der in US 2001/0003130 A1 offenbarten Polybenzazoleoylbenzazole erfolgt in Gegenwart von Polyphosphorsäure und Phosphorpentoxid.

CN 103 880 767 beschreibt ein Verfahren zur Herstellung eines Polybenzazol-polymers. Hierbei werden in einem ersten Schritt Terephthalsäuredichlorid und 4,6-Diaminoresorcinol (4,6-Diamino-1,3-dihydroxybenzol) in einer stark hydrophoben ionischen Flüssigkeit zur Reaktion gebracht, wobei ein Kondensationsprodukt erhalten wird, das aus genau einem Molekül Terephthalsäuredichlorid und genau einem Molekül 4,6-Diaminoresorcinol besteht. Zur Herstellung des Polybenzazolpolymers wird dieses Kondensationsprodukt in einem zweiten Schritt in Phosphorsäure und Phosphorpentoxid umgesetzt.

WO 2014/029748 A1 lehrt die Herstellung direktgesponnener Cellulosefasern. Als geeignete Lösungsmittel für Cellulose werden ionische Flüssigkeiten erwähnt.

Die Verwendung der bisher eingesetzten Säuren für die Synthese von Polybenzazolpolymeren hat sich allerdings als nachteilig herausgestellt, da diese Säuren nach dem Herstellungsprozess aus dem Polybenzazolpolymer nicht vollständig entfernen lassen und somit immer in geringen Konzentrationen in der Polymermatrix verbleiben. Diese Säurereste initiieren unter Feuchtigkeitseinwirkung die Hydrolyse der Polymerketten. Dieser Abbau wird durch UV-Einwirkung noch deutlich beschleunigt.

So offenbart beispielsweise "Holmes et al., The Effect of Enviromental and Mechanical Mechanisms on the Performance of Soft Body Armor, 2009, Analytical Chemistry Division, ICCM International Conferences on Composite Materials 01/2009", dass die mangelnde Hydrolysestabilität von Benzoxazolringen auf geringe Restgehalte an Phosphorsäure aus dem Herstellungsverfahren von Polybenzoxazol zurückzuführen ist. Die Phosphorsäure kann dabei als freie Phosphorsäure oder in Form von Arylphosphatestern, welche an Polybenzoxazol gebunden sind, vorliegen, wobei die Arylphosphatester in Anwesenheit von Wasser langsam hydrolysieren und Phosphorsäure bilden.

In "Chin et al., Temperature and humidity aging of poly(p-phenylene-2,6-benzo-bisoxazole) fibers: Chemical and physical characterization, Polymer Degradation and Stability, 92, 1234 - 1246 (2007)" wird offenbart, dass die Empfindlichkeit von Polybenoxazolpolymeren gegenüber Hydrolyse oder erhöhten Temperaturen durch Reste von Polyphosphorsäure zustande kommt, die zu einer Öffnung der Benzoxazolringe und damit zum Polymerabbau führen.

Die der vorliegenden Erfindung zugrunde liegende Aufgabe besteht somit in der Bereitstellung eines verbesserten Herstellungsverfahrens für Polybenzazolpolymere, welches ohne die im Stand der Technik verwendeten Säuren durchgeführt werden kann. Mit dem verbesserten Verfahren sollen Polybenzazolpolymere bereitgestellt werden können, die eine verbesserte Alterungsbeständigkeit aufweisen.

Diese Aufgabe wurde gelöst durch ein Verfahren zur Herstellung eines Polybenzazolpolymers (P) durch Umsetzen eines Reaktionsgemisches (R_{G}), das die folgenden Komponenten enthält:
(a) mindestens eine aromatische Dicarboxylverbindung der allgemeinen Formel (I): 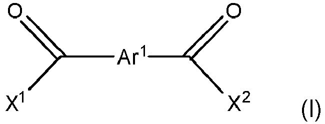 in der
   - Ar¹: ausgewählt ist aus der Gruppe bestehend aus unsubstituiertem oder zumindest monosubstituiertem Phenylen, Naphthalindiyl, Anthracendiyl, Biphenyldiyl, Diphenylmethandiyl, Diphenyletherdiyl, Diphenylthio-etherdiyl, Diphenylsulfondiyl, Benzophenondiyl, Pyridindiyl, Pyrimidindiyl, Furandiyl und Thiophendiyl, wobei die Substituenten ausgewählt sind aus der Gruppe bestehend aus -F, -Cl, -Br, -OR¹ und -C₁-C₁₀-Alkyl, wobei R¹ -H oder -C₁-C₁₀-Alkyl ist;
   - X¹, X²: unabhängig voneinander ausgewählt sind aus der Gruppe bestehend aus -OR², -F, -Cl und -Br, wobei R² -H, -C₁-C₁₀-Alkyl, -C₁-C₁₀-Alkenyl oder eine Wiederholungseinheit der allgemeinen Formel (la) ist: 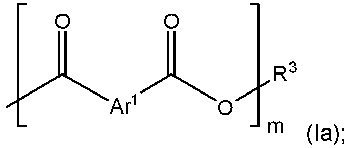
   in der
   - m: eine natürliche Zahl von 1 bis 50 ist, und
   - R³: -H, -C₁-C₁₀-Alkyl oder -C₁-C₁₀-Alkenyl ist;
(b) mindestens eine aromatische Diaminoverbindung der allgemeinen Formel (IIa), (IIb), (IIc) und/oder (IId): 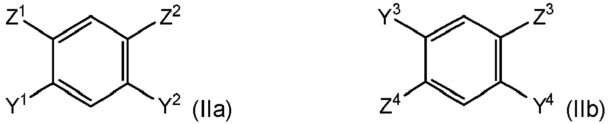 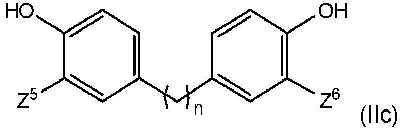 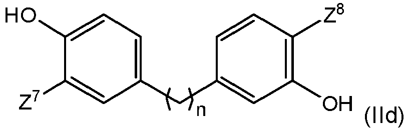 in denen
   n 0 oder 1 ist
   Y¹, Y², Y³, Y⁴ unabhängig voneinander -H, -OR⁴ oder -SR⁴ sind,
   wobei R⁴ ausgewählt ist aus der Gruppe bestehend aus -H, -C₁-C₁₀-Alkyl, Trimethylsilyl, tert-Butyldimethylsilyl, Acetyl und tert-Butyloxycarbonyl, und
   wobei höchstens einer der Reste Y¹ und Y² -H ist, und
   wobei höchstens einer der Reste Y³ und Y⁴ -H ist;
   Z¹, Z², Z³, Z⁴, Z⁵, Z⁶, Z⁷, Z⁸ unabhängig voneinander -NH₂ oder -NH₃⁺ Q⁻ sind, wobei Q⁻ ein Anionenäquivalent ist, ausgewählt aus der Gruppe bestehend aus F-, Cl-, Br-, I-, HSO₄-, SO₄²- H₃C-SO₃-, p-H₃C-C₆H₄-SO₃- und NO₃- ;
   und
(c) mindestens eine ionische Flüssigkeit (IL);
   unter Erhalt eines Produktgemisches (P_{G}), das das Polybenzazolpolymer (P) und die mindestens eine ionische Flüssigkeit (IL) enthält;
   wobei die mindestens eine ionische Flüssigkeit (IL) die allgemeine Formel (III) aufweist:

      [C]ₙ⁺ [A]ⁿ⁻ (III)
   in der
   n = 1, 2, 3 oder 4 ist;
      - das Kation [C] n⁺: mindestens ein Kation ist, ausgewählt aus der Gruppe bestehend aus unsubstituierten oder zumindest monosubstituierten Imidazolium-Kationen, Imidazolinium-Kationen, Imidazolidinium-Kationen, quartären Ammonium-Kationen, quartären Phosphonium-Kationen, Pyrazolium-Kationen, Pyrazolinium-Kationen, Pyridinium-Kationen, Pyridazinium-Kationen, Pyrimidinium-Kationen, Pyrazinium-Kationen, Pyrrolidinium-Kationen, Guanidinium-Kationen, Thiazolium-Kationen, Oxazolium-Kationen, Triazolium-Kationen, dem 1,8-Diazabicyclo[5.4.0]undec-7-enium-Kation, dem 1,8-Diazabicyclo[4.3.0]non-5-enium-Kation und Oligomeren oder Polymeren, die diese Kationen enthalten,
      wobei die Substituenten ausgewählt sind aus der Gruppe bestehend aus linearem oder verzweigtem -C₁-C₁₈-Alkyl, -C₅-C₁₂-Cycloalkyl und -C₆-C₁₄-Aryl;
      - das Anion [A]ⁿ⁻: ausgewählt ist aus der Gruppe bestehend aus halogenidhaltigen Anionen, Cyanid, Thiocyanat, Cyanat, Isocyanat, Nitrit, Nitrat, unsubstituierten oder zumindest monosubstituierten Sulfaten, Sulfiten, Sulfonaten, Carboxylaten, Boraten, Boronaten, Carbonaten, Kohlensäure-estern, Amiden, Carbonsäureimidaten, Sulfonylimidaten, bis(Sulfonyl)imidaten, Alkoxiden und Aryloxiden,
      wobei die Substituenten ausgewählt sind aus der Gruppe bestehend aus linearem oder verzweigtem -C₁-C₁₈-Alkyl, -C₅-C₁₂-Cycloalkyl und -C₆-C₁₄-Aryl, und
      wobei die halogenidhaltigen Anionen ausgewählt sind aus der Gruppe bestehend aus F-, Cl- , Br, I-, BCl₄-, PF₆-, AsF₆-, SbF₆-, AlCl₄-, Al₂Cl₇-, AlBr₄-, Al₂Br₇-, ZnCl₃-, SnCl₃-, und FeCl₄-.

Es wurde überraschend gefunden, dass sich ionische Flüssigkeiten als Lösungsmittel für die Herstellung von Polybenzazolpolymeren (P) eignen, so dass die in den im Stand der Technik offenbarten Verfahren verwendeten Säuren nicht erforderlich sind. Die in Gegenwart von ionischen Flüssigkeiten erhaltenen Polybenzazolpolymere (P) weisen dadurch eine erhöhte Beständigkeit gegenüber Alterungsprozessen und äußeren Umwelteinflüssen auf.

Durch die Verwendung von ionischen Flüssigkeiten sind aufwändige Abtrenn- oder Aufreinigungsverfahren zur Entfernung von Säureresten aus dem Polybenzazolpolymer nicht erforderlich, so dass eine umweltfreundlichere und kostengünstigere Prozessführung ermöglicht wird. Durch die Wiederverwendbarkeit der ionischen Flüssigkeiten bei der Herstellung der Polybenzazolpolymere (P) wird eine bedeutende Verbesserung der Prozessführung gegenüber den im Stand der Technik offenbarten Verfahren erreicht.

Durch den Einsatz von ionischen Flüssigkeiten, ist es weiterhin möglich, Polybenzazolpolymere (P) mit hohen Molekulargewichten zu erhalten.

Die vorliegende Erfindung wird nachfolgend im Detail erläutert.

Das Polybenzazolpolymer (P) wird im erfindungsgemäßen Verfahren durch Umsetzen eines Reaktionsgemisches (R_{G}) unter Erhalt eines Produktgemisches (P_{G}) erhalten, welches das Polybenzazolpolymer (P) enthält.

Polybenzazolpolymere sind eine Klasse von Polymeren, die dem Fachmann prinzipiell bekannt sind. Unter einem "Polybenzazolpolymer (P)" wird im Rahmen der vorliegenden Erfindung ein Polymer verstanden, welches Wiederholungseinheiten aus Polybenzoxazol und/oder Polybenzothiazol enthält.

Im Rahmen der vorliegenden Erfindung bezieht sich die Bezeichnung "Polybenzoxazol" auf Polymere, die als Wiederholungseinheiten Oxazolringe und aromatische Gruppen enthalten. Die aromatischen Gruppen sind dabei nicht notwendigerweise Benzolringe.

Im Rahmen der vorliegenden Erfindung bezieht sich die Bezeichnung "Polybenzothiazol" auf Polymere, die als Wiederholungseinheiten Thiazolringe und aromatische Gruppen enthalten. Die aromatischen Gruppen sind dabei nicht notwendigerweise Benzolringe.

Das Reaktionsgemisch (R_{G}) ist das Gemisch, welches zur Herstellung des Polybenzazolpolymers (P) umgesetzt wird.

Das Reaktionsgemisch (R_{G}) enthält als Komponenten mindestens eine aromatische Dicarboxylverbindung der allgemeinen Formel (I) (Komponente (a)), mindestens eine aromatische Diaminoverbindung der allgemeinen Formel (IIa), (IIb), (IIc) und/oder (IId) (Komponente (b)) sowie mindestens eine ionische Flüssigkeit (IL) (Komponente (c)).

Die Komponenten (a) und (b) sind in der Komponente (c) vorzugsweise zumindest teilweise gelöst. Bevorzugt sind mindestens 60 Gew.-%, besonders bevorzugt mindestens 80 Gew.-% der Komponenten (a) und (b) in der Komponente (c) gelöst, bezogen auf das Gesamtgewicht der Komponenten (a) und (b) im Reaktionsgemisch (R_{G}). Ganz besonders bevorzugt sind die Komponenten (a) und (b) vollständig in der Komponente (c) gelöst.

Die Bezeichnung "vollständig gelöst" bedeutet dabei, dass vorzugsweise höchstens 5 Gew-%, bevorzugt höchstens 3 Gew.-%, mehr bevorzugt höchstens 2 Gew.-% und besonders bevorzugt höchstens 1 Gew.-% der Komponenten (a) und (b) in der Komponente (c) als Feststoffpartikel vorliegen, bezogen auf das Gesamtgewicht der Komponente (a) und (b) im Reaktionsgemisch (R_{G}). Ganz besonders bevorzugt enthält die Komponente (c) gar keine Feststoffpartikel der Komponenten (a) und (b). Folglich können die Komponenten (a) und (b) ganz besonders bevorzugt nicht durch Filtration von der Komponente (c) abgetrennt werden.

Das Lösen der Komponenten (a) und (b) in Komponente (c) kann durch alle dem Fachmann bekannten Methoden erfolgen. Vorzugsweise werden die Komponenten (a) und (b) unter Rühren in Komponente (c) gelöst. Das Lösen der Komponenten (a) und (b) in Komponente (c) kann gleichzeitig oder nacheinander erfolgen.

Die Komponenten (a) und (b) werden in der Komponente (c) vorzugsweise bei erhöhten Temperaturen gelöst, bevorzugt im Bereich von 20 bis 120 °C und besonders bevorzugt im Bereich von 40 bis 100 °C.

Die Komponenten (a) und (b) reagieren im erfindungsgemäßen Verfahren miteinander in Anwesenheit von Komponente (c) in einer Polykondensationsreaktion. Die Komponente (c) dient als Lösungsmittel und copolymerisiert dabei vorzugsweise nicht mit den Komponenten (a) und (b). Für den Fall, dass ein Teil der Komponente (c) mit den Komponenten (a) und (b) copolymerisiert, copolymerisiert bevorzugt höchstens 1 Gew.-%, besonders bevorzugt höchstens 0,5 Gew.-% der Komponente (c), bezogen auf das Gesamtgewicht der Komponente (c), mit den Komponenten (a) und (b). Ganz besonders bevorzugt copolymerisiert die Komponente (c) gar nicht mit den Komponenten (a) und (b).

Das erfindungsgemäße Polybenzazolpolymer (P) wird in einer Ausführungsform durch Umsetzen des Reaktionsgemisches (R_{G}) in Gegenwart mindestens einer basischen Verbindung erhalten. Die mindestens eine basische Verbindung kann prinzipiell jede dem Fachmann bekannte basische Verbindung sein. Bevorzugt ist die mindestens eine basische Verbindung eine basische Alkali- oder Erdalkalimetallverbindung. Besonders bevorzugt ist die mindestens eine basische Verbindung ausgewählt aus der Gruppe bestehend aus Lithiumhydroxid, Natriumhydroxid, Kaliumhydroxid, Magnesiumhydroxid, Calciumhydroxid, Bariumhydroxid, Lithiumcarbonat, Natriumcarbonat, Kaliumcarbonat, Magnesiumcarbonat, Calciumcarbonat, Lithiumhydrid, Natriumhydrid, Kaliumhydrid, Magnesiumhydrid und Calciumhydrid. Ganz besonders bevorzugt ist die mindestens eine basische Verbindung (B) ausgewählt aus der Gruppe bestehend aus Natriumcarbonat, Kaliumcarbonat, Lithiumhydrid, Natriumhydrid, Magnesiumhydrid und Calciumhydrid.

Ein weiterer Gegenstand der vorliegenden Erfindung ist somit auch ein Verfahren, dadurch gekennzeichnet, dass die Umsetzung des Reaktionsgemisches (R_{G}) in Gegenwart mindestens einer basischen Verbindung erfolgt, die ausgewählt ist aus der Gruppe bestehend aus Lithiumhydroxid, Natriumhydroxid, Kaliumhydroxid, Magnesiumhydroxid, Calciumhydroxid, Bariumhydroxid, Lithiumcarbonat, Natrium-carbonat, Kaliumcarbonat, Magnesiumcarbonat, Calciumcarbonat, Lithiumhydrid, Natriumhydrid, Kaliumhydrid, Magnesiumhydrid und Calciumhydrid.

Darüber hinaus kann die Umsetzung des Reaktionsgemisches (R_{G}) in Gegenwart mindestens eines anorganischen Salzes erfolgen, welches sich von der vorstehend definierten mindestens einen basischen Verbindung unterscheidet. Das mindestens eine anorganische Salz kann prinzipiell jedes dem Fachmann bekannte anorganische Salz sein und kann genau ein anorganisches Salz als auch Mischungen aus zwei oder mehr verschiedenen anorganischen Salzen sein. Bevorzugt ist das mindestens eine anorganische Salz ein Alkali-, Erdalkali-, Aluminium-, Zinn(II)-, Eisen(II)- oder Mangan(II)-Salz. Mehr bevorzugt ist das mindestens eine anorganische Salz ein Alkali-, Erdalkali-, Aluminium-, Zinn(II)-, Eisen(II)- oder Mangan(II)-Halogenid. Besonders bevorzugt ist das mindestens eine anorganische Salz ausgewählt aus der Gruppe bestehend aus Lithiumchlorid, Lithiumbromid, Lithiumiodid, Natriumchlorid, Natriumbromid, Natriumiodid, Kaliumchlorid, Kaliumbromid, Kaliumiodid, Magnesiumchlorid, Magnesiumbromid, Magnesiumiodid, Calciumchlorid, Calciumbromid, Calciumiodid, Bariumchlorid, Bariumbromid, Bariumiodid, Aluminiumchlorid, Aluminiumbromid, Aluminiumiodid, Zinn(II)chlorid, Zinn(II)bromid, Zinn(II)iodid, Eisen(II)chlorid, Eisen(II)bromid, Eisen(II)iodid, Mangan(II)chlorid, Mangan(II)bromid und Mangan (II)iodid. Ganz besonders bevorzugt ist das mindestens eine anorganische Salz ausgewählt aus der Gruppe bestehend aus Lithiumchlorid, Natriumchlorid, Kaliumchlorid, Magnesiumchlorid, Calciumchlorid, Aluminiumchlorid, Zinn(II)chlorid, Eisen(II)chlorid und Mangan(II)chlorid.

Die Polykondensationsreaktion kann prinzipiell bei beliebigen Temperaturen erfolgen. Vorzugsweise erfolgt die Polykondensationsreaktion bei einer Temperatur im Bereich von 30 bis 220 °C, bevorzugt im Bereich von 60 bis 200 °C und besonders bevorzugt im Bereich von 80 bis 180 °C.

Während der Polykondensationsreaktion können flüchtige Nebenprodukte entstehen, die vorzugsweise bereits während der Umsetzung des Reaktionsgemisches (R_{G}) stetig abgetrennt werden. Als "flüchtige Nebenprodukte" werden im Rahmen der vorliegenden Erfindung alle bei der Umsetzung des Reaktionsgemisches (R_{G}) entstehenden Verbindungen verstanden, die einen Siedepunkt unterhalb von 200 °C, bevorzugt unterhalb von 150 °C und besonders bevorzugt unterhalb von 120 °C aufweisen. Bevorzugte flüchtige Nebenprodukte umfassen beispielsweise Wasser (Reaktionswasser) oder Halogenwasserstoffe. Die Abtrennung der flüchtigen Nebenprodukte kann prinzipiell nach allen dem Fachmann bekannten Methoden erfolgen. In einer bevorzugten Ausführungsform werden die flüchtigen Nebenprodukte während der Umsetzung des Reaktionsgemisches (R_{G}) stetig abdestilliert, gegebenenfalls unter stetiger Zuführung eines Stickstoffstroms.

Sämtliche nachfolgenden Angaben bezüglich des Reaktionsgemisches (R_{G}) beziehen sich auf das Gemisch vor dem Durchführen der Polykondensationsreaktion. In der Polykondensationsreaktion wird das Reaktionsgemisch (R_{G}) zu dem Produktgemisch (P_{G}) umgesetzt, welches das Polybenzazolpolymer (P) und die mindestens eine ionische Flüssigkeit (IL) enthält.

Das Produktgemisch (P_{G}) ist somit das Gemisch, welches nach dem Durchführen der Polykondensationsreaktion vorliegt. Folglich beziehen sich sämtliche Angaben bezüglich des Produktgemisches (P_{G}) auf das Gemisch nach dem Durchführen der Polykondensationsreaktion.

Das Reaktionsgemisch (R_{G}) enthält vorzugsweise 5 Gew.-% bis 25 Gew.-% der Komponente (a), 5 Gew.-% bis 25 Gew.-% der Komponente (b) und 50 Gew.-% bis 90 Gew.-% der Komponente (c), bezogen auf das Gesamtgewicht des Reaktionsgemisches (R_{G}).

Ein weiterer Gegenstand der vorliegenden Erfindung ist somit ein Verfahren, dadurch gekennzeichnet, dass das Reaktionsgemisch (R_{G}) 5 bis 25 Gew.-% der Komponente (a), 5 bis 25 Gew.-% der Komponente (b) und 50 bis 90 Gew.-% der Komponente (c) enthält, bezogen auf das Gesamtgewicht des Reaktionsgemisches (R_{G})

Bevorzugt enthält das Reaktionsgemisch (R_{G}) 8 Gew.-% bis 18 Gew.-% der Komponente (a), 8 Gew.-% bis 18 Gew.-% der Komponente (b) und 64 Gew.-% bis 84 Gew.-% der Komponente (c), bezogen auf das Gesamtgewicht des Reaktionsgemisches (R_{G}) und besonders bevorzugt enthält das Reaktionsgemisch (R_{G}) 10 Gew.-% bis 15 Gew.-% der Komponente (a), 10 Gew.-% bis 15 Gew.-% der Komponente (b) und 70 Gew.-% bis 80 Gew.-% der Komponente (c), bezogen auf das Gesamtgewicht des Reaktionsgemisches (R_{G}).

In einer besonderen Ausführungsform enthält das Reaktionsgemisch (R_{G}) als Comonomer zusätzlich mindestens eine lineare oder verzweigte aliphatische Dicarboxylverbindung. Die mindestens eine lineare oder verzweigte aliphatische Dicarboxylverbindung enthält bevorzugt 2 bis 20 Kohlenstoffatome. Besonders bevorzugte lineare oder verzweigte aliphatische Dicarboxylverbindungen sind Oxalsäure, Malonsäure, Bernsteinsäure, Glutarsäure, Adipinsäure, Pimelinsäure, Suberinsäure, Azelainsäure, Sebacinsäure sowie deren verzweigte Isomere.

Für den Fall, dass das Reaktionsgemisch mindestens eine lineare oder verzweigte aliphatische Dicarboxylverbindung enthält, so enthält das Reaktionsgemisch (R_{G}) vorzugsweise 3 bis 15 Gew.-% der Komponente (a), 5 bis 25 Gew.-% der Komponente (b), 50 bis 90 Gew.-% der Komponente (c) und 2 bis 10 Gew.-% der mindestens einen linearen oder verzweigten aliphatischen Dicarboxylverbindung, bezogen auf das Gesamtgewicht des Reaktionsgemisches (R_{G}). Das Gesamtgewicht aller Komponenten im Reaktionsgemisch (R_{G}) ergibt im Allgemeinen 100 Gew.-%.

Das Produktgemisch (P_{G}) enthält vorzugsweise mindestens 5 Gew.-% des Polybenzazolpolymers (P), bezogen auf das Gesamtgewicht des Produktgemisches (P_{G}). Besonders bevorzugt enthält das Produktgemisch (P_{G}) mindestens 10 Gew.-% und ganz besonders bevorzugt mindestens 12 Gew.-% des Polybenzazolpolymers (P), bezogen auf das Gesamtgewicht des Produktgemisches (P_{G}).

Desweiteren enthält das Produktgemisch (P_{G}) vorzugsweise höchstens 25 Gew.-% des Polybenzazolpolymers (P), bezogen auf das Gesamtgewicht des Produktgemisches (P_{G}). Besonders bevorzugt enthält das Produktgemisch (P_{G}) höchstens 22 Gew.-% und ganz besonders bevorzugt höchstens 20 Gew.-% des Polybenzazolpolymers (P), bezogen auf das Gesamtgewicht des Produktgemisches (P_{G}).

Das Produktgemisch (P_{G}) enthält vorzugsweise 5 Gew.-% bis 25 Gew.-%, bevorzugt 10 Gew.-% bis 22 Gew.-% und besonders bevorzugt 12 Gew.-% bis 20 Gew.-% des Polybenzazolpolymers (P), bezogen auf das Gesamtgewicht des Produktionsgemisches (P_{G}).

Das Polybenzazolpolymer (P) ist in der mindestens einen ionischen Flüssigkeit (IL) vorzugsweise zumindest teilweise gelöst. Bevorzugt sind mindestens 40 Gew.-%, besonders bevorzugt mindestens 60 Gew.-% und ganz besonders bevorzugt mindestens 80 Gew.-% des Polybenzazolpolymers (P) in der mindestens einen ionischen Flüssigkeit (IL) gelöst, bezogen auf das Gesamtgewicht des Polybenzazolpolymers (P) im Produktgemisch (P_{G}). Ganz besonders bevorzugt ist das Polybenzazolpolymer (P) vollständig in der mindestens einen ionischen Flüssigkeit (IL) gelöst.

Ein weiterer Gegenstand der vorliegenden Erfindung ist somit auch ein Verfahren, dadurch gekennzeichnet, dass mindestens 40 Gew.-% des Polybenzazolpolymers (P) in der mindestens einen ionischen Flüssigkeit (IL) gelöst sind, bezogen auf das Gesamtgewicht des Polybenzazolpolymers (P) im Produktgemisch (P_{G}).

Die Bezeichnung "vollständig gelöst" bedeutet dabei, dass vorzugsweise höchstens 5 Gew-%, bevorzugt höchstens 3 Gew.-%, mehr bevorzugt höchstens 2 Gew.-% und besonders bevorzugt höchstens 1 Gew.-% des Polybenzazolpolymers (P) in der mindestens einen ionischen Flüssigkeit (IL) als Feststoffpartikel vorliegen, bezogen auf das Gesamtgewicht des Polybenzazolpolymers (P) im Produktgemisch (P_{G}). Ganz besonders bevorzugt enthält die mindestens eine ionische Flüssigkeit (IL) gar keine Feststoffpartikel des Polybenzazolpolymers (P). Folglich kann das Polybenzazolpolymer (P) ganz besonders bevorzugt nicht durch Filtration von der mindestens einen ionischen Flüssigkeit (IL) abgetrennt werden.

Das Polybenzazolpolymer (P) kann vom Produktgemisch (P_{G}) nach allen dem Fachmann bekannten Methoden abgetrennt werden. Beispielsweise kann das Polybenzazolpolymer (P) durch Zugabe eines geeigneten Fällungsmittels aus dem Produktgemisch (P_{G}) ausgefällt werden.

Geeignete Fällungsmittel sind dem Fachmann prinzipiell bekannt und umfassen vorzugsweise protische polare Lösungsmittel wie Wasser, Methanol, Ethanol, n-Propanol, Isopropanol, Glycerol, Ethylenglycol oder Gemische davon.

Die Komponenten (a), (b), und (c) werden nachfolgend im Detail erläutert.

### Komponente (a)

Das Reaktionsgemisch (R_{G}) enthält mindestens eine aromatische Dicarboxylverbindung der allgemeinen Formel (I) als Komponente (a).

Die Bezeichungen "Komponente (a)", "mindestens eine aromatische Dicarboxylverbindung der allgemeinen Formel (I)" sowie "mindestens eine aromatische Dicarboxylverbindung (I)" werden dabei nachfolgend synonym verwendet.

Die Bezeichnung "mindestens eine aromatische Dicarboxylverbindung der allgemeinen Formel (I)" bezieht sich dabei auf genau eine aromatische Dicarboxylverbindung der allgemeinen Formel (I), als auch Mischungen von zwei oder mehreren verschiedenen aromatischen Dicarboxylverbindungen der allgemeinen Formel (I). Geeignete aromatische Dicarboxylverbindungen der allgemeinen Formel (I) sind dem Fachmann prinzipiell bekannt.

Die im erfindungsgemäßen Verfahren eingesetzte mindestens eine aromatische Dicarboxylverbindung weist die allgemeine Formel (I) auf: 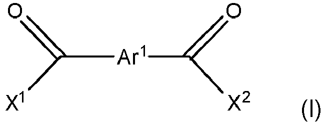 in der
- Ar¹: ausgewählt ist aus der Gruppe bestehend aus unsubstituiertem oder zumindest monosubstituiertem Phenylen, Naphthalindiyl, Anthracendiyl, Biphenyldiyl, Diphenylmethandiyl, Diphenyletherdiyl, Diphenylthioetherdiyl, Diphenyl-sulfondiyl, Benzophenondiyl, Pyridindiyl, Pyrimidindiyl, Furandiyl und Thiophendiyl,
wobei die Substituenten ausgewählt sind aus der Gruppe bestehend aus -F, -Cl, -Br, -OR¹ und -C₁-C₁₀-Alkyl,
wobei R¹ -H oder -C₁-C₁₀-Alkyl ist;
- X¹, X²: unabhängig voneinander ausgewählt sind der Gruppe bestehend aus -OR², -F, -Cl und -Br,
wobei R² -H, -C₁-C₁₀-Alkyl, -C₁-C₁₀-Alkenyl oder eine Wiederholungseinheit der allgemeinen Formel (la) ist: 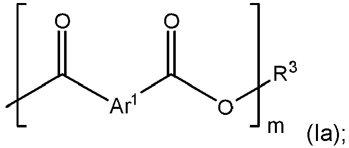
in der
- m: eine natürliche Zahl von 1 bis 50 ist, und
- R³: -H, -C₁-C₁₀-Alkyl oder -C₁-C₁₀-Alkenyl ist.

Die im erfindungsgemäßen Verfahren eingesetzte mindestens eine aromatische Dicarboxylverbindung der allgemeinen Formel (I) enthält bevorzugt zwei funktionelle Gruppen, die unabhängig voneinander ausgewählt sind aus der Gruppe bestehend aus Carboxylgruppen (-CO₂H), Carbonsäurefluoride (-COF), Carbonsäurechloride (-OCI), Carbonsäurebromide (-COBr), Carbonsäureester (-CO₂R², wobei R² eine C₁-C₁₀-Alkylgruppe oder eine C₁-C₁₀-Alkenylgruppe ist) und Carbonsäureanhydride (-CO₂R², wobei R² eine Wiederholungseinheit der vorstehend definierten allgemeinen Formel (la) ist).

Ar¹ ist im erfindungsgemäßen Verfahren ausgewählt aus der Gruppe bestehend aus unsubstituiertem oder zumindest monosubstituiertem Phenylen, Naphthalindiyl, Anthracendiyl, Biphenyldiyl, Diphenylmethandiyl, Diphenyletherdiyl, Diphenyl-thioetherdiyl, Diphenylsulfondiyl, Benzophenondiyl, Pyridindiyl, Pyrimidindiyl, Furandiyl und Thiophendiyl. Entsprechende geeignete aromatische Dicarboxylverbindungen der allgemeinen Formel (I) sind dem Fachmann prinzipiell bekannt. Prinzipiell können im erfindungsgemäßen Verfahren alle dem Fachmann bekannten entsprechenden aromatischen Dicarboxylverbindungen der allgemeinen Formel (I) eingesetzt werden.

Für den Rest Ar¹ geeignete unsubstituierte oder zumindest monosubstituierte Phenylengruppen sind beispielsweise ausgewählt aus der Gruppe bestehend aus 1,2-Phenylen, 1,3-Phenylen und 1,4-Phenylen, bevorzugt 1,4-Phenylen. Vorzugsweise sind die Phenylengruppen unsubstituiert. Entsprechende aromatische Dicarboxylverbindungen (I) mit einer Phenylengruppe als Rest Ar¹ umfassen beispielsweise Phthalsäure, Isophthalsäure, Terephthalsäure, Phthalsäureanhydrid, Phthalsäuredifluorid, Phthalsäuredichlorid, Phthalsäuredibromid, Isophthalsäure-anhydrid, Isophthalsäuredifluorid, Isophthalsäuredichlorid, Isophthalsäuredibromid, Terephthalsäureanhydrid, Terephthalsäuredifluorid, Terephthalsäuredichlorid, Terephthalsäuredibromid, Polyanhydride von Phthalsäure, Polyanhydride von Isophthalsäure, Polyanhydride von Terephthalsäure sowie C₁-C₁₀-Alkylester von Phthalsäure, Isophthalsäure und Terephthalsäure und C₁-C₁₀-Alkenylester von Phthalsäure, Isophthalsäure und Terephthalsäure.

Für den Rest Ar¹ geeignete unsubstituierte oder zumindest monosubstituierte Naphthalindiylgruppen sind beispielsweise ausgewählt aus der Gruppe bestehend aus Naphthalin-1,4-diyl, Naphthalin-1,5-diyl, Naphthalin-2,6-diyl und Naphthalin-2,7-diyl, bevorzugt Naphthalin-1,4-diyl und Naphthalin-2,6-diyl. Vorzugsweise sind die Naphthalingruppen unsubstituiert. Entsprechende aromatische Dicarboxyl-verbindungen (I) mit einer Naphthalindiylgruppe als Rest Ar¹ umfassen beispielsweise Naphthalin-1,4-dicarbonsäure, Naphthalin-1,5-dicarbonsäure, Naphthalin-2,6-dicarbon-säure, Naphthalin-2,7-dicarbonsäure, Naphthalin-1,4-dicarbonsäureanhydrid, Naph-thalin-1,4-dicarbonsäuredifluorid, Naphthalin-1,4-dicarbonsäuredichlorid, Naphthalin-1,4-dicarbonsäuredibromid, Naphthalin-1,5-dicarbonsäureanhydrid, Naphthalin-1,5-dicarbonsäuredifluorid, Naphthalin-1,5-dicarbonsäuredichlorid, Naphthalin-1,5-dicarbonsäuredibromid, Naphthalin-2,6-dicarbonsäureanhydrid, Naphthalin-2,6-dicarbonsäuredifluorid, Naphthalin-2,6-dicarbonsäuredichlorid, Naphthalin-2,6-dicarbonsäuredibromid, Naphthalin-2,7-dicarbonsäureanhydrid, Naphthalin-2,7-dicarbonsäuredifluorid, Naphthalin-2,7-dicarbonsäuredichlorid, Naphthalin-2,7-dicarbonsäuredibromid, Polyanhydride von Naphthalin-1,4-dicarbonsäure, Polyanhydride von Naphthalin-1,5-dicarbonsäure, Polyanhydride von Naphthalin-2,6-dicarbonsäure, Polyanhydride von Naphthalin-2,7-dicarbonsäure sowie C₁-C₁₀-Alkylester von Naphthalin-1,4-dicarbonsäure, Naphthalin-1,5-dicarbonsäure, Naphthalin-2,6-dicarbon-säure und Naphthalin-2,7-dicarbonsäure und C₁-C₁₀-Alkenylester von Naphthalin-1,4-dicarbonsäure, Naphthalin-1,5-dicarbonsäure, Naphthalin-2,6-dicarbonsäure und Naphthalin-2,7-dicarbonsäure.

Für den Rest Ar¹ geeignete unsubstituierte oder zumindest monosubstituierte Anthracendiylgruppen sind beispielsweise ausgewählt aus der Gruppe bestehend aus Anthracen-1,4-diyl, Anthracen-1,5-diyl, Anthracen-2,6-diyl und Anthracen-9,10-diyl, bevorzugt Anthracen-2,6-diyl und Anthracen-9,10-diyl. Vorzugsweise sind die Anthracengruppen unsubstituiert. Entsprechende aromatische Dicarboxylverbindungen (I) mit einer Anthracendiylgruppe als Rest Ar¹ umfassen beispielsweise Anthracen-1,4-dicarbonsäure, Anthracen-1,5-dicarbonsäure, Anthracen-2,6-dicarbonsäure, Anthracen-9,10-dicarbonsäure, Anthracen-1,4-dicarbonsäuredifluorid, Anthracen-1,4-dicarbonsäureanhydrid, Anthracen-1,4-dicarbonsäuredichlorid, Anthracen-1,4-dicarbonsäuredibromid, Anthracen-1,5-dicarbonsäureanhydrid, Anthracen-1,5-dicarbonsäuredifluorid, Anthracen-1,5-di-carbonsäuredichlorid, Anthracen-1,5-dicarbonsäuredibromid, Anthracen-2,6-dicarbonsäureanhydrid, Anthracen-2,6-dicarbonsäuredifluorid, Anthracen-2,6-dicarbonsäuredichlorid, Anthracen-2,6-dicarbonsäuredibromid, Anthracen-9,10-dicarbonsäureanhydrid, Anthracen-9,10-dicarbonsäuredifluorid, Anthracen-9,10-dicarbonsäuredichlorid, Anthracen-9,10-dicarbonsäuredibromid, Polyanhydride von Anthracen-1,4-dicarbonsäure, Polyanhydride von Anthracen-1,5-dicarbonsäure, Polyanhydride von Anthracen-2,6-dicarbonsäure, Polyanhydride von Anthracen-9,10-dicarbonsäure sowie C₁-C₁₀-Alkylester von Anthracen-1,4-dicarbonsäure, Anthracen-1,5-dicarbonsäure, Anthracen-2,6-dicarbonsäure und Anthracen-9,10-dicarbonsäure und C₁-C₁₀-Alkenylester von Anthracen-1,4-dicarbonsäure, Anthracen-1,5-dicarbonsäure, Anthracen-2,6-dicarbonsäure und Anthracen-9,10-dicarbonsäure.

Für den Rest Ar¹ geeignete unsubstituierte oder zumindest monosubstituierte Biphenyldiylgruppen sind beispielsweise ausgewählt aus der Gruppe bestehend aus Biphenyl-3,3'-diyl und Biphenyl-4,4'-diyl, bevorzugt Biphenyl-4,4'-diyl. Vorzugsweise sind die Biphenyldiylgruppen unsubstituiert. Entsprechende aromatische Dicarboxyl-verbindungen mit einer Biphenyldiylgruppe als Rest Ar¹ umfassen beispielsweise Biphenyl-3,3'-dicarbonsäure, Biphenyl-4,4'-dicarbonsäure, Biphenyl-3,3'-dicarbon-säureanhydrid, Biphenyl-3,3'-dicarbonsäuredifluorid, Biphenyl-3,3'-dicarbonsäure-dichlorid, Biphenyl-3,3'-dicarbonsäuredibromid, Biphenyl-4,4'-dicarbonsäureanhydrid Biphenyl-4,4'-dicarbonsäuredifluorid, Biphenyl-4,4'-dicarbonsäuredichlorid, Biphenyl-4,4'-dicarbonsäuredibromid, Polyanhydride von Biphenyl-3,3'-dicarbonsäure, Polyanhydride von Biphenyl-4,4'-dicarbonsäure sowie C₁-C₁₀-Alkylester von Biphenyl-3,3'-dicarbonsäure und Biphenyl-4,4'-dicarbonsäure und C₁-C₁₀-Alkenylester von Biphenyl-3,3'-dicarbonsäure und Biphenyl-4,4'-dicarbonsäure.

Für den Rest Ar¹ geeignete unsubstituierte oder zumindest monosubstituierte Diphenylmethandiylgruppen sind beispielsweise ausgewählt aus der Gruppe bestehend aus Diphenylmethan-3,3'-diyl und Diphenylmethan-4,4'-diyl, bevorzugt Diphenylmethan-4,4'-diyl. Vorzugsweise sind die Diphenylmethandiylgruppen unsubstituiert. Entsprechende aromatische Dicarboxylverbindungen (I) mit einer Diphenylmethandiylgruppe als Rest Ar¹ umfassen beispielsweise Diphenylmethan-3,3'-dicarbonsäure, Diphenylmethan-4,4'-dicarbonsäure, Diphenylmethan-3,3'-di-carbonsäureanhydrid, Diphenylmethan-3,3'-dicarbonsäuredifluorid, Diphenylmethan-3,3'-dicarbonsäuredichlorid, Diphenylmethan-3,3'-dicarbonsäuredibromid, Diphenyl-methan-4,4'-dicarbonsäureanhydrid, Diphenylmethan-4,4'-dicarbonsäuredifluorid, Diphenylmethan-4,4'-dicarbonsäuredichlorid, Diphenylmethan-4,4'-dicarbonsäure-dibromid, Polyanhydride von Diphenylmethan-3,3'-dicarbonsäure, Polyanhydride von Diphenylmethan-4,4'-dicarbonsäure sowie C₁-C₁₀-Alkylester von Diphenylmethan-3,3'-dicarbonsäure und Diphenylmethan-4,4'-dicarbonsäure und C₁-C₁₀-Alkenylester von Diphenylmethan-3,3'-dicarbonsäure und Diphenylmethan-4,4'-dicarbonsäure.

Für den Rest Ar¹ geeignete unsubstituierte oder zumindest monosubstituierte Diphenyletherdiylgruppen sind beispielsweise ausgewählt aus der Gruppe bestehend aus Diphenylether-3,3'-diyl und Diphenylether-4,4'-diyl, bevorzugt Diphenylether-4,4'-diyl. Vorzugsweise sind die Diphenyletherdiylgruppen unsubstituiert. Entsprechende aromatische Dicarboxylverbindungen (I) mit einer Diphenyl-etherdiylgruppe als Rest Ar¹ umfassen beispielsweise Diphenylether-3,3'-di-carbonsäure, Diphenylether-4,4'-dicarbonsäure, Diphenylether-3,3'-dicarbonsäure-anhydrid, Diphenylether-3,3'-dicarbonsäuredifluorid, Diphenylether-3,3'-dicarbonsäure-dichlorid, Diphenylether-3,3'-dicarbonsäuredibromid, Diphenylether-4,4'-dicarbonsäure-anhydrid, Diphenylether-4,4'-dicarbonsäuredifluorid, Diphenylether-4,4'-dicarbonsäure-dichlorid, Diphenylether-4,4'-dicarbonsäuredibromid, Polyanhydride von Diphenylether-3,3'-dicarbonsäure, Polyanhydride von Diphenylether-4,4'-dicarbonsäure sowie C₁-C₁₀-Alkylester von Diphenylether-3,3'-dicarbonsäure und Diphenylether-4,4'-dicarbonsäure und C₁-C₁₀-Alkenylester von Diphenylether-3,3'-dicarbonsäure und Diphenylether-4,4'-dicarbonsäure.

Für den Rest Ar¹ geeignete unsubstituierte oder zumindest monosubstituierte Diphenylthioetherdiylgruppen sind beispielsweise ausgewählt aus der Gruppe bestehend aus Diphenylthioether-3,3'-diyl und Diphenylthioether-4,4'-diyl, bevorzugt Diphenylthioether-4,4'-diyl. Vorzugsweise sind die Diphenylthioetherdiylgruppen unsubstituiert. Entsprechende aromatische Dicarboxylverbindungen (I) mit einer Diphenylthioetherdiylgruppe als Rest Ar¹ umfassen beispielsweise Diphenylthioether-3,3'-dicarbonsäure, Diphenylthioether-4,4'-dicarbonsäure, Diphenylthioether-3,3'-di-carbonsäuredifluorid, Diphenylthioether-3,3'-dicarbonsäureanhydrid, Diphenylthioether-3,3'-dicarbonsäuredichlorid, Diphenylthioether-3,3'-dicarbonsäuredibromid, Diphenyl-thioether-4,4'-dicarbonsäureanhydrid, Diphenylthioether-4,4'-dicarbonsäuredifluorid, Diphenylthioether-4,4'-dicarbonsäuredichlorid, Diphenylthioether-4,4'-dicarbonsäure-dibromid, Polyanhydride von Diphenylthioether-3,3'-dicarbonsäure, Polyanhydride von Diphenylthioether-4,4'-dicarbonsäure sowie C₁-C₁₀-Alkylester von Diphenylthioether-3,3'-dicarbonsäure und Diphenylthioether-4,4'-dicarbonsäure und C₁-C₁₀-Alkenylester von Diphenylthioether-3,3'-dicarbonsäure und Diphenylthioether-4,4'-dicarbonsäure.

Für den Rest Ar¹ geeignete unsubstituierte oder zumindest monosubstituierte Diphenylsulfondiylgruppen sind beispielsweise ausgewählt aus der Gruppe bestehend aus Diphenylsulfon-3,3'-diyl und Diphenylsulfon-4,4'-diyl, bevorzugt Diphenyl-sulfon-4,4'-diyl. Vorzugsweise sind die Diphenylsulfondiylgruppen unsubstituiert. Entsprechende aromatische Dicarboxylverbindungen (I) mit einer Diphenyl-sulfondiylgruppe als Rest Ar¹ umfassen beispielsweise Diphenylsulfon-3,3'-dicarbonsäure, Diphenylsulfon-4,4'-dicarbonsäure, Diphenylsulfon-3,3'-dicarbon-säureanhydrid, Diphenylsulfon-3,3'-dicarbonsäuredifluorid, Diphenylsulfon-3,3'-di-carbonsäuredichlorid, Diphenylsulfon-3,3'-dicarbonsäuredibromid, Diphenylsulfon-4,4'-dicarbonsäure, Diphenylsulfon-4,4'-dicarbonsäuredifluorid, Diphenylsulfon-4,4'-dicarbonsäuredichlorid, Diphenylsulfon-4,4'-dicarbonsäuredibromid, Polyanhydride von Diphenylsulfon-3,3'-dicarbonsäure, Polyanhydride von Diphenylsulfon-4,4'-dicarbon-säure, sowie C₁-C₁₀-Alkylester von Diphenylsulfon-3,3'-dicarbonsäure und Diphenyl-sulfon-4,4'-dicarbonsäure und C₁-C₁₀-Alkenylester von Diphenylsulfon-3,3'-dicarbonsäure und Diphenylsulfon-4,4'-dicarbonsäure.

Für den Rest Ar¹ geeignete unsubstituierte oder zumindest monosubstituierte Benzophenondiylgruppen sind beispielsweise ausgewählt aus der Gruppe bestehend aus Benzophenon-3,3'-diyl und Benzophenon-4,4'-diyl, bevorzugt Benzo-phenon-4,4'-diyl. Vorzugsweise sind die Benzophenondiylgruppen unsubstituiert. Entsprechende aromatische Dicarboxylverbindungen (I) mit einer Benzo-phenondiylgruppe als Rest Ar¹ umfassen beispielsweise Benzophenon-3,3'-dicarbonsäure, Benzophenon-4,4'-dicarbonsäure, Benzophenon-3,3'-dicarbon-säureanhydrid, Benzophenon-3,3'-dicarbonsäuredifluorid, Benzophenon-3,3'-dicarbon-säuredichlorid, Benzophenon-3,3'-dicarbonsäuredibromid, Benzophenon-4,4'-dicarbon-säureanhydrid, Benzophenon-4,4'-dicarbonsäuredifluorid, Benzophenon-4,4'-dicarbon-säuredichlorid, Benzophenon-4,4'-dicarbonsäuredibromid, Polyanhydride von Benzophenon-3,3'-dicarbonsäure, Polyanhydride von Benzophenon-4,4'-dicarbon-säure sowie C₁-C₁₀-Alkylester von Benzophenon-3,3'-dicarbonsäure und Benzophenon-4,4'-dicarbonsäure und C₁-C₁₀-Alkenylester von Benzophenon-3,3'-dicarbonsäure und Benzophenon-4,4'-dicarbonsäure.

Für den Rest Ar¹ geeignete unsubstituierte oder zumindest monosubstituierte Pyridindiylgruppen sind beispielsweise ausgewählt aus der Gruppe bestehend aus Pyridin-2,5-diyl, Pyridin-2,6-diyl und Pyridin-3,5-diyl, bevorzugt Pyridin-2,5-diyl. Vorzugsweise sind die Pyridindiylgruppen unsubstituiert. Entsprechende aromatische Dicarboxylverbindungen (I) mit einer Pyridindiylgruppe als Rest Ar¹ umfassen beispielsweise Pyridin-2,5-dicarbonsäure, Pyridin-2,6-dicarbonsäure, Pyridin-3,5-carbonsäure, Pyridin-2,5-dicarbonsäureanhydrid, Pyridin-2,5-dicarbonsäuredifluorid, Pyridin-2,5-dicarbonsäuredichlorid, Pyridin-2,5-dicarbonsäuredibromid, Pyridin-2,6-dicarbonsäureanhydrid, Pyridin-2,6-dicarbonsäuredifluorid, Pyridin-2,6-dicarbon-säuredichlorid, Pyridin-2,6-dicarbonsäuredibromid, Pyridin-3,5-dicarbonsäureanhydrid, Pyridin-3,5-dicarbonsäuredifluorid, Pyridin-3,5-dicarbonsäuredichlorid, Pyridin-3,5-dicarbonsäuredibromid, Polyanhydride von Pyridin-2,5-dicarbonsäure, Poly-anhydride von Pyridin-2,6-dicarbonsäure, Polyanhydride von Pyridin-3,5-dicarbonsäure sowie C₁-C₁₀-Alkylester von Pyridin-2,5-dicarbonsäure, Pyridin-2,6-dicarbonsäure und Pyridin-3,5-dicarbonsäure und C₁-C₁₀-Alkenylester von Pyridin-2,5-dicarbonsäure, Pyridin-2,6-dicarbonsäure und Pyridin-3,5-dicarbonsäure.

Für den Rest Ar¹ geeignete unsubstituierte oder zumindest monosubstituierte Pyrimidindiylgruppen sind beispielsweise ausgewählt aus der Gruppe bestehend aus Pyrimidin-2,4-diyl, Pyrimidin-2,5-diyl und Pyrimidin-4,6-diyl, bevorzugt Pyrimidin-4,6-diyl. Vorzugsweise sind die Pyrimidindiylgruppen unsubstituiert. Entsprechende aromatische Dicarboxylverbindungen (I) mit einer Pyrimidindiylgruppe als Rest Ar¹ umfassen beispielsweise Pyrimidin-2,4-dicarbonsäure, Pyrimidin-2,5-dicarbonsäure, Pyrimidin-4,6-dicarbonsäure, Pyrimidin-2,4-dicarbonsäureanhydrid, Pyrimidin-2,4-dicarbonsäuredifluorid, Pyrimidin-2,4-dicarbonsäuredichlorid, Pyrimidin-2,4-dicarbonsäuredibromid, Pyrimidin-2,5-dicarbonsäureanhydrid, Pyrimidin-2,5-dicarbonsäuredifluorid, Pyrimidin-2,5-dicarbonsäuredichlorid, Pyrimidin-2,5-dicarbonsäuredibromid, Pyrimidin-4,6-dicarbonsäureanhydrid, Pyrimidin-4,6-dicarbonsäuredifluorid, Pyrimidin-4,6-dicarbonsäuredichlorid, Pyrimidin-4,6-dicarbonsäuredibromid, Polyanhydride von Pyrimidin-2,4-dicarbonsäure, Polyanhydride von Pyrimidin-2,5-dicarbonsäure, Polyanhydride von Pyrimidin-4,6-dicarbonsäure sowie C₁-C₁₀-Alkylester von Pyrimidin-2,4-dicarbonsäure, Pyrimidin-2,5-dicarbonsäure und Pyrimidin-4,6-dicarbonsäure und C₁-C₁₀-Alkenylester von Pyrimidin-2,4-dicarbonsäure, Pyrimidin-2,5-dicarbonsäure und Pyrimidin-4,6-dicarbonsäure.

Für den Rest Ar¹ geeignete unsubstituierte oder zumindest monosubstituierte Furandiylgruppen sind beispielsweise ausgewählt aus Furan-2,5-diyl. Vorzugsweise ist die Furandiylgruppe unsubstituiert. Entsprechende aromatische Dicarboxylverbindungen (I) mit einer Furandiylgruppe als Rest Ar¹ umfassen beispielsweise Furan-2,5-dicarbonsäure, Furan-2,5-dicarbonsäureanhydrid, Furan-2,5-dicarbonsäuredifluorid, Furan-2,5-dicarbonsäuredichlorid, Furan-2,5-dicarbonsäure-dibromid, Polyanhydride von Furan-2,5-dicarbonsäure, C₁-C₁₀-Alkylester von Furan-2,5-dicarbonsäure und C₁-C₁₀-Alkenylester von Furan-2,5-dicarbonsäure.

Für den Rest Ar¹ geeignete unsubstituierte oder zumindest monosubstituierte Thiophendiylgruppen sind beispielsweise ausgegewählt aus Thiophen-2,5-diyl. Vorzugsweise ist die Thiophendiylgruppe unsubstituiert. Entsprechende aromatische Dicarboxylverbindungen (I) mit einer Thiophendiylgruppe als Rest Ar¹ umfassen beispielsweise Thiophen-2,5-dicarbonsäure, Thiophen-2,5-dicarbonsäureanhydrid, Thiophen-2,5-dicarbonsäuredifluorid, Thiophen-2,5-dicarbonsäuredichlorid, Thiophen-2,5-dicarbonsäuredibromid, Polyanhydride von Thiophen-2,5-dicarbonsäure, C₁-C₁₀-Alkylester von Thiophen-2,5-dicarbonsäure und C₁-C₁₀-Alkenylester von Thiophen-2,5-dicarbonsäure.

Bevorzugt ist der Rest Ar¹ ausgewählt aus der Gruppe bestehend aus unsubstituiertem oder zumindest monosubstituiertem 1,3-Phenylen, 1,4-Phenylen, Naphthalin-1,4-diyl, Naphthalin-2,6-diyl, Anthracen-2,6-diyl, Anthracen-9,10-diyl, Biphenyl-4,4'-diyl, Diphenylmethan-4,4'-diyl, Diphenylether-4,4'-diyl, Diphenylthioether-4,4'-diyl, Diphenylsulfon-4,4'-diyl, Benzophenon-4,4'-diyl, Pyridin-2,5-diyl, Pyrimidin-4,6-diyl, Furan-2,5-diyl und Thiophen-2,5-diyl. Besonders bevorzugt sind die vorstehend genannten Reste unsubstituiert.

Gegenstand der vorliegenden Erfindung ist somit auch ein Verfahren, dadurch gekennzeichnet, dass Ar¹ ausgewählt ist aus der Gruppe bestehend aus unsubstituiertem oder zumindest monosubstituiertem 1,3-Phenylen, 1,4-Phenylen, Naphthalin-1,4-diyl, Naphthalin-2,6-diyl, Anthracen-2,6-diyl, Anthracen-9,10-diyl, Biphenyl-4,4'-diyl, Diphenylmethan-4,4'-diyl, Diphenylether-4,4'-diyl, Diphenylthioether-4,4'-diyl, Diphenylsulfon-4,4'-diyl, Benzophenon-4,4'-diyl, Pyridin-2,5-diyl, Pyrimidin-4,6-diyl, Furan-2,5-diyl und Thiophen-2,5-diyl.

Die Bezeichnung "unsubstituiert" bedeutet im Rahmen der vorliegenden Erfindung, dass der Rest Ar¹ neben den in der allgemeinen Formel (I) dargestellten funktionellen Gruppen (-COX¹ und -COX²) keine weiteren Substituenten außer Wasserstoff (-H) aufweist.

Die Bezeichnung "zumindest monosubstituiert" bedeutet im Rahmen der vorliegenden Erfindung, dass der Rest Ar¹ neben den in der allgemeinen Formel (I) dargestellten funktionellen Gruppen, genau einen Substituenten oder auch zwei oder mehr Substituenten zusätzlich zu den in der allgemeinen Formel (I) dargestellten Carboxylgruppen aufweisen kann.

Bevorzugte C₁-C₁₀-Alkylgruppen umfassen lineare und verzweigte, gesättigte Alkylgruppen mit 1 bis 10 Kohlenstoffatomen. Besonders bevorzugte C₁-C₁₀-Alkylgruppen sind dabei C₁-C₆-Alkylgruppen wie Methyl, Ethyl, n-Propyl, Isopropyl, n-Butyl, sec-Butyl, 2- oder 3-Methylpentyl oder längerkettige Gruppen wie n-Heptyl, n-Octyl, n-Nonyl oder n-Decyl sowie deren verzweigte Isomere.

Bevorzugte C₁-C₁₀-Alkenylgruppen umfassen lineare und verzweigte zumindest einfach ungesättigte Alkylgruppen mit 1 bis 10 Kohlenstoffatomen. Besonders bevorzugte C₁-C₁₀-Alkenylgruppen sind dabei Vinyl, Allyl, Isopropenyl, 1-Butenyl, Crotyl, 3-Butenyl, 1,3-Butadienyl oder längerkettige Gruppen wie Pentenyl, Pentadienyl, Hexenyl, Hexadienyl, Hexatrienyl, Heptenyl, Heptadienyl, Heptatrienyl, Octenyl, Octadienyl, Octatrienyl, Octatetraenyl, Nonenyl, Nonadienyl, Nonatrienyl, Nonatetradienyl, Decenyl, Decadienyl, Decatrienyl, Decatetraenyl oder Decapentaenyl sowie deren verzweigte Isomere.

Vorzugsweise ist m in der Wiederholungseinheit der allgemeinen Formel (la) eine natürliche Zahl von 1 bis 50, besonders bevorzugt von 1 bis 30, ganz besonders bevorzugt von 1 bis 10 und insbesondere von 1 bis 5. Am meisten bevorzugt ist m 1.

Bevorzugt ist die Komponente (a) ausgewählt aus der Gruppe bestehend aus Isophthalsäure, Isophthalsäureanhydrid, Isophthalsäuredifluorid, Isophthalsäure-dichlorid, Isophthalsäuredibromid, Polyanhydride von Isophthalsäure, C₁-C₁₀-Alkylestervon Isophthalsäure, C₁-C₁₀-Alkenylester von Isophthalsäure, Terephthalsäure, Terephthalsäureanhydrid, Terephthalsäuredifluorid, Terephthalsäuredichlorid, Terephthalsäuredibromid, Polyanhydride von Terephthalsäure, C₁-C₁₀-Alkylester von Terephthalsäure, C₁-C₁₀-Alkenylester von Terephthalsäure, Naphthalin-1,4-dicarbonsäure, Naphthalin-1,4-dicarbonsäureanhydrid, Naphthalin-1,4-dicarbonsäuredifluorid, Naphthalin-1,4-dicarbonsäuredichlorid, Naphthalin-1,4-dicarbonsäuredibromid, Polyanhydride von Naphthalin-1,4-dicarbonsäure, C₁-C₁₀-Alkylestervon Naphthalin-1,4-dicarbonsäure, C₁-C₁₀-Alkenylester von Naphthalin-1,4-dicarbonsäure, Naphthalin-2,6-dicarbonsäure, Naphthalin-2,6-dicarbonsäureanhydrid, Naphthalin-2,6-dicarbonsäuredifluorid, Naphthalin-2,6-dicarbonsäuredichlorid, Naphthalin-2,6-dicarbonsäuredibromid, Polyanhydride von Naphthalin-2,6-dicarbonsäure, C₁-C₁₀-Alkylester von Naphthalin-2,6-dicarbonsäure, C₁-C₁₀-Alkenylester von Naphthalin-2,6-dicarbonsäure, Anthracen-2,6-dicarbonsäure, Anthracen-2,6-dicarbonsäureanhydrid, Anthracen-2,6-dicarbonsäuredifluorid, Anthracen-2,6-dicarbonsäuredichlorid, Anthracen-2,6-dicarbonsäuredibromid, Polyanhydride von Anthracen-2,6-dicarbonsäure, C₁-C₁₀-Alkylester von Anthracen-2,6-dicarbonsäure, C₁-C₁₀-Alkenylester von Anthracen-2,6-dicarbonsäure, Anthracen-9,10-dicarbonsäure, Anthracen-9,10-dicarbonsäureanhydrid, Anthracen-9,10-dicarbonsäuredifluorid, Anthracen-9,10-dicarbonsäuredichlorid, Anthracen-9,10-dicarbonsäuredibromid, Polyanhydride von Anthracen-9,10-dicarbonsäure, C₁-C₁₀-Alkylester von Anthracen-9,10-dicarbonsäure, C₁-C₁₀-Alkenylester von Anthracen-9,10-dicarbonsäure, Biphenyl-4,4'-dicarbonsäure, Biphenyl-4,4'-dicarbonsäureanhydrid, Biphenyl-4,4'-dicarbonsäuredifluorid, Biphenyl-4,4'-dicarbonsäuredichlorid, Biphenyl-4,4'-dicarbonsäuredibromid, Polyanhydride von Biphenyl-4,4'-dicarbonsäure, C₁-C₁₀-Alkylester von Biphenyl-4,4'-dicarbonsäure, C₁-C₁₀-Alkenylester von Biphenyl-4,4'-dicarbonsäure, Diphenylmethan-4,4'-dicarbonsäure, Diphenylmethan-4,4'-dicarbonsäureanhydrid, Diphenylmethan-4,4'-dicarbonsäuredifluorid, Diphenylmethan-4,4'-dicarbonsäuredichlorid, Diphenylmethan-4,4'-dicarbonsäuredibromid, Polyanhydride von Diphenylmethan-4,4'-dicarbonsäure, C₁-C₁₀-Alkylester von Diphenylmethan-4,4'-dicarbonsäure, C₁-C₁₀-Alkenylester von Diphenylmethan-4,4'-dicarbonsäure, Diphenylether-4,4'-dicarbonsäure, Diphenylether-4,4'-dicarbonsäureanhydrid, Diphenylether-4,4'-dicarbonsäuredifluorid, Diphenylether-4,4'-dicarbonsäuredichlorid, Diphenylether-4,4'-dicarbonsäuredibromid, Polyanhydride von Diphenylether-4,4'-dicarbonsäure, C₁-C₁₀-Alkylester von Diphenylether-4,4'-dicarbonsäure, C₁-C₁₀-Alkenylester von Diphenylether-4,4'-dicarbonsäure, Diphenylthioether-4,4'-dicarbonsäure, Diphenylthioether-4,4'-dicarbonsäureanhydrid, Diphenylthioether-4,4'-dicarbonsäuredifluorid, Diphenylthioether-4,4'-dicarbonsäuredichlorid, Diphenylthioether-4,4'-dicarbonsäuredibromid, Polyanhydride von Diphenylthioether-4,4'-dicarbonsäure, C₁-C₁₀-Alkylester von Diphenylthioether-4,4'-dicarbonsäure, C₁-C₁₀-Alkenylester von Diphenylthioether-4,4'-dicarbonsäure, Diphenylsulfon-4,4'-dicarbonsäure, Diphenylsulfon-4,4'-dicarbonsäureanhydrid, Diphenylsulfon-4,4'-dicarbonsäuredifluorid, Diphenylsulfon-4,4'-dicarbonsäuredichlorid, Diphenylsulfon-4,4'-dicarbonsäuredibromid, Polyanhydride von Diphenylsulfon-4,4'-dicarbonsäure, C₁-C₁₀-Alkylester von Diphenylsulfon-4,4'-dicarbonsäure, C₁-C₁₀-Alkenylester von Diphenylsulfon-4,4'-dicarbonsäure, Benzophenon-4,4'-dicarbonsäure, Benzophenon-4,4'-dicarbonsäureanhydrid, Benzophenon-4,4'-dicarbonsäuredifluorid, Benzophenon-4,4'-dicarbonsäuredichlorid, Benzophenon-4,4'-dicarbonsäuredibromid, Polyanhydride von Benzophenon-4,4'-dicarbonsäure, C₁-C₁₀-Alkylester von Benzophenon-4,4'-dicarbonsäure, C₁-C₁₀-Alkenylester von Benzophenon-4,4'-dicarbonsäure, Pyridin-2,5-dicarbonsäure, Pyridin-2,5-dicarbonsäureanhydrid, Pyridin-2,5-dicarbonsäuredifluorid, Pyridin-2,5-dicarbonsäuredichlorid, Pyridin-2,5-dicarbonsäuredibromid, Polyanhydride von Pyridin-2,5-dicarbonsäure, C₁-C₁₀-Alkylester von Pyridin-2,5-dicarbonsäure, C₁-C₁₀-Alkenylester von Pyridin-2,5-dicarbonsäure, Pyrimidin-4,6-dicarbonsäure, Pyrimidin-4,6-dicarbonsäureanhydrid, Pyrimidin-4,6-dicarbonsäuredifluorid, Pyrimidin-4,6-dicarbonsäuredichlorid, Pyrimidin-4,6-dicarbonsäuredibromid, Polyanhydride von Pyrimidin-4,6-dicarbonsäure, C₁-C₁₀-Alkylester von Pyrimidin-4,6-dicarbonsäure, C₁-C₁₀-Alkenylester von Pyrimidin-4,6-dicarbonsäure, Furan-2,5-dicarbonsäure, Furan-2,5-dicarbonsäureanhydrid, Furan-2,5-dicarbonsäuredifluorid, Furan-2,5-dicarbonsäuredichlorid, Furan-2,5-dicarbonsäuredibromid, Polyanhydride von Furan-2,5-dicarbonsäure, C₁-C₁₀-Alkylester von Furan-2,5-dicarbonsäure, C₁-C₁₀-Alkenylester von Furan-2,5-dicarbonsäure, Thiophen-2,5-dicarbonsäure, Thiophen-2,5-dicarbonsäureanhydrid, Thiophen-2,5-dicarbonsäuredifluorid, Thiophen-2,5-dicarbonsäuredichlorid, Thiophen-2,5-dicarbonsäuredibromid, Polyanhydride von Thiophen-2,5-dicarbonsäure, C₁-C₁₀-Alkylester von Thiophen-2,5-dicarbonsäure und C₁-C₁₀-Alkenylester von Thiophen-2,5-dicarbonsäure.

Ein weiterer Gegenstand der vorliegenden Erfindung ist somit auch ein Verfahren, dadurch gekennzeichnet, dass die Komponente (a) ausgewählt ist aus der Gruppe bestehend aus Isophthalsäure, Isophthalsäureanhydrid, Isophthalsäuredifluorid, Isophthalsäuredichlorid, Isophthalsäuredibromid, Polyanhydride von Isophthalsäure, C₁-C₁₀-Alkylester von Isophthalsäure, C₁-C₁₀-Alkenylester von Isophthalsäure, Terephthalsäure, Terephthalsäureanhydrid, Terephthalsäuredifluorid, Terephthal-säuredichlorid, Terephthalsäuredibromid, Polyanhydride von Terephthalsäure, C₁-C₁₀-Alkylester von Terephthalsäure, C₁-C₁₀-Alkenylester von Terephthalsäure, Naphthalin-1,4-dicarbonsäure, Naphthalin-1,4-dicarbonsäureanhydrid, Naphthalin-1,4-dicarbon-säuredifluorid, Naphthalin-1,4-dicarbonsäuredichlorid, Naphthalin-1,4-dicarbonsäure-dibromid, Polyanhydride von Naphthalin-1,4-dicarbonsäure, C₁-C₁₀-Alkylester von Naphthalin-1,4-dicarbonsäure, C₁-C₁₀-Alkenylester von Naphthalin-1,4-dicarbonsäure, Naphthalin-2,6-dicarbonsäure, Naphthalin-2,6-dicarbonsäureanhydrid, Naphthalin-2,6-dicarbonsäuredifluorid, Naphthalin-2,6-dicarbonsäuredichlorid, Naphthalin-2,6-dicarbonsäuredibromid, Polyanhydride von Naphthalin-2,6-dicarbonsäure, C₁-C₁₀-Alkylester von Naphthalin-2,6-dicarbonsäure, C₁-C₁₀-Alkenylester von Naphthalin-2,6-dicarbonsäure, Anthracen-2,6-dicarbonsäure, Anthracen-2,6-dicarbonsäureanhydrid, Anthracen-2,6-dicarbonsäuredifluorid, Anthracen-2,6-dicarbonsäuredichlorid, Anthra-cen-2,6-dicarbonsäuredibromid, Polyanhydride von Anthracen-2,6-dicarbonsäure, C₁-C₁₀-Alkylester von Anthracen-2,6-dicarbonsäure, C₁-C₁₀-Alkenylester von Anthracen-2,6-dicarbonsäure, Anthracen-9,10-dicarbonsäure, Anthracen-9,10-dicarbonsäureanhydrid, Anthracen-9,10-dicarbonsäuredifluorid, Anthracen-9,10-dicarbonsäure-dichlorid, Anthracen-9,10-dicarbonsäuredibromid, Polyanhydride von Anthracen-9,10-dicarbonsäure, C₁-C₁₀-Alkylester von Anthracen-9,10-dicarbonsäure, C₁-C₁₀-Alkenylester von Anthracen-9,10-dicarbonsäure, Biphenyl-4,4'-dicarbonsäure, Biphenyl-4,4'-dicarbonsäureanhydrid, Biphenyl-4,4'-dicarbonsäuredifluorid, Biphenyl-4,4'-dicarbonsäuredichlorid, Biphenyl-4,4'-dicarbonsäuredibromid, Polyanhydride von Biphenyl-4,4'-dicarbonsäure, C₁-C₁₀-Alkylestervon Biphenyl-4,4'-dicarbonsäure, C₁-C₁₀-Alkenylester von Biphenyl-4,4'-dicarbonsäure, Diphenylmethan-4,4'-dicarbonsäure, Diphenylmethan-4,4'-dicarbonsäureanhydrid, Diphenylmethan-4,4'-dicarbonsäure-difluorid, Diphenylmethan-4,4'-dicarbonsäuredichlorid, Diphenylmethan-4,4'-dicarbonsäuredibromid, Polyanhydride von Diphenylmethan-4,4'-dicarbonsäure, C₁-C₁₀-Alkylester von Diphenylmethan-4,4'-dicarbonsäure, C₁-C₁₀-Alkenylester von Diphenylmethan-4,4'-dicarbonsäure, Diphenylether-4,4'-dicarbonsäure, Diphenylether-4,4'-dicarbonsäureanhydrid, Diphenylether-4,4'-dicarbonsäuredifluorid, Diphenylether-4,4'-dicarbonsäuredichlorid, Diphenylether-4,4'-dicarbonsäuredibromid, Polyanhydride von Diphenylether-4,4'-dicarbonsäure, C₁-C₁₀-Alkylester von Diphenylether-4,4'-dicarbonsäure, C₁-C₁₀-Alkenylester von Diphenylether-4,4'-dicarbonsäure, Diphenyl-thioether-4,4'-dicarbonsäure, Diphenylthioether-4,4'-dicarbon-säureanhydrid, Diphenyl-thioether-4,4'-dicarbonsäuredifluorid, Diphenylthioether-4,4'-dicarbonsäuredichlorid, Diphenylthioether-4,4'-dicarbonsäuredibromid, Polyanhydride von Diphenylthioether-4,4'-dicarbonsäure, C₁-C₁₀-Alkylester von Diphenylthioether-4,4'-dicarbonsäure, C₁-C₁₀-Alkenylester von Diphenylthioether-4,4'-dicarbonsäure, Diphenylsulfon-4,4'-dicarbon-säure, Diphenylsulfon-4,4'-dicarbonsäureanhydrid, Diphenylsulfon-4,4'-dicarbon-säuredifluorid, Diphenylsulfon-4,4'-dicarbonsäuredichlorid, Diphenylsulfon-4,4'-dicarbonsäure-dibromid, Polyanhydride von Diphenylsulfon-4,4'-dicarbonsäure, C₁-C₁₀-Alkylester von Diphenylsulfon-4,4'-dicarbonsäure, C₁-C₁₀-Alkenylester von Diphenylsulfon-4,4'-dicarbonsäure, Benzophenon-4,4'-dicarbonsäure, Benzophenon-4,4'-dicarbonsäureanhydrid, Benzophenon-4,4'-dicarbonsäuredifluorid, Benzophenon-4,4'-dicarbonsäuredichlorid, Benzophenon-4,4'-dicarbonsäuredibromid, Polyanhydride von Benzophenon-4,4'-dicarbonsäure, C₁-C₁₀-Alkylester von Benzophenon-4,4'-dicarbonsäure, C₁-C₁₀-Alkenylester von Benzophenon-4,4'-dicarbonsäure, Pyridin-2,5-dicarbonsäure, Pyridin-2,5-dicarbonsäureanhydrid, Pyridin-2,5-dicarbonsäure-difluorid, Pyridin-2,5-dicarbonsäuredichlorid, Pyridin-2,5-dicarbonsäuredibromid, Poly-anhydride von Pyridin-2,5-dicarbonsäure, C₁-C₁₀-Alkylester von Pyridin-2,5-di-carbonsäure, C₁-C₁₀-Alkenylester von Pyridin-2,5-dicarbonsäure, Pyrimidin-4,6-di-carbonsäure, Pyrimidin-4,6-dicarbonsäureanhydrid, Pyrimidin-4,6-dicarbonsäuredi-fluorid, Pyrimidin-4,6-dicarbonsäuredichlorid, Pyrimidin-4,6-dicarbonsäuredibromid, Polyanhydride von Pyrimidin-4,6-dicarbonsäure, C₁-C₁₀-Alkylester von Pyrimidin-4,6-dicarbonsäure, C₁-C₁₀-Alkenylester von Pyrimidin-4,6-dicarbonsäure, Furan-2,5-dicarbonsäure, Furan-2,5-dicarbonsäureanhydrid, Furan-2,5-dicarbonsäuredifluorid, Furan-2,5-dicarbonsäuredichlorid, Furan-2,5-dicarbonsäuredibromid, Polyanhydride von Furan-2,5-dicarbonsäure, C₁-C₁₀-Alkylester von Furan-2,5-dicarbonsäure, C₁-C₁₀-Alkenylester von Furan-2,5-dicarbonsäure, Thiophen-2,5-dicarbonsäure, Thiophen-2,5-dicarbonsäureanhydrid, Thiophen-2,5-dicarbonsäuredifluorid, Thiophen-2,5-dicarbon-säuredichlorid, Thiophen-2,5-dicarbonsäuredibromid, Polyanhydride von Thiophen-2,5-dicarbonsäure, C₁-C₁₀-Alkylester von Thiophen-2,5-dicarbonsäure und C₁-C₁₀-Alkenylester von Thiophen-2,5-dicarbonsäure.

Besonders bevorzugt ist die Komponente (a) ausgewählt aus der Gruppe bestehend aus Terephthalsäure, Terephthalsäureanhydrid, Terephthalsäuredifluorid, Terephthalsäuredichlorid, Terephthalsäuredibromid und C₁-C₁₀-Alkylestern von Terephthalsäure.

Das Reaktionsgemisch (R_{G}) enthält bevorzugt mindestens 5 Gew.-% der Komponente (a), bezogen auf das Gesamtgewicht des Reaktionsgemisches (R_{G}). Besonders bevorzugt enthält das Reaktionsgemisch (R_{G}) mindestens 8 Gew.-% und ganz besonders bevorzugt mindestens 10 Gew.-% der Komponente (a), bezogen auf das Gesamtgewicht des Reaktionsgemisches (R_{G}).

Desweiteren enthält das Reaktionsgemisch (R_{G}) bevorzugt höchstens 25 Gew.-% der Komponente (a), bezogen auf das Gesamtgewicht des Reaktionsgemisches (R_{G}). Besonders bevorzugt enthält das Reaktionsgemisch (R_{G}) höchstens 18 Gew.-% und ganz besonders bevorzugt höchstens 15 Gew.-% der Komponente (a), bezogen auf das Gesamtgewicht des Reaktionsgemisches (R_{G}). Das Gesamtgewicht aller Komponenten im Reaktionsgemisch (R_{G}) ergibt im Allgemeinen 100 Gew.-%.

Das Reaktionsgemisch (R_{G}) enthält bevorzugt 5 bis 25 Gew.-% der Komponente (a), bezogen auf das Gesamtgewicht des Reaktionsgemischs (R_{G}). Besonders bevorzugt enthält das Reaktionsgemisch (R_{G}) 8 bis 18 Gew.-% und ganz besonders bevorzugt 10 bis 15 Gew.-% der Komponente (a), bezogen auf das Gesamtgewicht des Reaktionsgemischs (R_{G}).

In einer bevorzugten Ausführungsform enthält die Komponente (a) mindestens 80 Gew.-%, besonders bevorzugt mindestens 90 Gew.-% und ganz besonders bevorzugt mindestens 98 Gew.-% mindestens einer aromatischen Dicarboxylverbindung der allgemeinen Formel (I) ausgewählt aus der Gruppe bestehend aus Terephthalsäure, Terephthalsäureanhydrid, Terephthalsäuredifluorid, Terephthalsäuredichlorid, Terephthalsäuredibromid, C₁-C₁₀-Alkylestern von Terephthalsäure und C₁-C₁₀-Alkenylestern von Terephthalsäure, bezogen auf das Gesamtgewicht der Komponente (a) in dem Reaktionsgemisch (R_{G}). Die hier angegebenen Gewichtsangaben bezüglich der Komponente (a) beziehen sich dabei auf das Gesamtgewicht an eingesetzter Terephthalsäure, Terephthalsäureanhydrid, Terephthalsäuredifluorid, Terephthalsäuredichlorid, Terephthalsäuredibromid, C₁-C₁₀-Alkylestern von Terephthalsäure und C₁-C₁₀-Alkenylestern von Terephthalsäure.

In einer besonders bevorzugten Ausführungsform besteht die Komponente (a) im Wesentlichen aus mindestens einer aromatischen Dicarboxylverbindung der allgemeinen Formel (I) ausgewählt aus der Gruppe bestehend aus Terephthalsäure, Terephthalsäureanhydrid, Terephthalsäuredifluorid, Terephthalsäuredichlorid, Terephthalsäuredibromid, C₁-C₁₀-Alkylestern von Terephthalsäure und C₁-C₁₀-Alkenylestern von Terephthalsäure.

Unter der Bezeichnung "besteht im Wesentlichen aus" wird im Rahmen der vorliegenden Erfindung verstanden, dass die Komponente (a) mindestens 99 Gew.-%, bevorzugt mindestens 99,5 Gew.-% und besonders bevorzugt mindestens 99,9 Gew.-% mindestens einer aromatischen Dicarboxylverbindung der allgemeinen Formel (I) ausgewählt aus der Gruppe bestehend aus Terephthalsäure, Terephthalsäureanhydrid, Terephthalsäuredifluorid, Terephthalsäuredichlorid, Terephthalsäuredibromid, C₁-C₁₀-Alkylestern von Terephthalsäure und C₁-C₁₀-Alkenylestern von Terephthalsäure enthält, bezogen auf das Gesamtgewicht der Komponente (a) in dem Reaktionsgemisch (R_{G}).

In einer weiteren besonders bevorzugten Ausführungsform besteht die Komponente (a) im Wesentlichen aus mindestens einer aromatischen Dicarboxylverbindung der allgemeinen Formel (I) ausgewählt aus Terephthalsäureanhydrid, Terephthalsäuredichlorid und C₁-C₁₀-Alkenylestern von Terephthalsäure.

In einer insbesondere bevorzugten Ausführungsform ist die Komponente (a) Terephthalsäuredichlorid.

### Komponente (b)

Das Reaktionsgemisch (R_{G}) enthält mindestens eine aromatische Diaminoverbindung der allgemeinen Formel (IIa), (IIb), (IIc) und/oder (IId) als Komponente (b).

Die Bezeichungen "Komponente (b)", "mindestens eine aromatische Diaminoverbindung der allgemeinen Formel (IIa), (IIb), (IIc) und/oder (IId)" sowie "mindestens eine aromatische Diaminoverbindung (IIa-d)" werden dabei nachfolgend synonym verwendet.

Die Bezeichnung "mindestens eine aromatische Diaminoverbindung der allgemeinen Formel (IIa), (IIb), (IIc) und/oder (IId)" bezieht sich dabei auf genau eine aromatische Diaminoverbindung der allgemeinen Formel (IIa), (IIb), (IIc) und/oder (IId) als auch auf Mischungen von zwei oder mehreren verschiedenen aromatischen Diaminoverbindungen der allgemeinen Formel (IIa), (IIb), (IIc) und/oder (IId). Geeignete aromatische Diaminoverbindungen der allgemeinen Formel (IIa), (IIb), (IIc) und/oder (IId) sind dem Fachmann prinzipiell bekannt.

Die im erfindungsgemäßen Verfahren eingesetzte mindestens eine aromatische Diaminoverbindung (IIa-d) enthält zwei Aminogruppen. Unter der Bezeichnung "Aminogruppe" wird im Rahmen der vorliegenden Erfindung -NH₂ verstanden. Dem Fachmann ist klar, dass Aminogruppen auch in protonierter Form als Amino-Hydrogensalze (-NH₃⁺ Q⁻) vorliegen können, wobei Q- ein Anionenäquivalent ist, ausgewählt aus der Gruppe bestehend aus Fluorid (F-), Chlorid (Cl-), Bromid (Br), lodid (I-), Hydrogensulfat (HSO₄-), Sulfat (SO₄²-), Methansulfonat (H₃C-SO₃-), p-Toluolsulfonat (p-H₃C-C₆H₄-SO₃-) und Nitrat (NO₃-).

Unter "einem Anionenäquivalent" versteht der Fachmann im Rahmen der vorliegenden Anmeldung, dass ein Anion mit einer einfachen negativen Ladung oder ein Ladungsäquivalent eines Anions mit zwei oder mehr negativen Ladungen vorliegt.

Die im erfindungsgemäßen Verfahren eingesetzte mindestens eine aromatische Diaminoverbindung weist die allgemeine Formel (IIa), (IIb), (IIc) und/oder (IId) auf:

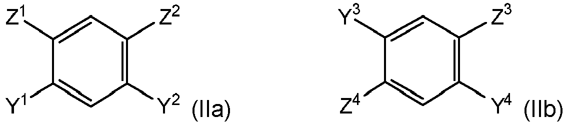

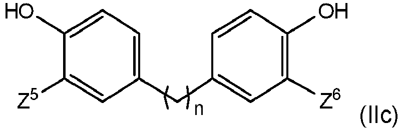

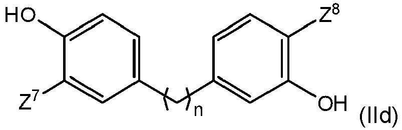

in denen
n 0 oder 1 ist
- Y¹, Y², Y³, Y⁴: unabhängig voneinander -H, -OR⁴ oder -SR⁴ sind, wobei R⁴ ausgewählt ist aus der Gruppe bestehend aus -H, -C₁-C₁₀-Alkyl, Trimethylsilyl, Triethylsilyl, tert-Butyldimethylsilyl, Acetyl und tert-Butyloxycarbonyl, und wobei höchstens einer der Reste Y¹ und Y²-H ist, und wobei höchstens einer der Reste Y³ und Y⁴-H ist;
- Z¹, Z², Z³, Z⁴, Z⁵, Z⁶, Z⁷, Z⁸: unabhängig voneinander -NH₂ oder -NH₃⁺ Q⁻ sind, wobei Q⁻ ein Anionenäquivalent ist, ausgewählt aus der Gruppe bestehend aus F⁻, Cl⁻, Br, I⁻, HSO₄-, SO₄²⁻, H₃C-SO₃⁻, p-H₃C-C₆H₄-SO₃- und NO₃-.

Bevorzugte C₁-C₁₀-Alkylgruppen umfassen lineare und verzweigte, gesättigte Alkylgruppen mit 1 bis 10 Kohlenstoffatomen. Besonders bevorzugte C₁-C₁₀-Alkylgruppen sind dabei C₁-C₆-Alkylgruppen wie Methyl, Ethyl, n-Propyl, Isopropyl, n-Butyl, sec-Butyl, 2- oder 3-Methylpentyl oder längerkettige Gruppen wie n-Heptyl, n-Octyl, n-Nonyl oder n-Decyl sowie deren verzweigte Isomere.

Y¹, Y², Y³ und Y⁴ sind in der mindestens einen aromatischen Diaminoverbindung der allgemeinen Formel (IIa), (IIb), (IIc) und/oder (IId) vorzugsweise unabhängig voneinander Hydroxygruppen oder Thiolgruppen.

Unter der Bezeichnung "Hydroxygruppen" wird im Rahmen der vorliegenden Erfindung -OH verstanden. Analog dazu wird unter "Thiolgruppen" im Rahmen der vorliegenden Erfindung -SH verstanden.

In einer besonders bevorzugten Ausführungsform sind Y¹, Y², Y³ und Y⁴ in der mindestens einen aromatischen Diaminoverbindung der allgemeinen Formel (IIa) und/oder (IIb) Hydroxygruppen.

Z¹, Z², Z³, Z⁴, Z⁵, Z⁶, Z⁷ und Z⁸ sind unabhängig voneinander Aminogruppen (-NH₂) oder Amino-Hydrogensalze (-NH₃⁺ Q⁻). Bevorzugt sind Z¹, Z², Z³, Z⁴, Z⁵, Z⁶, Z⁷ und Z⁸ in der mindestens einen aromatischen Diaminoverbindung der allgemeinen Formel (IIa), (IIb), (IIc) und/oder (IId) Amino-Hydrogensalze.

Bevorzugt ist die Komponente (b) ausgewählt aus der Gruppe bestehend aus 4,6-Diamino-1,3-dihydroxybenzol, 4,6-Diamino-1,3-dithiobenzol, 4,6-Diamino-3-hydroxy-1-thiobenzol, 2,5-Diamino-1,4-dihydroxybenzol, 2,5-Diamino-1,4-dithiobenzol, 2,5-Diamino-4-hydroxy-1-thiobenzol, 4,6-Diamino-1,3-dihydroxybenzol-dihydrochlorid, 4,6-Diamino-1,3-dithiobenzol-dihydrochlorid, 4,6-Diamino-3-hydroxy-1-thiobenzol-dihydro-chlorid, 2,5-Diamino-1,4-dihydroxybenzol-dihydrochlorid, 2,5-Diamino-1,4-dithiobenzol-dihydrochlorid, 2,5-Diamino-4-hydroxy-1-thiobenzol-dihydrochlorid, 3,3'-Diamino-4,4'-dihydroxybiphenyl, 3,3'-Diamino-4,4'-dihydroxybiphenyl-dihydrochlorid, 4,4'-Diamino-3,3'-dihydroxybiphenyl, 4,4'-Diamino-3,3'-dihydroxybiphenyl-dihydrochlorid, 3,3'-Diamino-4,4'-dihydroxydiphenylmethan, 3,3'-Diamino-4,4'-dihydroxydiphenylmethan-dihydrochlorid, 4,4'-Diamino-3,3'-dihydroxydiphenylmethan und 4,4'-Diamino-3,3'-dihydroxydiphenylmethan-dihydrochlorid.

Ein weiterer Gegenstand der vorliegenden Anmeldung ist daher auch ein Verfahren, dadurch gekennzeichnet, dass die Komponente (b) ausgewählt ist aus der Gruppe bestehend aus 4,6-Diamino-1,3-dihydroxybenzol, 4,6-Diamino-1,3-dithiobenzol, 4,6-Diamino-3-hydroxy-1-thiobenzol, 2,5-Diamino-1,4-dihydroxybenzol, 2,5-Diamino-1,4-dithiobenzol, 2,5-Diamino-4-hydroxy-1-thiobenzol, 4,6-Diamino-1,3-dihydroxybenzol-dihydrochlorid, 4,6-Diamino-1,3-dithiobenzol-dihydrochlorid, 4,6-Diamino-3-hydroxy-1-thiobenzol-dihydrochlorid, 2,5-Diamino-1,4-dihydroxybenzol-dihydrochlorid, 2,5-Diamino-1,4-dithiobenzol-dihydrochlorid, 2,5-Diamino-4-hydroxy-1-thiobenzol-dihydrochlorid, 3,3'-Diamino-4,4'-dihydroxybiphenyl, 3,3'-Diamino-4,4'-dihydroxybiphenyl-dihydrochlorid, 4,4'-Diamino-3,3'-dihydroxybiphenyl, 4,4'-Diamino-3,3'-dihydroxybiphenyl-dihydrochlorid, 3,3'-Diamino-4,4'-dihydroxydiphenylmethan, 3,3'-Diamino-4,4'-dihydroxydiphenylmethan-dihydrochlorid, 4,4'-Diamino-3,3'-dihydroxydiphenylmethan und 4,4'-Diamino-3,3'-dihydroxydiphenylmethan-dihydrochlorid.

Besonders bevorzugt ist die Komponente (b) ausgewählt aus der Gruppe bestehend aus 4,6-Diamino-1,3-dihydroxybenzol und 4,6-Diamino-1,3-dihydroxybenzol-dihydrochlorid.

Das Reaktionsgemisch (R_{G}) enthält bevorzugt mindestens 5 Gew.-% der Komponente (b), bezogen auf das Gesamtgewicht des Reaktionsgemischs (R_{G}). Besonders bevorzugt enthält das Reaktionsgemisch (R_{G}) mindestens 8 Gew.-% und ganz besonders bevorzugt mindestens 10 Gew.-% der Komponente (b), bezogen auf das Gesamtgewicht des Reaktionsgemischs (R_{G}).

Desweiteren enthält das Reaktionsgemisch (R_{G}) bevorzugt höchstens 25 Gew.-% der Komponente (b), bezogen auf das Gesamtgewicht des Reaktionsgemischs (R_{G}). Besonders bevorzugt enthält das Reaktionsgemisch (R_{G}) höchstens 18 Gew.-% und ganz besonders bevorzugt höchstens 15 Gew.-% der Komponente (b), bezogen auf das Gesamtgewicht des Reaktionsgemischs (R_{G}). Das Gesamtgewicht aller Komponenten im Reaktionsgemisch (R_{G}) ergibt im Allgemeinen 100 Gew.-%.

Das Reaktionsgemisch (R_{G}) enthält bevorzugt 5 bis 30 Gew.-% der Komponente (b), bezogen auf das Gesamtgewicht des Reaktionsgemischs (R_{G}). Besonders bevorzugt enthält das Reaktionsgemisch (R_{G}) 8 bis 18 Gew.-% und ganz besonders bevorzugt 10 bis 15 Gew.-% der Komponente (b), bezogen auf das Gesamtgewicht des Reaktionsgemischs (R_{G}).

In einer bevorzugten Ausführungsform enthält die Komponente (b) mindestens 80 Gew.-%, besonders bevorzugt mindestens 90 Gew.-% und ganz besonders bevorzugt mindestens 98 Gew.-% mindestens einer aromatischen Diaminoverbindung (IIa-d) ausgewählt aus der Gruppe bestehend aus 4,6-Diamino-1,3-dihydroxybenzol und 4,6-Diamino-1,3-dihydroxybenzol-dihydrochlorid, bezogen auf das Gesamtgewicht der Komponente (b) im Reaktionsgemisch (R_{G}). Die hier angegebenen Gewichtsangaben bezüglich der Komponente (b) beziehen sich dabei auf das Gesamtgewicht an eingesetztem 4,6-Diamino-1,3-dihydroxybenzol und 4,6-Diamino-1, 3-dihydroxybenzol-dihydrochlorid.

In einer weiteren besonders bevorzugten Ausführungsform besteht die Komponente (b) im Wesentlichen aus mindestens einer aromatischen Diaminoverbindung (IIa-d) ausgewählt aus der Gruppe bestehend aus 4,6-Diamino-1,3-dihydroxybenzol und 4,6-Diamino-1,3-dihydroxybenzol-dihydrochlorid. Unter der Bezeichnung "besteht im Wesentlichen aus" wird im Rahmen der vorliegenden Erfindung verstanden, dass die Komponente (b) mindestens 99 Gew.-%, bevorzugt mindestens 99,5 Gew.-% und besonders bevorzugt mindestens 99,9 Gew.-% mindestens einer aromatischen Diaminoverbindung (IIa-d) ausgewählt aus der Gruppe bestehend aus 4,6-Diamino-1,3-dihydroxybenzol und 4,6-Diamino-1,3-dihydroxybenzol-dihydrochlorid enthält, bezogen auf das Gesamtgewicht der Komponente (b) im Reaktionsgemisch (R_{G}).

In einer insbesondere bevorzugten Ausführungsform besteht die Komponente (b) aus mindestens einer aromatischen Diaminoverbindung (IIa-d) ausgewählt aus der Gruppe bestehend aus 4,6-Diamino-1,3-dihydroxybenzol und 4,6-Diamino-1,3-dihydroxybenzol-dihydrochlorid.

In diesen Ausführungsformen ist 4,6-Diamino-1,3-dihydroxybenzol-dihydrochlorid als Komponente (b) besonders bevorzugt.

Die Endgruppen des Polybenzazolpolymers (P) sind abhängig von den Reaktionsbedingungen sowie dem molaren Verhältnis zwischen Komponente (a) und Komponente (b) und sind vorzugsweise ein Alkyl- oder Arylrest, der durch ein Verkappungsreagenz erhalten wird.

Geeignete Verkappungsreagenzien sind dem Fachmann prinzipiell bekannt und umfassen Monocarbonsäuren, Monocarbonsäurechloride, Nitrile, ortho-Aminophenole, ortho-Aminothiole oder ortho-Diamine.

Bevorzugte Verkappungsreagenzien umfassen beispielsweise Benzoesäure, 4-Phenylbenzoesäure, Cyclohexancarbonsäure, Picolinsäure, Naphthoesäure, Essigsäure, Propionsäure, Benzoesäurechlorid, 4-Phenylbenzoesäurechlorid, Cyclohexancarbonsäurechlorid, Picolinsäurechlorid, Naphthoesäurechlorid, Essigsäure-chlorid, Propionsäurechlorid, Benzonitril, 4-Phenylbenzonitril, Cyanocyclohexan, Acetonitril, Propionitril, ortho-Aminophenol, ortho-Aminonaphthol, ortho-Aminothiophenol, ortho-Aminothionaphthol, ortho-Diaminophenol, oder ortho-Diaminonaphthol.

### Komponente (c)

Das Reaktionsgemisch (R_{G}) enthält mindestens eine ionische Flüssigkeit (IL) als Komponente (c).

Die Bezeichnungen "Komponente (c)" und "mindestens eine ionische Flüssigkeit (IL)" werden dabei nachfolgend synonym verwendet.

Die Bezeichnung "mindestens eine ionische Flüssigkeit (IL)" bezieht sich dabei auf genau eine ionische Flüssigkeit (IL) als auch auf Mischungen von zwei oder mehreren verschiedenen ionischen Flüssigkeiten (IL). Geeignete ionische Flüssigkeiten (IL) sind dem Fachmann prinzipiell bekannt.

Unter ionischen Flüssigkeiten werden im Sinne der vorliegenden Erfindung Verbindungen verstanden, die mindestens ein kationisches Zentrum und mindestens ein anionisches Zentrum aufweisen, insbesondere die mindestens ein Kation und mindestens ein Anion aufweisen, wobei mindestens eines der Ionen, insbesondere das Kation, organisch ist.

Ionische Flüssigkeiten sind nach der Definition von Wasserscheid und Keim in: Angewandte Chemie, 112, 3926 - 3945 (2000), bei relativ niedrigen Temperaturen schmelzende Salze mit nicht molekularem, ionischem Charakter. Sie sind bereits bei relativ niedrigen Temperaturen flüssig und dabei relativ niedrig viskos. Sie besitzen sehr gute Löslichkeiten für eine große Anzahl organischer, anorganischer und polymerer Substanzen. Darüber hinaus sind sie in der Regel nicht brennbar, nicht korrosiv und haben keinen messbaren Dampfdruck.

Ionische Flüssigkeiten sind Verbindungen, die aus positiven und negativen Ionen gebildet, jedoch insgesamt ladungsneutral sind. Die positiven wie auch die negativen Ionen sind überwiegend einwertig, möglich sind jedoch auch multivalente Anionen und/oder Kationen, beispielsweise mit einer bis fünf, bevorzugt mit einer bis vier, weiter bevorzugt mit einer bis drei und ganz besonders bevorzugt mit einer bis zwei elektrischen Ladungen pro Ion. Die Ladungen können sich an verschiedenen lokalisierten oder delokalisierten Bereichen innerhalb eines Moleküls befinden, also betainartig, oder auch wie ein getrenntes Anion und Kation verteilt sein. Bevorzugt sind solche ionischen Flüssigkeiten, die aus mindestens einem Kation und mindestens einem Anion aufgebaut sind.

Bekannte Einsatzgebiete für ionische Flüssigkeiten werden beispielsweise in DE 10202838, in WO 02/074718 oder in "Proceeding of Solar Forum, 2001, April 21 bis 25, Washington, D.C." beschrieben.

Bevorzugt weist die mindestens eine ionische Flüssigkeit (IL) einen möglichst niedrigen Schmelzpunkt auf. Der Schmelzpunkt der mindestens einen ionischen Flüssigkeit (IL) befindet sich bevorzugt unterhalb von 150°C, besonders bevorzugt unterhalb von 100°C und ganz besonders bevorzugt unterhalb von 80°C.

Die Bezeichnung "mindestens ein Kation" bezieht sich dabei auf genau ein Kation als auch auf gemischte Spezies aus zwei oder mehr Kationen, wie
[C¹]⁺[C²]⁺ 2 [A]⁻, [C¹]⁺[C²_{]}⁺ [A]²⁻, [C¹]⁺[C²]⁺[C³]⁺ [A]³⁻ oder [C¹]⁺[C²]⁺[C³]⁺[C⁴]⁺ [A]⁴⁻
wobei C¹, C², C³ und C⁴ unabhängig voneinander aus den für [C]ₙ⁺ genannten Gruppen ausgewählt sind.

Daneben können auch gemischte Spezies mit Metallkationen verwendet werden, wie
[C¹]⁺[C²]⁺[C³]+[M¹]+ [A]⁴⁻, [C¹]⁺[C²]⁺[M¹]⁺[M²]⁺ [A]⁴⁻,
[C¹]⁺[M¹]⁺[M²]⁺[M³]⁺ [A]⁴⁻, [C¹]⁺[C²]⁺[M¹]⁺ [A]³⁻, [C¹]⁺[M¹]⁺[M²]⁺ [A]³⁻,
[C¹]⁺[M¹]⁺ [A]²⁻, [C¹]⁺[M¹]⁺ 2 [A]⁻, [C¹]⁺[C²]⁺[M⁴]²⁺ [A]⁴⁻, [C¹]⁺[M¹]⁺[M⁴]²⁺ [A]⁴⁻,
[C¹]⁺[M⁵]³⁺ [A]⁴⁻, [C¹]⁺[M⁴]²⁺ [A]³⁻
wobei M¹, M², M³ einwertige Metallkationen, M⁴ zweiwertige Metallkationen und M⁵ dreiwertige Metallkationen darstellen.

Das Kation [C]ₙ⁺ ist vorzugsweise mindestens ein unsubstituiertes oder zumindest monosubstituiertes Kation ausgewählt aus der Gruppe bestehend aus
- Imidazolium-Kationen der allgemeinen Formel (IV) 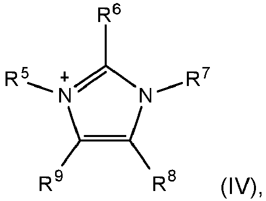 sowie alle, der obigen Formel analogen isomeren Imidazoliniumkationen und Imidazolidiniumkationen,
- quartären Ammonium-Kationen der allgemeinen Formel (V)

   [NR⁵R⁶R⁷R⁸]⁺ (V),
- quartären Phosphonium-Kationen der allgemeinen Formel (VI)

   [PR⁵R⁶R⁷R⁸]⁺ (VI),
- H-Pyrazolium-Kationen der allgemeinen Formel (VII) 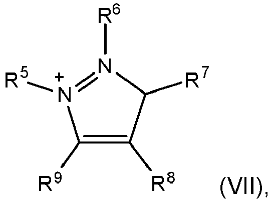 sowie 3H-Pyrazolium-Kationen, 4H-Pyrazolium-Kationen, 1-Pyrazolinium-Kationen, 2-Pyrazolinium-Kationen und 3-Pyrazolinium-Kationen,
- Pyridinium-Kationen der allgemeinen Formel (VIII) 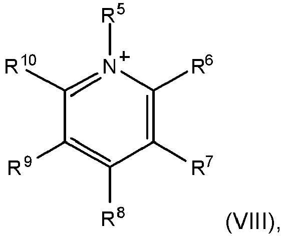 sowie Pyridazinium-, Pyrimidinium- und Pyraziniumionen,
- Pyrrolidinium-Kationen der allgemeinen Formel (IX) 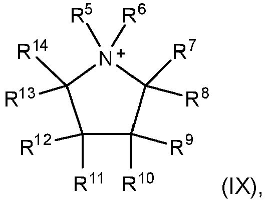
- Guanidinium-Kationen der allgemeinen Formel (X) 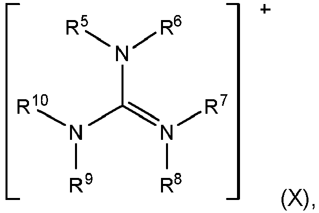
- fünf- bis sechsgliedrige heterocyclische Kationen, die mindestens ein Phosphor- oder Stickstoffatom sowie gegebenenfalls ein Sauerstoff- oder ein Schwefelatom aufweisen, wie beispielsweise Thiazolium-, Oxazolium, 1,2,4-Triazolium- oder 1,2,3-Triazolium-Kationen, besonders bevorzugt solche Verbindungen, die mindestens einen fünf- bis sechsgliedrigen Heterocyclus enthalten, der ein, zwei oder drei Stickstoffatome und ein Sauerstoff- oder ein Schwefelatom aufweist, ganz besonders bevorzugt solche mit ein oder zwei Stickstoffatomen,
- dem 1,8-Diazabicyclo[5.4.0]undec-7-enium-Kation sowie dem 1,8-Diazabicyclo[4.3.0]non-5-enium-Kation der allgemeinen Formel (XI) 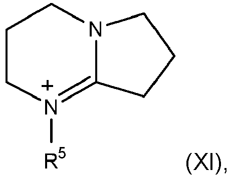 sowie Oligo- und Polymere, die diese Kationen enthalten,
   wobei R⁵, R⁶, R⁷, R⁸, R⁹, R¹⁰, R¹¹, R¹², R¹³ und R¹⁴ unabhängig voneinander ausgewählt sind aus der Gruppe bestehend aus -H, -C₁-C₁₈-Alkyl, -C₅-C₁₂-Cycloalkyl und -C₆-C₁₄-Aryl.

Dem Fachmann ist klar, dass es sich bei den allgemeinen Formeln (IV), (VII), (VIII) und (X) jeweils um eine mögliche mesomere Grenzstruktur des entsprechenden Kations handelt und die positive Ladung über mehrere mesomere Grenzstrukturen delokalisiert ist.

Für die Reste R⁵, R⁶, R⁷, R⁸, R⁹, R¹⁰, R¹¹, R¹², R¹³ und R¹⁴ in den allgemeinen Formeln (IV) bis (XI) bevorzugte C₁-C₁₈-Alkylgruppen umfassen lineare und verzweigte, gesättigte Alkylgruppen mit 1 bis 18 Kohlenstoffatomen, die gegebenenfalls durch ein oder mehrere Sauerstoff- und/oder Schwefelatome und/oder ein oder mehrere unsubstituierte oder zumindest monosubstituierte Iminogruppen unterbrochen sind, wobei die C₁-C₁₈-Alkylgruppen gegebenenfalls durch funktionelle Gruppen und/oder Halogengruppen substituiert sein können.

Die Anzahl der Sauerstoff- und/oder Schwefelatome und/oder Iminogruppen ist nicht beschränkt. In der Regel beträgt sie nicht mehr als 5 in dem Rest, bevorzugt nicht mehr als 4 und ganz besonders bevorzugt nicht mehr als 3. Weiterhin befindet sich zwischen zwei Heteroatomen in der Regel mindestens ein Kohlenstoffatom, bevorzugt mindestens zwei Kohlenstoffatome.

Unsubstituierte oder zumindest monosubstituierte Iminogruppen können beispielsweise Imino-, Methylimino-, Isopropylimino, n-Butylimino oder tert-Butylimino sein.

Bevorzugte funktionelle Gruppen umfassen beispielsweise Carboxy, Carboxamid, Hydroxy, Di-(C₁-C₄-alkyl)-amino, C₁-C₄-Alkyloxycarbonyl, Cyano oder C₁-C₄-Alkyloxy.

Bevorzugte C₁-C₁₈-Alkylgruppen umfassen beispielsweise C₁-C₄-Alkylgruppen wie Methyl, Ethyl, n-Propyl, Isopropyl, n-Butyl, sec-Butyl, tert-Butyl oder längerkettige Alkylgruppen wie n-Pentyl, n-Heptyl, n-Octyl, n-Nonyl, n-Decyl, n-Dodecyl, n-Tetradecyl, n-Hexadecyl oder n-Octadecyl sowie deren verzweigte Isomere.

Weiterhin bevorzugte C₁-C₁₈-Alkylgruppen, die durch funktionelle Gruppen und/oder Halogengruppen substituiert sind, umfassen beispielsweise 2-Cyanoethyl, 2-Cyano-propyl, 2-Methoxycarbonylethyl, 2-Ethoxycarbonylethyl, 2-Butoxycarbonylpropyl, 1,2-Di-(methoxycarbonyl)ethyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl, 6-Ethoxyhexyl, 2-Butoxyethyl, Diethoxymethyl, Diethoxyethyl, 2-Isopropoxyethyl, 2-Butoxypropyl, Chlormethyl, 2-Chlorethyl, Trichlormethyl, Trifluormethyl, 1,1-Dimethyl-2-chlorethyl, 2-Methoxyisopropyl, 2-Ethoxyethyl, 2,2,2-Trifluorethyl, 2-Hydroxyethyl, 2-Hydroxypropyl, 3-Hydroxypropyl, 4-Hydroxybutyl, 6-Hydroxyhexyl oder 2-Hydroxy-2,2-dimethylethyl.

Weiterhin bevorzugte C₁-C₁₈-Alkylgruppen, die durch ein oder mehrere Sauerstoff- und/oder Schwefelatome und/oder ein oder mehrere unsubstituierte oder zumindest monosubstituierte Iminogruppen unterbrochen sind, umfassen beispielsweise Butylthiomethyl, 2-Dodecylthioethyl, 2-Phenylthioethyl, 2-Aminoethyl, 2-Aminopropyl, 3-Aminopropyl, 4-Aminobutyl, 6-Aminohexyl, 2-Methylaminoethyl, 2-Methylamino-propyl, 3-Methylaminopropyl, 4-Methylaminobutyl, 6-Methylaminohexyl, 2-Dimethyl-aminoethyl, 2-Dimethylaminopropyl, 3-Dimethylaminopropyl, 4-Dimethylaminobutyl, 6-Dimethylaminohexyl, 5-Hydroxy-3-oxa-pentyl, 8-Hydroxy-3,6-dioxa-octyl, 11-Hydroxy-3,6,9-trioxa-undecyl, 7-Hydroxy-4-oxa-heptyl, 11-Hydroxy-4,8-dioxa-undecyl, 15-Hydroxy-4,8,12-trioxa-pentadecyl, 9-Hydroxy-5-oxa-nonyl, 14-Hydroxy-5,10-oxa-tetradecyl, 5-Methoxy-3-oxa-pentyl, 8-Methoxy-3,6-dioxa-octyl, 11-Methoxy-3,6,9-trioxa-undecyl, 7-Methoxy-4-oxa-heptyl, 11-Methoxy-4,8-dioxa-undecyl, 15-Methoxy-4,8,12-trioxa-pentadecyl, 9-Methoxy-5-oxa-nonyl, 14-Methoxy-5,10-oxa-tetradecyl, 5-Ethoxy-3-oxa-pentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxa-nonyl oder 14-Ethoxy-5,10-oxa-tetradecyl.

Für die Reste R⁵, R⁶, R⁷, R⁸, R⁹, R¹⁰, R¹¹, R¹², R¹³ und R¹⁴ in den allgemeinen Formeln (IV) bis (XI) bevorzugte C₅-C₁₂-Cycloalkylgruppen umfassen unsubstituierte oder zumindest monosubstituierte, gesättigte Cycloalkylgruppen mit 5 bis 12 Kohlenstoffatomen, die gegebenenfalls durch ein oder mehrere Sauerstoff- und/oder Schwefelatome und/oder ein oder mehrere unsubstituierte oder zumindest monosubstituierte Iminogruppen unterbrochen sind, wobei die C₅-C₁₂-Cycloalkylgruppen gegebenenfalls durch funktionelle Gruppen und/oder Halogengruppen substituiert sein können.

Bevorzugte C₅-C₁₂-Cycloalkylgruppen umfassen beispielsweise Cyclopentyl, Cyclohexyl, Cycloheptyl, Cyclooctyl, Cyclododecyl, Methylcyclopentyl, Dimethyl-cyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl, 1,3-Dioxolan-2-yl, 2-Methyl-1,3-dioxolan-2-yl, 4-Methyl-1,3-dioxolan-2-yl oder Norbornyl.

Für die Reste R⁵, R⁶, R⁷, R⁸, R⁹, R¹⁰, R¹¹, R¹², R¹³ und R¹⁴ in den allgemeinen Formeln (IV) bis (XI) bevorzugte C₆-C₁₄-Arylgruppen umfassen unsubstituierte oder zumindest monosubstituierte Arylgruppen mit 6 bis 14 Kohlenstoffatomen, wobei die C₆-C₁₄-Arylgruppen gegebenenfalls durch funktionelle Gruppen und/oder Halogengruppen substituiert sein können.

Bevorzugte C₆-C₁₄-Arylgruppen umfassen beispielsweise Phenyl, Tolyl, Xylyl, Benzyl, α-Naphthyl, 4-Diphenylyl, Chlorphenyl, Dichlorphenyl, Trichlorphenyl, Difluorphenyl, p-Chlorbenzyl, 2,4-Dichlorbenzyl, Methylphenyl, Dimethylphenyl, Trimethylphenyl, Ethylphenyl, Diethylphenyl, Isopropylphenyl, tert-Butylphenyl, 1-Phenylethyl, 2-Phenylethyl, α,α-Dimethylbenzyl, Benzhydryl, p-Tolylmethyl, 1-(p-Butylphenyl)ethyl, Dodecylphenyl, Methoxyphenyl, Dimethoxyphenyl, Ethoxyphenyl, Hexyloxyphenyl, p-Methoxybenzyl, m-Ethoxybenzyl, 2-Phenoxyethyl, 2-Phenoxypropyl, 3-Phenoxypropyl, 4-Phenoxybutyl, 6-Phenoxyhexyl, Methylnaphthyl, Isopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2-Nitrophenyl, 4-Nitrophenyl, 2,4-Dinitrophenyl, 2,6-Dinitrophenyl, 4-Dimethylaminophenyl, 4-Acetylphenyl, Methoxyethylphenyl oder Ethoxymethylphenyl.

Bevorzugt sind R⁵, R⁶, R⁷, R⁸, R⁹, R¹⁰, R¹¹, R¹², R¹³ und R¹⁴ unabhängig voneinander ausgewählt aus der Gruppe bestehend aus -H, Methyl, Ethyl, n-Propyl, Isopropyl, n-Butyl, tert-Butyl, n-Pentyl, n-Hexyl, 2-Hydroxyethyl, 2-Cyanoethyl, 2-(Methoxycarbonyl)ethyl, 2-(Ethoxycarbonyl)ethyl, 2-(n-Butoxy-carbonyl)ethyl, Benzyl, Acetyl, Dimethylamino, Diethylamino und Chlor.

Besonders bevorzugt enthält die mindestens eine ionische Flüssigkeit (IL) als Kation [C]ₙ⁺ mindestens ein Imidazolium-Kation der allgemeinen Formel (IV): 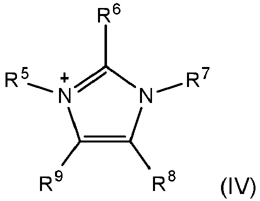 in der
- R⁵, R⁶, R⁷, R⁸, R⁹: unabhängig voneinander ausgewählt sind aus der Gruppe bestehend aus -H, linearem oder verzweigtem -C₁-C₁₈-Alkyl, -C₅-C₁₂-Cycloalkyl und -C₆-C₁₄-Aryl.

Ein weiterer Gegenstand der vorliegenden Anmeldung ist daher auch ein Verfahren, dadurch gekennzeichnet, dass die mindestens eine ionische Flüssigkeit (IL) als Kation [C]ₙ⁺ mindestens ein Imidazolium-Kation der allgemeinen Formel (IV) enthält: 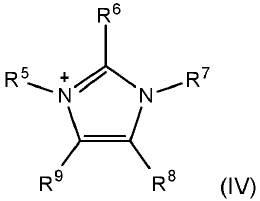 in der
- R⁵, R⁶, R⁷, R⁸, R⁹: unabhängig voneinander ausgewählt sind aus der Gruppe bestehend aus -H, linearem oder verzweigtem -C₁-C₁₈-Alkyl, -C₅-C₁₂-Cycloalkyl und -C₆-C₁₄-Aryl.

Bevorzugt ist das Kation [C]ₙ⁺ mindestens ein Kation ausgewählt aus der Gruppe bestehend aus 1-Methylimidazolium, 1-Methyl-2-ethylimidazolium, 1-Methyl-3-octylimidazolium, 1,2-Dimethylimidazolium, 1,3-Dimethylimidazolium, 2,3-Dimethyl-imidazolium, 3,4-Dimethylimidazolium, 1,2,3-Trimethylimidazolium, 1,3,4-Trimethyl-imidazolium, 1,3,4,5-Tetramethylimidazolium, 1-Ethylimidazolium, 1-Ethyl-2-methyl-imidazolium, 1-Ethyl-3-methylimidazolium, 1-Ethyl-2,3-dimethylimidazolium, 2-Ethyl-3,4-dimethylimidazolium, 1-Propylimidazolium, 1-Propyl-2-methylimidazolium, 1-Propyl-3-methylimidazolium, 1-Propyl-2,3-dimethylimidazolium, 1,3-Dipropyl-imidazolium, 1-Butylimidazolium, 1-Butyl-2-methylimidazolium, 1-Butyl-3-methyl-imidazolium, 1-Butyl-4-methylimidazolium, 1-Butyl-2,3-dimethylimidazolium, 1-Butyl-3,4-dimethylimidazo-lium, 1-Butyl-3,4,5-trimethylimidazolium, 1-Butyl-2-ethyl-imidazolium, 1-Butyl-3-ethylimidazolium, 1-Butyl-2-ethyl-5-methylimidazolium, 1,3-Di-butylimidazolium, 1,3-Dibutyl-2-methylimidazolium, 1-Pentylimidazolium, 1-Pentyl-2-methylimidazolium, 1-Pentyl-3-methylimidazolium, 1-Pentyl-2,3-dimethylimidazolium, 1-Hexylimidazolium, 1-Hexyl-2-methylimidazolium, 1-Hexyl-3-methylimidazolium, 1-Hexyl-2,3-dimethyl-imidazolium, 1-Octyl-2-methylimidazolium, 1-Octyl-3-methylimidazolium, 1-Decyl-3-methylimidazolium, 1-Dodecyl-3-methylimidazolium, 1-Tetradecyl-3-methylimidazolium, 1-Hexadecyl-3-methylimidazolium und 1-Benzyl-3-methyl imidazolium.

Ein weiterer Gegenstand der vorliegenden Anmeldung ist daher auch ein Verfahren, dadurch gekennzeichnet, dass das Kation [C]ₙ⁺ mindestens ein Kation ist, ausgewählt aus der Gruppe bestehend aus 1-Methylimidazolium, 1-Methyl-2-ethylimidazolium, 1-Methyl-3-octylimidazolium, 1,2-Dimethylimidazolium, 1,3-Dimethylimidazolium, 2,3-Dimethylimidazolium, 3,4-Dimethylimidazolium, 1,2,3-Trimethylimidazolium, 1,3,4-Tri-methylimidazolium, 1,3,4,5-Tetramethylimidazolium, 1-Ethylimidazolium, 1-Ethyl-2-methylimidazolium, 1-Ethyl-3-methylimidazolium, 1-Ethyl-2,3-dimethylimidazolium, 2-Ethyl-3,4-dimethylimidazolium, 1-Propylimidazolium, 1-Propyl-2-methylimidazolium, 1-Propyl-3-methylimidazolium, 1-Propyl-2,3-dimethylimidazolium, 1,3-Dipropyl-imidazo-lium, 1-Butylimidazolium, 1-Butyl-2-methylimidazolium, 1-Butyl-3-methyl-imidazolium, 1-Butyl-4-methylimidazolium, 1-Butyl-2,3-dimethylimidazolium, 1-Butyl-3,4-dimethyl-imidazolium, 1-Butyl-3,4,5-trimethylimidazolium, 1-Butyl-2-ethylimidazolium, 1-Butyl-3-ethylimidazolium, 1-Butyl-2-ethyl-5-methylimidazolium, 1,3-Dibutylimidazolium, 1,3-Di-butyl-2-methylimidazolium, 1-Pentylimidazolium, 1-Pentyl-2-methylimidazolium, 1-Pentyl-3-methylimidazolium, 1-Pentyl-2,3-dimethylimidazolium, 1-Hexylimidazolium, 1-Hexyl-2-methylimidazolium, 1-Hexyl-3-methylimidazolium, 1-Hexyl-2,3-dimethylimida-zolium, 1-Octyl-2-methylimidazolium, 1-Octyl-3-methylimidazolium, 1-Decyl-3-methyl-imidazolium, 1-Dodecyl-3-methylimidazolium, 1-Tetradecyl-3-methylimidazolium, 1-Hexadecyl-3-methylimidazolium und 1-Benzyl-3-methylimidazolium

Besonders bevorzugt ist das Kation [C] ₙ⁺ mindestens ein Kation ausgewählt aus der Gruppe bestehend aus 1-Methylimidazolium, 1,2-Dimethylimidazolium, 1,2,3-Tri-methylimidazolium, 1-Methyl-2-ethylimidazolium, 1-Ethylimidazolium, 1-Ethyl-2-methylimidazolium, 1-Ethyl-2,3-dimethylimidazolium, 1-Ethyl-3-methylimidazolium, 1,3-Diethylimidazolium, 1-Propylimidazolium, 1-Propyl-3-methylimidazolium, 1-Butyl-imidazolium, 1-Butyl-2-methylimidazolium, 1-Butyl-3-methylimidazolium, 1-Butyl-2,3-dimethylimidazolium, 1,3-Dibutylimidazolium, 1-Pentylimidazolium, 1-Pentyl-2-methylimidazolium, 1-Pentyl-3-methylimidazolium, 1-Pentyl-2,3-dimethylimidazolium, 1-Hexylimidazolium, 1-Hexyl-2-methylimidazolium, 1-Hexyl-3-methylimidazolium, 1-Hexyl-2,3-dimethylimidazolium, 1-Octyl-3-methylimidazolium, 1-Decyl-3-methylimidazolium, 1-Dodecyl-3-methylimidazolium und 1-Benzyl-3-methylimidazolium.

Ganz besonders bevorzugt ist das Kation [C] ₙ⁺ mindestens ein Kation ausgewählt aus der Gruppe bestehend aus 1-Methylimidazolium, 1,2-Dimethylimidazolium, 1,2,3-Trimethylimidazolium, 1-Ethylimidazolium, 1-Ethyl-2-methylimidazolium, 1-Ethyl-2,3-dimethylimidazolium, 1-Ethyl-3-methylimidazolium, 1,3-Diethylimidazolium, 1-Butyl-imidazolium, 1-Butyl-2-methylimidazolium, 1-Butyl-3-methylimidazolium und 1-Butyl-2,3-dimethylimidazolium, 1,3-Dibutylimidazolium.

Als Anionen sind prinzipiell alle Anionen einsetzbar.

Das Anion [A]ⁿ⁻ ist bevorzugt ausgewählt aus der Gruppe bestehend aus
- der Gruppe der halogenhaltigen Anionen:
   F⁻, Cl⁻, Br, I⁻,BCl₄⁻, PF₆⁻, ASF₆⁻, SbF₆-, AlCl₄⁻, Al₂Cl₇⁻, AlBr₄⁻, Al₂Br₇⁻, ZnCl₃⁻, SnCl₃⁻, FeCl₄⁻,
- der Gruppe bestehend aus Cyanid, Thiocyanat, Cyanat und Isocyanat:
   CN⁻, SCN⁻, OCN⁻, NCO⁻,
- der Gruppe bestehend aus Nitrit und Nitrat:
   NO₂⁻, NO₃⁻
- der Gruppe der Sulfate, Sulfite oder der Sulfonate der allgemeinen Formeln:
   SO₄²⁻, HSO₄⁻, SO₃²⁻, HSO₃⁻, R^{a}OSO₃⁻, R^{a}SO₃⁻,
- der Gruppe der Carboxylate der allgemeinen Formel:
   R^{a}COO⁻,
- der Gruppe der Borate der allgemeinen Formeln:
   BO₃³⁻, HBO₃²⁻, H₂BO₃⁻, R^{a}R^{b}BO₃⁻, R^{a}HBO₃⁻, R^{a}BO₃²⁻,
- der Gruppe der Boronate der allgemeinen Formeln:
   R^{a}BO₂²⁻, R^{a}R^{b}BO⁻,
- der Gruppe der Carbonate oder der Kohlensäureester der allgemeinen Formeln:
   HCO₃⁻, CO₃²⁻, R^{a}CO₃⁻,
- der Gruppe der Amide der allgemeinen Formeln:
   H₂N⁻, R^{a}NH⁻, R^{a}R^{b}N⁻,
- der Gruppe der Carbonsäureimidate, Bis(sulfonyl)imidate oder der Sulfonylimidate der allgemeinen Formeln: 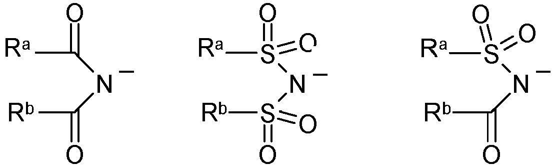
- der Gruppe der Alkoxide oder der Aryloxide der allgemeinen Formel:
   RaO⁻,
wobei R^{a} und R^{b} unabhängig voneinander ausgewählt sind aus der Gruppe bestehend aus -H, -C₁-C₁₈-Alkyl, -C₅-C₁₂-Cycloalkyl und -C₆-C₁₄-Aryl.

Für die Reste R^{a} und R^{b} bevorzugte C₁-C₁₈-Alkylgruppen umfassen lineare und verzweigte, gesättigte Alkylgruppen mit 1 bis 18 Kohlenstoffatomen, die gegebenenfalls durch ein oder mehrere Sauerstoff- und/oder Schwefelatome und/oder ein oder mehrere unsubstituierte oder zumindest monosubstituierte Iminogruppen unterbrochen sind, wobei die C₁-C₁₈-Alkylgruppen gegebenenfalls durch funktionelle Gruppen und/oder Halogengruppen substituiert sein können.

Die Anzahl der Sauerstoff- und/oder Schwefelatome und/oder Iminogruppen ist nicht beschränkt. In der Regel beträgt sie nicht mehr als 5 in dem Rest, bevorzugt nicht mehr als 4 und ganz besonders bevorzugt nicht mehr als 3. Weiterhin befindet sich zwischen zwei Heteroatomen in der Regel mindestens ein Kohlenstoffatom, bevorzugt mindestens zwei Kohlenstoffatome.

Unsubstituierte oder zumindest monosubstituierte Iminogruppen können beispielsweise Imino-, Methylimino-, Isopropylimino, n-Butylimino oder tert-Butylimino sein.

Bevorzugte funktionelle Gruppen umfassen beispielsweise Carboxy, Carboxamid, Hydroxy, Di-(C₁-C₄-alkyl)-amino, C₁-C₄-Alkyloxycarbonyl, Cyano oder C₁-C₄-Alkyloxy.

Bevorzugte C₁-C₁₈-Alkylgruppen umfassen beispielsweise C₁-C₄-Alkylgruppen wie Methyl, Ethyl, n-Propyl, Isopropyl, n-Butyl, sec-Butyl, tert-Butyl oder längerkettige Alkylgruppen wie n-Pentyl, n-Heptyl, n-Octyl, n-Nonyl, n-Decyl, n-Dodecyl, n-Tetradecyl, n-Hexadecyl oder n-Octadecyl sowie deren verzweigte Isomere.

Weiterhin bevorzugte C₁-C₁₈-Alkylgruppen, die durch funktionelle Gruppen und/oder Halogengruppen substituiert sind, umfassen beispielsweise 2-Cyanoethyl, 2-Cyano-propyl, 2-Methoxycarbonylethyl, 2-Ethoxycarbonylethyl, 2-Butoxycarbonylpropyl, 1,2-Di-(methoxycarbonyl)ethyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl, 6-Ethoxyhexyl, 2-Butoxyethyl, Diethoxymethyl, Diethoxyethyl, 2-Isopropoxyethyl, 2-Butoxypropyl, Chlormethyl, 2-Chlorethyl, Trichlormethyl, Trifluormethyl, 1,1-Dimethyl-2-chlorethyl, 2-Methoxyisopropyl, 2-Ethoxyethyl, 2,2,2-Trifluorethyl, 2-Hydroxyethyl, 2-Hydroxypropyl, 3-Hydroxypropyl, 4-Hydroxybutyl, 6-Hydroxyhexyl oder 2-Hydroxy-2,2-dimethylethyl.

Weiterhin bevorzugte C₁-C₁₈-Alkylgruppen, die durch ein oder mehrere Sauerstoff- und/oder Schwefelatome und/oder ein oder mehrere unsubstituierte oder zumindest monosubstituierte Iminogruppen unterbrochen sind, umfassen beispielsweise Butylthiomethyl, 2-Dodecylthioethyl, 2-Phenylthioethyl, 2-Aminoethyl, 2-Aminopropyl, 3-Aminopropyl, 4-Aminobutyl, 6-Aminohexyl, 2-Methylaminoethyl, 2-Methylamino-propyl, 3-Methylaminopropyl, 4-Methylaminobutyl, 6-Methylaminohexyl, 2-Dimethyl-aminoethyl, 2-Dimethylaminopropyl, 3-Dimethylaminopropyl, 4-Dimethylaminobutyl, 6-Dimethylaminohexyl, 5-Hydroxy-3-oxa-pentyl, 8-Hydroxy-3,6-dioxa-octyl, 11-Hydroxy-3,6,9-trioxa-undecyl, 7-Hydroxy-4-oxa-heptyl, 11-Hydroxy-4,8-dioxa-undecyl, 15-Hydroxy-4,8,12-trioxa-pentadecyl, 9-Hydroxy-5-oxa-nonyl, 14-Hydroxy-5,10-oxa-tetradecyl, 5-Methoxy-3-oxa-pentyl, 8-Methoxy-3,6-dioxa-octyl, 11-Methoxy-3,6,9-trioxa-undecyl, 7-Methoxy-4-oxa-heptyl, 11-Methoxy-4,8-dioxa-undecyl, 15-Methoxy-4,8,12-trioxa-pentadecyl, 9-Methoxy-5-oxa-nonyl, 14-Methoxy-5,10-oxa-tetradecyl, 5-Ethoxy-3-oxa-pentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxa-nonyl oder 14-Ethoxy-5,10-oxa-tetradecyl.

Für die Reste R^{a} und R^{b} bevorzugte C₅-C₁₂-Cycloalkylgruppen umfassen unsubstituierte oder zumindest monosubstituierte, gesättigte Cycloalkylgruppen mit 5 bis 12 Kohlenstoffatomen, die gegebenenfalls durch ein oder mehrere Sauerstoff- und/oder Schwefelatome und/oder ein oder mehrere unsubstituierte oder zumindest monosubstituierte Iminogruppen unterbrochen sind, wobei die C₅-C₁₂-Cycloalkylgruppen gegebenenfalls durch funktionelle Gruppen und/oder Halogengruppen substituiert sein können.

Bevorzugte C₅-C₁₂-Cycloalkylgruppen umfassen beispielsweise Cyclopentyl, Cyclohexyl, Cycloheptyl, Cyclooctyl, Cyclododecyl, Methylcyclopentyl, Dimethyl-cyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl, 1,3-Dioxolan-2-yl, 2-Methyl-1,3-dioxolan-2-yl, 4-Methyl-1,3-dioxolan-2-yl oder Norbornyl.

Für die Reste R^{a} und R^{b} bevorzugte C₆-C₁₄-Arylgruppen umfassen unsubstituierte oder zumindest monosubstituierte Arylgruppen mit 6 bis 14 Kohlenstoffatomen, wobei die C₆-C₁₄-Arylgruppen gegebenenfalls durch funktionelle Gruppen und/oder Halogengruppen substituiert sein können.

Bevorzugte C₆-C₁₄-Arylgruppen umfassen beispielsweise Phenyl, Tolyl, Xylyl, Benzyl, α-Naphthyl, 4-Diphenylyl, Chlorphenyl, Dichlorphenyl, Trichlorphenyl, Difluorphenyl, p-Chlorbenzyl, 2,4-Dichlorbenzyl, Methylphenyl, Dimethylphenyl, Trimethylphenyl, Ethylphenyl, Diethylphenyl, Isopropylphenyl, tert-Butylphenyl, 1-Phenylethyl, 2-Phenylethyl, α,α-Dimethylbenzyl, Benzhydryl, p-Tolylmethyl, 1-(p-Butylphenyl)ethyl, Dodecylphenyl, Methoxyphenyl, Dimethoxyphenyl, Ethoxyphenyl, Hexyloxyphenyl, p-Methoxybenzyl, m-Ethoxybenzyl, 2-Phenoxyethyl, 2-Phenoxypropyl, 3-Phenoxypropyl, 4-Phenoxybutyl, 6-Phenoxyhexyl, Methylnaphthyl, Isopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2-Nitrophenyl, 4-Nitrophenyl, 2,4-Dinitrophenyl, 2,6-Dinitrophenyl, 4-Dimethylaminophenyl, 4-Acetylphenyl, Methoxyethylphenyl oder Ethoxymethylphenyl.

Bevorzugt sind R^{a} und R^{b} unabhängig voneinander ausgewählt aus der Gruppe bestehend aus -H, Methyl, Ethyl, n-Propyl, Isopropyl, n-Butyl, tert-Butyl, n-Pentyl, n-Hexyl, 2-Hydroxyethyl, 2-Cyanoethyl, 2-(Methoxycarbonyl)ethyl, 2-(Ethoxycarbonyl)ethyl, 2-(n-Butoxycarbonyl)ethyl, Benzyl, Acetyl, Dimethylamino, Diethylamino und Chlor.

Bevorzugt ist das Anion [A]ⁿ⁻ ausgewählt aus der Gruppe bestehend aus Fluorid, Chlorid, Bromid, lodid, Tetrafluoroborat, Hexafluorophosphat, Tetrachloroaluminat, Heptachlorodialuminat, Tetrabromoaluminat, Heptabromodialuminat, Trichlorozinkat, Thiocyanat, Nitrit, Nitrat, Sulfat, Hydrogensulfat, Methylsulfat, Ethylsulfat, Sulfit, Hydrogensulfit, Methansulfonat, Trifluormethansulfonat, Ethansulfonat, Tosylat, Decylbenzolsulfonat, Didecylbenzolsulfonat, Dodecylbenzolsulfonat, Didodecyl-benzolsulfonat, bis(Trifluoromethansulfonyl)methan, Acetat, Trifluoroacetat, Borat, Tetracyanoborat, bis(Oxalato)borat, bis(Malonato)borat, bis(Phtalato)borat, bis(Salicylato)borat, tetrakis-(Hydrogensulfato)borat, tetrakis(Methylsulfonato)borat, Carbonat, Methylcarbonat, Hydrogencarbonat, Dicyanamid, bis(Trifluoromethyl)imidat und bis(Trifluoromethansulfonyl)imidat.

Besonders bevorzugt ist das Anion [A]ⁿ⁻ ausgewählt aus der Gruppe bestehend aus Chlorid, Tetrachloroaluminat, Heptachlorodialuminat, Trichlorozinkat, Sulfat, Hydrogensulfat, Methylsulfat, Ethylsulfat, Methansulfonat, Trifluormethansulfonat, Ethansulfonat, Tosylat, Decylbenzolsulfonat, Didecylbenzolsulfonat, Dodecyl-benzolsulfonat, Didodecylbenzolsulfonat, Acetat, Carbonat, Methylcarbonat und Hydrogencarbonat.

Ganz besonders bevorzugt ist das Anion [A]ⁿ⁻ ausgewählt aus der Gruppe bestehend aus Chlorid, Tetrachloroaluminat, Sulfat, Hydrogensulfat, Methylsulfat, Ethylsulfat, Methansulfonat, Trifluormethansulfonat, Tosylat, Acetat, Methylcarbonat und Hydrogencarbonat.

Bevorzugt ist die mindestens eine ionische Flüssigkeit (IL) ausgewählt aus der Gruppe bestehend aus 1-Methylimidazoliumchlorid, 1,2-Dimethylimidazoliumchlorid, 1,3-Dimethylimidazoliumchlorid, 1,2,3-Trimethylimidazoliumchlorid, 1-Ethylimidazoliumchlorid, 1-Ethyl-2-methylimidazoliumchlorid, 1-Ethyl-3-methylimidazoliumchlorid, 1-Ethyl-2,3-dimethylimidazoliumchlorid, 1,3-Diethylimidazoliumchlorid, 1-Butylimidazoliumchlorid, 1-Butyl-2-methylimidazoliumchlorid, 1-Butyl-3-methylimidazoliumchlorid, 1-Butyl-2,3-dimethylimidazoliumchlorid, 1,3-Dibutylimidazoliumchlorid, 1-Methylimidazoliumtetrachloroaluminat, 1,2-Dimethylimidazoliumtetrachloroaluminat, 1,3-Dimethylimidazoliumtetrachloroaluminat, 1,2,3-Trimethylimidazoliumtetrachloroaluminat, 1-Ethyltetrachloroaluminat, 1-Ethyl-2-methyltetrachloroaluminat, 1-Ethyl-3-methylimidazoliumtetrachloroaluminat, 1-Ethyl-2,3-dimethylimidazoliumtetrachloroaluminat, 1,3-Diethylimidazoliumtetrachloroaluminat, 1-Butylimidazoliumtetrachloroaluminat, 1-Butyl-2-methylimidazoliumtetrachloroaluminat, 1-Butyl-3-methylimidazoliumtetrachloroaluminat, 1-Butyl-2,3-dimethylimidazoliumtetrachloroaluminat, 1,3-Dibutylimidazoliumtetrachloroaluminat, 1-Methylimidazoliumsulfat, 1,2-Dimethylimidazoliumsulfat, 1,3-Dimethylimidazoliumsulfat, 1,2,3-Trimethylimidazoliumsulfat, 1-Ethylimidazoliumsulfat, 1-Ethyl-2-methylimidazoliumsulfat, 1-Ethyl-3-methylimidazoliumsulfat, 1-Ethyl-2,3-dimethylimidazoliumsulfat, 1,3-Diethylimidazoliumsulfat, 1-Butylimidazoliumsulfat, 1-Butyl-2-methylimidazoliumsulfat, 1-Butyl-3-methylimidazoliumsulfat, 1-Butyl-2,3-dimethylimidazoliumsulfat, 1,3-Dibutylimidazoliumsulfat, 1-Methylimidazoliumhydrogensulfat, 1,2-Dimethylimidazoliumhydrogensulfat, 1,3-Dimethylimidazoliumhydrogensulfat, 1,2,3-Trimethylimidazoliumhydrogensulfat, 1-Ethylimidazoliumhydrogensulfat, 1-Ethyl-2-methylimidazoliumhydrogensulfat, 1-Ethyl-3-methylimidazoliumhydrogensulfat, 1-Ethyl-2,3-dimethylimidazoliumhydrogensulfat, 1,3-Diethylimidazoliumhydrogensulfat, 1-Butylimidazoliumhydrogensulfat, 1-Butyl-2-methylimidazoliumhydrogensulfat, 1-Butyl-3-methylimidazoliumhydrogensulfat, 1-Butyl-2,3-dimethylimidazoliumhydrogensulfat, 1,3-Dibutylimidazoliumhydrogensulfat, 1-Methylimidazoliummethyl-sulfat, 1,2-Dimethylimidazoliummethylsulfat, 1,3-Dimethylimidazoliummethylsulfat, 1,2,3-Trimethylimidazoliummethylsulfat, 1-Ethylimidazoliummethylsulfat, 1-Ethyl-2-methylimidazoliummethylsulfat, 1-Ethyl-3-methylimidazoliummethylsulfat, 1-Ethyl-2,3-dimethylimidazoliummethylsulfat, 1,3-Diethylimidazoliummethylsulfat, 1-Butylimidazoliummethylsulfat, 1-Butyl-2-methylimida-zoliummethylsulfat, 1-Butyl-3-methylimidazoliummethylsulfat, 1-Butyl-2,3-dimethyl-imidazoliummethylsulfat, 1,3-Dibutylimidazoliummethylsulfat, 1-Methylimidazolium-ethylsulfat, 1,2-Dimethylimidazoliumethylsulfat, 1,3-Dimethylimidazoliumethylsulfat, 1,2,3-Trimethylimidazoliumethylsulfat, 1-Ethylimidazoliumethylsulfat, 1-Ethyl-2-methylimidazolium-ethylsulfat, 1-Ethyl-3-methylimidazoliumethylsulfat, 1-Ethyl-2,3-dimethylimidazoliumethylsulfat, 1,3-Diethylimidazoliumethylsulfat, 1-Butylimidazoliumethylsulfat, 1-Butyl-2-methylimidazoliumethylsulfat, 1-Butyl-3-methylimidazoliumethylsulfat, 1-Butyl-2,3-dimethylimidazoliumethylsulfat, 1,3-Dibutylimidazoliumethylsulfat, 1-Methylimidazoliummethansulfonat, 1,2-Dimethylimidazoliummethansulfonat, 1,3-Dimethylimidazoliummethansulfonat, 1,2,3-Trimethylimidazoliummethansulfonat, 1-Ethylimidazoliummethansulfonat, 1-Ethyl-2-methylimidazoliummethansulfonat, 1-Ethyl-3-methylimidazoliummethansulfonat, 1-Ethyl-2,3-dimethylimidazoliummethansulfonat, 1,3-Diethylimidazoliummethansulfonat, 1-Butylimidazoliummethansulfonat, 1-Butyl-2-methylimidazoliummethansulfonat, 1-Butyl-3-methylimidazoliummethansulfonat, 1-Butyl-2,3-dimethylimidazoliummethansulfonat, 1,3-Dibutylimidazoliummethansulfonat, 1-Methylimidazoliumtrifluormethansulfonat, 1,2-Dimethylimidazoliumtrifluormethansulfonat, 1,3-Dimethylimidazoliumtrifluormethan-sulfonat, 1,3-Dimethylimidazoliumtrifluormethansulfonat, 1,2,3-Trimethylimidazoliumtrifluormethansulfonat, 1-Ethylimidazoliumtrifluormethansulfonat, 1-Ethyl-2-methylimidazoliumtrifluormethansulfonat, 1-Ethyl-3-methylimidazoliumtrifluormethansulfonat, 1-Ethyl-2,3-dimethylimidazoliumtrifluormethansulfonat, 1,3-Diethylimidazoliumtrifluormethansulfonat, 1-Butylimidazoliumtrifluormethansulfonat, 1-Butyl-2-methylimidazoliumtrifluormethansulfonat, 1-Butyl-3-methylimidazoliumtrifluormethansulfonat, 1-Butyl-2,3-dimethylimidazoliumtrifluormethansulfonat, 1,3-Dibutylimidazoliumtrifluormethansulfonat, 1-Methylimidazoliumtosylat, 1,2-Dimethylimidazoliumtosylat, 1,3-Dimethylimidazoliumtosylat, 1,2,3-Trimethylimidazoliumtosylat, 1-Ethylimidazoliumtosylat, 1-Ethyl-2-methylimidazoliumtosylat, 1-Ethyl-3-methylimidazoliumtosylat, 1-Ethyl-2,3-dimethylimidazoliumtosylat, 1,3-Diethylimidazoliumtosylat, 1-Butylimida-zoliumtosylat, 1-Butyl-2-methylimidazoliumtosylat, 1-Butyl-3-methylimidazoliumtosylat, 1-Butyl-2,3-dimethylimidazoliumtosylat, 1,3-Dibutylimidazoliumtosylat, 1-Methylimida-zoliumacetat, 1,2-Dimethylimidazoliumacetat, 1,3-Dimethylimidazoliumacetat, 1,2,3-Trimethylimidazoliumacetat, 1-Ethylimidazoliumacetat, 1-Ethyl-2-methylimidazoliumacetat, 1-Ethyl-3-methylimidazoliumacetat, 1-Ethyl-2,3-dimethylimidazoliumacetat, 1,3-Diethylimidazoliumacetat, 1-Butylimidazoliumacetat, 1-Butyl-2-methylimidazoliumacetat, 1-Butyl-3-methylimidazoliumacetat, 1-Butyl-2,3-dimethylimidazoliumacetat, 1,3-Dibutylimidazoliumacetat, 1-Methylimidazoliummethylcarbonat, 1,2-Dimethylimidazoliummethylcarbonat, 1,3-Dimethylimidazoliummethylcarbonat, 1,2,3-Trimethylimidazoliummethylcarbonat, 1-Ethylimidazoliummethylcarbonat, 1-Ethyl-2-methylimidazoliummethylcarbonat, 1-Ethyl-3-methylimidazoliummethylcarbonat, 1-Ethyl-2,3-dimethylimidazoliummethylcarbonat, 1,3-Diethylimidazoliummethylcarbonat, 1-Butylimidazoliummethylcarbonat, 1-Butyl-2-methylimidazoliumcarbonat, 1-Butyl-3-methylimidazoliummethylcarbonat, 1-Butyl-2,3-dimethylimidazoliummethylcarbonat, 1,3-Dibutylimidazoliummethylcarbonat, 1-Methylimidazoliumhydrogencarbonat, 1,2-Dimethylimidazoliumhydrogencarbonat, 1,3-Dimethylimidazoliumhydrogencarbonat, 1,2,3-Trimethylimidazoliumhydrogencarbonat, 1-Ethylimidazoliumhydrogencarbonat, 1-Ethyl-2-methylimidazoliumhydrogencarbonat, 1-Ethyl-3-methylimidazoliumhydrogencarbonat, 1-Ethyl-2,3-dimethylimidazoliumhydrogencarbonat, 1,3-Diethylimidazoliumhydrogencarbonat, 1-Butylimidazoliumhydrogencarbonat, 1-Butyl-2-methylimidazoliumhydrogencarbonat, 1-Butyl-3-methylimidazoliumhydrogencarbonat, 1-Butyl-2,3-dimethylimidazoliumhydrogencarbonat und 1,3-Dibutylimidazoliumhydrogencarbonat.

Besonders bevorzugt ist die mindestens eine ionische Flüssigkeit (IL) ausgewählt aus der Gruppe bestehend aus 1-Methylimidazoliumchlorid, 1,3-Dimethylimidazoliumchlorid, 1-Ethylimidazoliumchlorid, 1-Ethyl-3-methylimidazoliumchlorid, 1-Ethyl-2,3-dimethylimidazoliumchlorid, 1,3-Diethylimidazoliumchlorid, 1-Butylimidazoliumchlorid, 1-Butyl-3-methylimidazoliumchlorid, 1-Butyl-2,3-dimethylimidazoliumchlorid, 1,3-Dibutylimidazoliumchlorid, 1-Methylimidazoliumtetrachloroaluminat, 1,3-Dimethylimidazoliumtetrachloroaluminat, 1-Ethylimidazoliumtetrachloroaluminat, 1-Ethyl-3-methylimidazoliumtetrachloroaluminat, 1-Ethyl-2,3-dimethylimidazoliumtetrachloroaluminat, 1,3-Diethylimidazoliumtetrachloroaluminat, 1-Butylimidazoliumtetrachloroaluminat, 1-Butyl-3-methylimidazoliumtetrachloroaluminat, 1-Butyl-2,3-dimethylimidazoliumtetrachloroaluminat, 1,3-Dibutylimidazoliumtetrachloroaluminat, 1-Methylimidazoliumhydrogensulfat, 1,3-Dimethylimidazoliumhydrogensulfat, 1-Ethylimidazoliumhydrogensulfat, 1-Ethyl-3-methylimidazoliumhydrogensulfat, 1-Ethyl-2,3-dimethylimidazoliumhydrogensulfat, 1,3-Diethylimidazoliumhydrogensulfat, 1-Butylimidazoliumhydrogensulfat, 1-Butyl-3-methylimidazoliumhydrogensulfat, 1-Butyl-2,3-dimethylimidazoliumhydrogensulfat, 1,3-Dibutylimidazoliumhydrogensulfat, 1-Methylimidazoliummethansulfonat, 1,3-Dimethylimidazoliummethansulfonat, 1-Ethylimidazoliummethansulfonat, 1-Ethyl-3-methylimidazoliummethansulfonat, 1-Ethyl-2,3-dimethylimidazoliummethansulfonat, 1,3-Diethylimidazoliummethansulfonat, 1-Butylimidazoliummethansulfonat, 1-Butyl-3-methylimidazoliummethansulfonat, 1-Butyl-2,3-dimethylimidazoliummethansulfonat, 1,3-Dibutylimidazoliummethansulfonat, 1-Methylimidazoliumacetat, 1,3-Dimethylimidazoliumacetat, 1-Ethylimidazoliumacetat, 1-Ethyl-3-methylimidazoliumacetat, 1-Ethyl-2,3-dimethylimidazoliumacetat, 1,3-Diethylimidazoliumacetat, 1-Butylimidazoliumacetat, 1-Butyl-3-methylimidazoliumacetat, 1-Butyl-2,3-dimethylimidazoliumacetat, 1,3-Dibutylimidazoliumacetat, 1,3-Dimethylimidazoliummethylcarbonat, 1-Ethyl-3-methylimidazoliummethylcarbonat, 1-Ethyl-2,3-dimethylimidazoliumacetat, 1-Butyl-3-methylimidazoliummethylcarbonat und 1-Butyl-2,3-dimethylimidazoliummethylcarbonat.

Ganz besonders bevorzugt ist die mindestens eine ionische Flüssigkeit (IL) ausgewählt aus der Gruppe bestehend aus 1-Methylimidazoliumchlorid, 1-Ethylimidazoliumchlorid, 1-Ethyl-3-methylimidazoliumchlorid, 1-Butylimidazoliumchlorid, 1-Butyl-3-methylimidazoliumchlorid, 1,3-Dibutylimidazoliumchlorid, 1-Methylimidazoliumtetrachloroaluminat, 1-Ethylimidazoliumtetrachloroaluminat, 1-Ethyl-3-methylimidazoliumtetrachloroaluminat, 1,3-Diethylimidazoliumtetrachloroaluminat, 1-Butylimidazoliumtetrachloroaluminat, 1-Butyl-3-methylimidazoliumtetrachloroaluminat, 1,3-Dibutylimidazoliumtetrachloroaluminat, 1-Methylimidazoliumhydrogensulfat, 1-Ethylimidazoliumhydrogensulfat, 1-Butylimidazoliumhydrogensulfat, 1-Butyl-3-methylimidazoliumhydrogensulfat, 1-Methylimidazoliummethansulfonat, 1,3-Dimethylimidazoliummethansulfonat, 1-Ethylimidazoliummethansulfonat, 1-Ethyl-3-methylimidazoliummethansulfonat, 1,3-Diethylimidazoliummethansulfonat, 1-Butylimidazoliummethansulfonat, 1-Butyl-3-methylimidazoliummethansulfonat, 1,3-Dibutylimidazoliummethansulfonat, 1-Methylimidazoliumacetat, 1,3-Dimethylimidazoliumacetat, 1-Ethylimidazoliumacetat, 1-Ethyl-3-methylimidazoliumacetat, 1,3-Diethylimidazoliumacetat, 1-Butylimidazoliumacetat, 1-Butyl-3-methylimidazoliumacetat, 1,3-Dibutylimidazoliumacetat, 1,3-Dimethylimidazoliummethylcarbonat, 1-Ethyl-3-methylimidazoliummethylcarbonat, 1-Butyl-3-methylimidazoliummethylcarbonat und 1-Butyl-2,3-dimethylimidazoliummethylcarbonat.

Ein weiterer Gegenstand der vorliegenden Erfindung ist somit auch ein Verfahren, dadurch gekennzeichnet, dass die mindestens eine ionische Flüssigkeit (IL) ausgewählt ist aus der Gruppe bestehend aus 1-Methylimidazoliumchlorid, 1-Ethylimidazoliumchlorid, 1-Ethyl-3-methylimidazoliumchlorid, 1-Butylimidazoliumchlorid, 1-Butyl-3-methylimidazoliumchlorid, 1,3-Dibutylimidazoliumchlorid, 1-Methylimidazoliumtetrachloroaluminat, 1-Ethylimidazoliumtetrachloroaluminat, 1-Ethyl-3-methylimidazoliumtetrachloroaluminat, 1,3-Diethylimidazoliumtetrachloroaluminat, 1-Butylimidazoliumtetrachloroaluminat, 1-Butyl-3-methylimidazoliumtetrachloroaluminat, 1,3-Dibutylimidazoliumtetrachloroaluminat, 1-Methylimidazoliumhydrogensulfat, 1-Ethylimidazoliumhydrogensulfat, 1-Butylimidazoliumhydrogensulfat, 1-Butyl-3-methylimidazoliumhydrogensulfat, 1-Methylimidazoliummethansulfonat, 1,3-Dimethylimidazoliummethansulfonat, 1-Ethylimidazoliummethansulfonat, 1-Ethyl-3-methylimidazo-liummethansulfonat, 1,3-Diethylimidazoliummethansulfonat, 1-Butylimidazoliummethansulfonat, 1-Butyl-3-methylimidazoliummethansulfonat, 1,3-Dibutylimidazolium-methansulfonat, 1-Methylimidazoliumacetat, 1,3-Dimethylimidazoliumacetat, 1-Ethylimidazoliumacetat, 1-Ethyl-3-methylimidazoliumacetat, 1,3-Diethylimidazoliumacetat, 1-Butylimidazoliumacetat, 1-Butyl-3-methylimidazoliumacetat, 1,3-Dibutylimidazolium-acetat, 1,3-Dimethylimidazoliummethylcarbonat, 1-Ethyl-3-methylimidazoliummethyl-carbonat, 1-Butyl-3-methylimidazoliummethylcarbonat und 1-Butyl-2,3-dimethyl-imidazoliummethylcarbonat

Das Reaktionsgemisch (R_{G}) enthält bevorzugt mindestens 50 Gew.-% der Komponente (c), bezogen auf das Gesamtgewicht des Reaktionsgemischs (R_{G}). Besonders bevorzugt enthält das Reaktionsgemisch (R_{G}) mindestens 64 Gew.-% und ganz besonders bevorzugt mindestens 70 Gew.-% der Komponente (c), bezogen auf das Gesamtgewicht des Reaktionsgemischs (R_{G}).

Desweiteren enthält das Reaktionsgemisch (R_{G}) bevorzugt höchstens 90 Gew.-% der Komponente (c), bezogen auf das Gesamtgewicht des Reaktionsgemischs (R_{G}). Besonders bevorzugt enthält das Reaktionsgemisch (R_{G}) höchstens 84 Gew.-% und ganz besonders bevorzugt höchstens 80 Gew.-% der Komponente (c), bezogen auf das Gesamtgewicht des Reaktionsgemischs (R_{G}). Das Gesamtgewicht aller Komponenten im Reaktionsgemisch (R_{G}) ergibt im Allgemeinen 100 Gew.-%.

Das Reaktionsgemisch (R_{G}) enthält bevorzugt 50 bis 90 Gew.-% der Komponente (c), bezogen auf das Gesamtgewicht des Reaktionsgemischs (R_{G}). Besonders bevorzugt enthält das Reaktionsgemisch (R_{G}) 64 bis 84 Gew.-% und ganz besonders bevorzugt 70 bis 80 Gew.-% der Komponente (c), bezogen auf das Gesamtgewicht des Reaktionsgemischs (R_{G}).

In einer Ausführungsform enthält die Komponente (c) mindestens 80 Gew.-%, bevorzugt mindestens 90 Gew.-% und besonders bevorzugt mindestens 98 Gew.-% mindestens einer ionischen Flüssigkeit (IL) ausgewählt aus der Gruppe bestehend aus 1-Methylimidazoliumchlorid, 1-Ethylimidazoliumchlorid, 1-Ethyl-3-methylimidazolium-chlorid, 1-Butylimidazoliumchlorid, 1-Butyl-3-methylimidazoliumchlorid, 1,3-Dibutyl-imidazoliumchlorid, 1-Methylimidazoliumtetrachloroaluminat, 1-Ethylimidazoliumtetra-chloroaluminat, 1-Ethyl-3-methylimidazoliumtetrachloroaluminat, 1,3-Diethylimidazo-liumtetrachloroaluminat, 1-Butylimidazoliumtetrachloroaluminat, 1-Butyl-3-methyl-imidazoliumtetrachloroaluminat, 1,3-Dibutylimidazoliumtetrachloroaluminat, 1-Methyl-imidazoliumhydrogensulfat, 1-Ethylimidazoliumhydrogensulfat, 1-Butylimidazolium-hydrogensulfat, 1-Butyl-3-methylimidazoliumhydrogensulfat, 1-Methylimidazoliummethansulfonat, 1,3-Dimethylimidazoliummethansulfonat, 1-Ethylimidazoliummethan-sulfonat, 1-Ethyl-3-methylimidazoliummethansulfonat, 1,3-Diethylimidazoliummethan-sulfonat, 1-Butylimidazoliummethansulfonat, 1-Butyl-3-methylimidazoliummethan-sulfonat, 1,3-Dibutylimidazoliummethansulfonat, 1-Methylimidazoliumacetat, 1,3-Di-methylimidazoliumacetat, 1-Ethylimidazoliumacetat, 1-Ethyl-3-methylimidazoliumacetat, 1,3-Diethylimidazoliumacetat, 1-Butylimidazoliumacetat, 1-Butyl-3-methylimidazoliumacetat, 1,3-Dibutylimidazoliumacetat, 1,3-Dimethylimidazoliummethyl-carbonat, 1-Ethyl-3-methylimidazoliummethylcarbonat, 1-Butyl-3-methylimidazoliummethylcarbonat und 1-Butyl-2,3-dimethylimidazoliummethylcarbonat, bezogen auf das Gesamtgewicht der Komponente (c) im Reaktionsgemisch (R_{G}).

In einer weiteren bevorzugten Ausführungsform besteht die Komponente (c) im Wesentlichen aus mindestens einer ionischen Flüssigkeit (IL) ausgewählt aus der Gruppe bestehend aus 1-Methylimidazoliumchlorid, 1-Ethylimidazoliumchlorid, 1-Ethyl-3-methylimidazoliumchlorid, 1-Butylimidazoliumchlorid, 1-Butyl-3-methylimidazoliumchlorid, 1,3-Dibutylimidazoliumchlorid, 1-Methylimidazoliumtetrachloroaluminat, 1-Ethylimidazoliumtetrachloroaluminat, 1-Ethyl-3-methylimidazoliumtetrachloroaluminat, 1,3-Diethylimidazoliumtetrachloroaluminat, 1-Butylimidazoliumtetrachloroaluminat, 1-Butyl-3-methylimidazoliumtetrachloroaluminat, 1,3-Dibutylimidazoliumtetrachloroalu-minat, 1-Methylimidazoliumhydrogensulfat, 1-Ethylimidazoliumhydrogensulfat, 1-Butylimidazoliumhydrogensulfat, 1-Butyl-3-methylimidazoliumhydrogensulfat, 1-Methylimidazoliummethansulfonat, 1,3-Dimethylimidazoliummethansulfonat, 1-Ethylimidazoliummethansulfonat, 1-Ethyl-3-methylimidazoliummethansulfonat, 1,3-Diethylimidazoliummethansulfonat, 1-Butylimidazoliummethansulfonat, 1-Butyl-3-methylimidazoliummethansulfonat, 1,3-Dibutylimidazoliummethansulfonat, 1-Methylimidazoliumacetat, 1,3-Dimethylimidazoliumacetat, 1-Ethylimidazoliumacetat, 1-Ethyl-3-methylimidazo-liumacetat, 1,3-Diethylimidazoliumacetat, 1-Butylimidazoliumacetat, 1-Butyl-3-methylimidazoliumacetat, 1,3-Dibutylimidazoliumacetat, 1,3-Dimethylimidazoliummethyl-carbonat, 1-Ethyl-3-methylimidazoliummethylcarbonat, 1-Butyl-3-methylimidazoliummethylcarbonat und 1-Butyl-2,3-dimethylimidazoliummethylcarbonat.

Unter der Bezeichnung "besteht im Wesentlich aus" wird im Zusammenhang der vorliegenden Erfindung verstanden, dass die Komponente (c) mindestens 99 Gew.-%, bevorzugt mindestens 99,5 Gew.-% und besonders bevorzugt mindestens 99,9 Gew.-% mindestens einer ionischen Flüssigkeit (IL) ausgewählt aus der Gruppe bestehend aus 1-Methylimidazoliumchlorid, 1-Ethylimidazoliumchlorid, 1-Ethyl-3-methylimidazoliumchlorid, 1-Butylimidazoliumchlorid, 1-Butyl-3-methylimidazoliumchlorid, 1,3-Dibutylimidazoliumchlorid, 1-Methylimidazoliumtetrachloroaluminat, 1-Ethylimidazoliumtetrachloroaluminat, 1-Ethyl-3-methylimidazoliumtetrachloroaluminat, 1,3-Diethylimidazoliumtetrachloroaluminat, 1-Butylimidazoliumtetrachloroaluminat, 1-Butyl-3-methylimidazoliumtetrachloroaluminat, 1,3-Dibutylimidazoliumtetrachloroalu-minat, 1-Methylimidazoliumhydrogensulfat, 1-Ethylimidazoliumhydrogensulfat, 1-Butylimidazoliumhydrogensulfat, 1-Butyl-3-methylimidazoliumhydrogensulfat, 1-Methylimidazoliummethansulfonat, 1,3-Dimethylimidazoliummethansulfonat, 1-Ethylimidazoliummethansulfonat, 1-Ethyl-3-methylimidazoliummethansulfonat, 1,3-Diethylimidazoliummethansulfonat, 1-Butylimidazoliummethansulfonat, 1-Butyl-3-methylimidazoliummethansulfonat, 1,3-Dibutylimidazoliummethansulfonat, 1-Methylimidazoliumacetat, 1,3-Dimethylimidazoliumacetat, 1-Ethylimidazoliumacetat, 1-Ethyl-3-methylimidazo-liumacetat, 1,3-Diethylimidazoliumacetat, 1-Butylimidazoliumacetat, 1-Butyl-3-methylimidazoliumacetat, 1,3-Dibutylimidazoliumacetat, 1,3-Dimethylimidazoliummethyl-carbonat, 1-Ethyl-3-methylimidazoliummethylcarbonat, 1-Butyl-3-methylimidazoliummethylcarbonat und 1-Butyl-2,3-dimethylimidazoliummethylcarbonat enthält, bezogen auf das Gesamtgewicht der Komponente (c) im Reaktionsgemisch (R_{G}).

In einer weiteren besonders bevorzugten Ausführungsform besteht die Komponente (c) aus mindestens einer ionischen Flüssigkeit (IL) ausgewählt aus der Gruppe bestehend aus 1-Methylimidazoliumchlorid, 1-Ethylimidazoliumchlorid, 1-Ethyl-3-methyl-imidazoliumchlorid, 1-Butylimidazoliumchlorid, 1-Butyl-3-methylimidazoliumchlorid, 1,3-Dibutylimidazoliumchlorid, 1-Methylimidazoliumtetrachloroaluminat, 1-Ethylimidazo-liumtetrachloroaluminat, 1-Ethyl-3-methylimidazoliumtetrachloroaluminat, 1,3-Diethyl-imidazoliumtetrachloroaluminat, 1-Butylimidazoliumtetrachloroaluminat, 1-Butyl-3-methylimidazoliumtetrachloroaluminat, 1,3-Dibutylimidazoliumtetrachloroaluminat, 1-Methylimidazoliumhydrogensulfat, 1-Ethylimidazoliumhydrogensulfat, 1-Butylimidazoliumhydrogensulfat, 1-Butyl-3-methylimidazoliumhydrogensulfat, 1-Methylimidazoliummethansulfonat, 1,3-Dimethylimidazoliummethansulfonat, 1-Ethylimidazoliummethansulfonat, 1-Ethyl-3-methylimidazoliummethansulfonat, 1,3-Diethylimidazoliummethansulfonat, 1-Butylimidazoliummethansulfonat, 1-Butyl-3-methylimidazoliummethansulfonat, 1,3-Dibutylimidazoliummethansulfonat, 1-Methylimidazoliumacetat, 1,3-Dimethylimidazoliumacetat, 1-Ethylimidazoliumacetat, 1-Ethyl-3-methylimidazo-liumacetat, 1,3-Diethylimidazoliumacetat, 1-Butylimidazoliumacetat, 1-Butyl-3-methylimidazoliumacetat, 1,3-Dibutylimidazoliumacetat, 1,3-Dimethylimidazoliummethyl-carbonat, 1-Ethyl-3-methylimidazoliummethylcarbonat, 1-Butyl-3-methylimidazoliummethylcarbonat und 1-Butyl-2,3-dimethylimidazoliummethylcarbonat.

In diesen Ausführungsformen sind 1-Methylimidazoliumchlorid, 1-Methylimidazoliumtetrachloroaluminat, 1-Methylimidazoliummethansulfonat, 1-Ethylimidazoliumchlorid, 1-Ethyl-3-methylimidazoliumchlorid, 1-Ethyl-3-methylimidazoliumtetrachloroaluminat, 1-Ethyl-3-methylimidazoliummethansulfonat, 1-Butylimidazoliumchlorid, 1-Butyl-3-methylimidazoliumchlorid, 1-Butyl-3-methylimidazoliumtetrachloroaluminat und 1-Butyl-3-methylimidazoliummethansulfonat besonders bevorzugt.

Die im erfindungsgemäßen Verfahren eingesetzte mindestens eine ionische Flüssigkeit (IL) eignet sich prinzipiell auch als Lösungsmittel bei der Herstellung aromatischer Polyamide (Aramide). Entsprechende Aramide umfassen beispielsweise Poly(p-phenylenterephthalamid) (PPTA), welches auch unter den Handelsnamen Kevlar^{®} oder Twaron^{®} erhältlich ist, sowie Poly(m-phenylenisophthalamid (PMPI), welches unter dem Handelsnamen Nomex^{®} erhältlich ist.

### Polybenzazolpolymer (P)

Durch das erfindungsgemäße Verfahren wird das Polybenzazolpolymer (P) hergestellt.

Ein weiterer Gegenstand der vorliegenden Erfindung ist somit auch das Polybenzazolpolymer (P), welches durch das erfindungsgemäße Verfahren hergestellt wird.

Bevorzugt weist das Polybenzazolpolymer (P) Wiederholungseinheiten der allgemeinen Formel (Xlla), (Xllb), (XIIc), (XIId), (XIIe) und/oder (XIIf) auf:

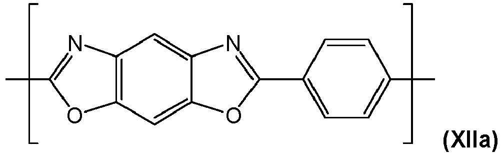

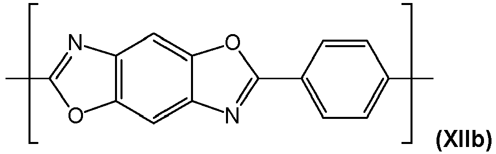

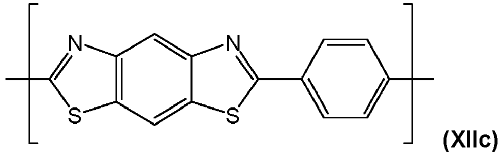

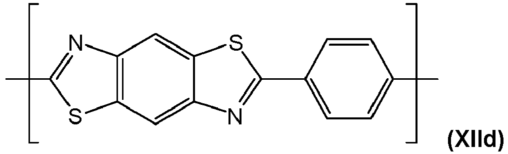

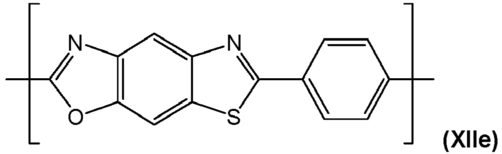

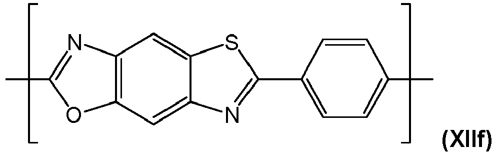

In einer bevorzugten Ausführungsform enthält das Polybenzazolpolymer (P) mindestens 40 Gew.-%, bevorzugt mindestens 60 Gew.-% und besonders bevorzugt mindestens 80 Gew.-% an Wiederholungseinheiten ausgewählt aus der Gruppe bestehend aus Wiederholungseinheiten der allgemeinen Formeln (Xlla), (Xllb), (Xllc), (Xlld), (XIIe) und (XIIf), bezogen auf das Gesamtgewicht des Polybenzazolpolymers (P).

In einer besonders bevorzugten Ausführungsform enthält das Polybenzazolpolymer (P) mindestens 40 Gew.-%, bevorzugt mindestens 60 Gew.-% und besonders bevorzugt mindestens 80 Gew.-% an Wiederholungseinheiten ausgewählt aus der Gruppe bestehend aus Wiederholungseinheiten der allgemeinen Formeln (XIIa) und (XIIb) auf.

Die hier angegebenen Gewichtsangaben bezüglich der Wiederholungseinheiten der allgemeinen Formeln (XIIa), (Xllb), (XIIc), (XIId), (XIIe) und (XIIf) beziehen sich dabei auf das Gesamtgewicht an Wiederholungseinheiten der allgemeinen Formel (Xlla), (Xllb), (XIIc), (Xlld), (XIIe) und (XIIf).

In einer weiteren besonders bevorzugten Ausführungsform besteht das Polybenzazolpolymer (P) im Wesentlichen aus Wiederholungseinheiten ausgewählt aus der Gruppe bestehend aus Wiederholungseinheiten der allgemeinen Formeln (Xlla) und (Xllb). Unter der Bezeichnung "besteht im Wesentlichen aus" wird im Rahmen der vorliegenden Erfindung verstanden, dass das Polybenzazolpolymer (P) mindestens 95 Gew.-%, bevorzugt mindestens 97 Gew.-% und besonders bevorzugt mindestens 99 Gew.-% an Wiederholungseinheiten ausgewählt aus der Gruppe bestehend aus Wiederholungseinheiten der allgemeinen Formeln (Xlla) und (Xllb) enthält, bezogen auf das Gesamtgewicht des Polybenzazolpolymers (P).

In einer weiteren besonders bevorzugten Ausführungsform besteht das Polybenzazolpolymer (P) aus Wiederholungseinheiten ausgewählt aus der Gruppe bestehend aus Wiederholungseinheiten der allgemeinen Formeln (Xlla) und (Xllb).

Insbesondere bevorzugt ist das Polybenzazolpolymer (P) Poly(p-phenylen-2,6-benzobisoxazol.

Das durch das erfindungsgemäße Verfahren erhaltene Polybenzazolpolymer (P) weist allgemein eine Viskositätszahl von 5 bis 40 dl/g, bevorzugt von 10 bis 35 dl/g und besonders bevorzugt von 15 bis 30 dl/g auf. Die Bestimmung der Viskositätszahl erfolgt gemäß der DIN EN ISO 1628-1 bei 25 °C in Methansulfonsäure.

Das gewichtsmittlere Molekulargewicht (M_{w}) des durch das erfindungsgemäße Verfahren erhaltenen Polybenzazolpolymers (P) ist allgemein im Bereich von 20 000 bis 200 000 g/mol, bevorzugt im Bereich von 40 000 bis 180 000 g/mol und besonders bevorzugt im Bereich von 60 000 bis 120 000 g/mol. Das gewichtsmittlere Molekulargewicht wurde durch die Messung der statischen Lichtstreuung einer Lösung des Polybenzazolpolymers (P) in einer Lösung von Lithiumsulfat (50 mmol/L) in Methansulfonsäure/Methansulfonsäureanhydrid (1 Gew-%).

Der Gehalt an schwefelhaltigen oder phosphorhaltigen Säuren im Polybenzazolpolymer (P) ist vorzugsweise kleiner als 1000 ppm, bevorzugt kleiner als 100 ppm und besonders bevorzugt enthält das Polybenzazolpolymer (P) gar keine schwefelhaltigen oder phosphorhaltigen Säuren.

Ein weiterer Gegenstand der vorliegenden Erfindung ist somit auch das Polybenzazolpolymer (P), dadurch gekennzeichnet, dass der Gehalt an schwefelhaltigen oder phosphorhaltigen Säuren im Polybenzazolpolymer (P) kleiner als 1000 ppm ist.

Entsprechende schwefelhaltige oder phosphorhaltige Säuren sind dem Fachmann generell bekannt und umfassen insbesondere Phosphorsäure, Polyphosphorsäure, Schwefelsäure, Methansulfonsäure, Trifluormethansulfonsäure und Chlorsulfonsäure.

Das durch das erfindungsgemäße Verfahren hergestellte Polybenzazolpolymer (P) kann in vielen technischen Bereichen verwendet werden, beispielsweise als Fasermaterial, in thermisch stabilen Membranen zur Gastrennung, in protonenleitenden Membranen, in elektro-optischen Geräten oder lichtemittierenden Dioden, insbesondere als Fasermaterial.

Ein weiterer Gegenstand der vorliegenden Erfindung ist somit auch die Verwendung des Polybenzazolpolymers (P) als Fasermaterial.

## Patentansprüche

1. Verfahren zur Herstellung eines Polybenzazolpolymers (P) durch Umsetzen eines Reaktionsgemisches (R_{G}), das die folgenden Komponenten enthält:
(a) mindestens eine aromatische Dicarboxylverbindung der allgemeinen Formel (I): 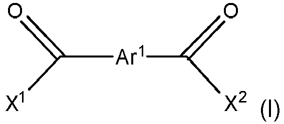 in der
Ar¹ ausgewählt ist aus der Gruppe bestehend aus unsubstituiertem oder zumindest monosubstituiertem Phenylen, Naphthalindiyl, Anthracendiyl, Biphenyldiyl, Diphenylmethandiyl, Diphenyletherdiyl, Diphenylthioetherdiyl, Diphenylsulfondiyl, Benzophenondiyl, Pyridindiyl, Pyrimidindiyl, Furandiyl und Thiophendiyl,
wobei die Substituenten ausgewählt sind aus der Gruppe bestehend aus -F, -Cl, -Br, -OR¹ und -C₁-C₁₀-Alkyl,
wobei R¹ -H oder -C₁-C₁₀-Alkyl ist;
X¹, X² unabhängig voneinander ausgewählt sind aus der Gruppe bestehend aus-OR², -F, -Cl und -Br,
wobei R² -H, -C₁-C₁₀-Alkyl, -C₁-C₁₀-Alkenyl oder eine Wiederholungseinheit der allgemeinen Formel (la) ist: 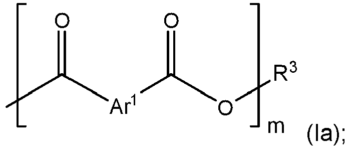
in der
m eine natürliche Zahl von 1 bis 50 ist, und
R³-H, -C₁-C₁₀-Alkyl oder -C₁-C₁₀-Alkenyl ist;
(b) mindestens eine aromatische Diaminoverbindung der allgemeinen Formel (IIa), (IIb), (IIc) und/oder (IId): 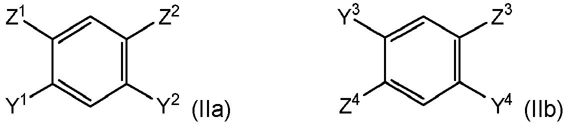 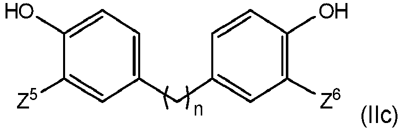 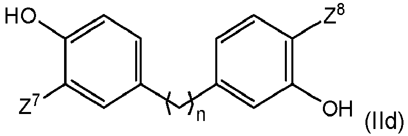 in denen
n 0 oder 1 ist
Y¹, Y², Y³, Y⁴ unabhängig voneinander-H, -OR⁴ oder-SR⁴ sind,
wobei R⁴ ausgewählt ist aus der Gruppe bestehend aus -H, -C₁-C₁₀-Alkyl, Trimethylsilyl, tert-Butyldimethylsilyl, Acetyl und tert-Butyloxycarbonyl, und
wobei höchstens einer der Reste Y¹ und Y² -H ist, und
wobei höchstens einer der Reste Y³ und Y⁴ -H ist;
Z¹ Z², Z³, Z4, Z⁵, Z⁶, Z⁷, Z⁸ unabhängig voneinander-NH₂ oder-NH₃⁺ Q⁻ sind,
wobei Q⁻ ein Anionenäquivalent ist, ausgewählt aus der Gruppe bestehend aus F⁻, Cl⁻, Br, I⁻, HSO₄⁻, SO₄²⁻, H₃C-SO₃⁻, p-H₃C-C₆H₄-SO₃⁻ und NO₃⁻;
und
(c) mindestens eine ionische Flüssigkeit (IL);
unter Erhalt eines Produktgemisches (P_{G}), das das Polybenzazolpolymer (P) und die mindestens eine ionische Flüssigkeit (IL) enthält.

2. Verfahren gemäß Anspruch 1, **dadurch gekennzeichnet, dass** Ar¹ ausgewählt ist aus der Gruppe bestehend aus unsubstituiertem oder zumindest monosubstituiertem 1,3-Phenylen, 1,4-Phenylen, Naphthalin-1,4-diyl, Naphthalin-2,6-diyl, Anthracen-2,6-diyl, Anthracen-9,10-diyl, Biphenyl-4,4'-diyl, Diphenylmethan-4,4'-diyl, Diphenylether-4,4'-diyl, Diphenylthioether-4,4'-diyl, Diphenylsulfon-4,4'-diyl, Benzophenon-4,4'-diyl, Pyridin-2,5-diyl, Pyrimidin-4,6-diyl, Furan-2,5-diyl und Thiophen-2,5-diyl.

3. Verfahren gemäß Anspruch 1 oder 2, **dadurch gekennzeichnet, dass** die Komponente (a) ausgewählt ist aus der Gruppe bestehend aus Isophthalsäure, Isophthalsäureanhydrid, Isophthalsäuredifluorid, Isophthalsäuredichlorid, Isophthalsäuredibromid, Polyanhydride von Isophthalsäure, C₁-C₁₀-Alkylester von Isophthalsäure, C₁-C₁₀-Alkenylester von Isophthalsäure, Terephthalsäure, Terephthalsäureanhydrid, Terephthalsäuredifluorid, Terephthalsäuredichlorid, Terephthalsäuredibromid, Polyanhydride von Terephthalsäure, C₁-C₁₀-Alkylester von Terephthalsäure, C₁-C₁₀-Alkenylester von Terephthalsäure, Naphthalin-1,4-dicarbonsäure, Naphthalin-1,4-dicarbonsäureanhydrid, Naph-thalin-1,4-dicarbonsäuredifluorid, Naphthalin-1,4-dicarbonsäuredichlorid, Naph-thalin-1,4-dicarbonsäuredibromid, Polyanhydride von Naphthalin-1,4-dicarbonsäure, C₁-C₁₀-Alkylester von Naphthalin-1,4-dicarbonsäure, C₁-C₁₀-Alkenylester von Naphthalin-1,4-dicarbonsäure, Naphthalin-2,6-dicarbonsäure, Naphthalin-2,6-dicarbonsäureanhydrid, Naphthalin-2,6-dicarbonsäuredifluorid, Naphthalin-2,6-dicarbonsäuredichlorid, Naphthalin-2,6-dicarbonsäuredibromid, Polyanhydride von Naphthalin-2,6-dicarbonsäure, C₁-C₁₀-Alkylester von Naphthalin-2,6-dicarbonsäure, C₁-C₁₀-Alkenylester von Naphthalin-2,6-dicarbonsäure, Anthracen-2,6-dicarbonsäure, Anthracen-2,6-dicarbon-säureanhydrid, Anthracen-2,6-dicarbonsäuredifluorid, Anthracen-2,6-dicarbonsäuredichlorid, Anthracen-2,6-dicarbonsäuredibromid, Polyanhydride von Anthracen-2,6-dicarbonsäure, C₁-C₁₀-Alkylester von Anthracen-2,6-dicarbonsäure, C₁-C₁₀-Alkenylester von Anthracen-2,6-dicarbonsäure, Anthracen-9,10-dicarbonsäure, Anthracen-9,10-dicarbonsäureanhydrid, Anthra-cen-9,10-dicarbonsäuredifluorid, Anthracen-9,10-dicarbonsäuredichlorid, Anthracen-9,10-dicarbonsäuredibromid, Polyanhydride von Anthracen-9,10-dicarbonsäure, C₁-C₁₀-Alkylester von Anthracen-9,10-dicarbonsäure, C₁-C₁₀-Alkenylester von Anthracen-9,10-dicarbonsäure, Biphenyl-4,4'-dicarbonsäure, Biphenyl-4,4'-dicarbonsäureanhydrid, Biphenyl-4,4'-dicarbonsäuredifluorid, Biphenyl-4,4'-dicarbonsäuredichlorid, Biphenyl-4,4'-dicarbonsäuredibromid, Polyanhydride von Biphenyl-4,4'-dicarbonsäure, C₁-C₁₀-Alkylester von Biphenyl-4,4'-dicarbonsäure, C₁-C₁₀-Alkenylester von Biphenyl-4,4'-dicarbonsäure, Diphenylmethan-4,4'-dicarbonsäure, Diphenylmethan-4,4'-dicarbonsäure-anhydrid, Diphenylmethan-4,4'-dicarbonsäuredifluorid, Diphenylmethan-4,4'-dicarbonsäuredichlorid, Diphenylmethan-4,4'-dicarbonsäuredibromid, Poly-anhydride von Diphenylmethan-4,4'-dicarbonsäure, C₁-C₁₀-Alkylester von Diphenylmethan-4,4'-dicarbonsäure, C₁-C₁₀-Alkenylester von Diphenylmethan-4,4'-dicarbonsäure, Diphenylether-4,4'-dicarbonsäure, Diphenylether-4,4'-dicarbonsäureanhydrid, Diphenylether-4,4'-dicarbonsäuredifluorid, Diphenyl-ether-4,4'-dicarbonsäuredichlorid, Diphenylether-4,4'-dicarbonsäuredibromid, Polyanhydride von Diphenylether-4,4'-dicarbonsäure, C₁-C₁₀-Alkylester von Diphenylether-4,4'-dicarbonsäure, C₁-C₁₀-Alkenylester von Diphenylether-4,4'-dicarbonsäure, Diphenylthioether-4,4'-dicarbonsäure, Diphenylthioether-4,4'-dicarbonsäureanhydrid, Diphenylthioether-4,4'-dicarbonsäuredifluorid, Di-phenylthioether-4,4'-dicarbonsäuredichlorid, Diphenylthioether-4,4'-dicarbon-säuredibromid, Polyanhydride von Diphenylthioether-4,4'-dicarbonsäure, C₁-C₁₀-Alkylester von Diphenylthioether-4,4'-dicarbonsäure, C₁-C₁₀-Alkenylester von Diphenylthioether-4,4'-dicarbonsäure, Diphenylsulfon-4,4'-dicarbonsäure, Diphenylsulfon-4,4'-dicarbonsäureanhydrid, Diphenylsulfon-4,4'-dicarbon-säuredifluorid, Diphenylsulfon-4,4'-dicarbonsäuredichlorid, Diphenylsulfon-4,4'-dicarbonsäuredibromid, Polyanhydride von Diphenylsulfon-4,4'-dicarbonsäure, C₁-C₁₀-Alkylester von Diphenylsulfon-4,4'-dicarbonsäure, C₁-C₁₀-Alkenylester von Diphenylsulfon-4,4'-dicarbonsäure, Benzophenon-4,4'-dicarbonsäure, Benzophenon-4,4'-dicarbonsäureanhydrid, Benzophenon-4,4'-dicarbonsäuredifluorid, Benzophenon-4,4'-dicarbonsäuredichlorid, Benzo-phenon-4,4'-dicarbonsäuredibromid, Polyanhydride von Benzophenon-4,4'-dicarbonsäure, C₁-C₁₀-Alkylester von Benzophenon-4,4'-dicarbonsäure, C₁-C₁₀-Alkenylester von Benzophenon-4,4'-dicarbonsäure, Pyridin-2,5-di-carbonsäure, Pyridin-2,5-dicarbonsäureanhydrid, Pyridin-2,5-dicarbon-säuredifluorid, Pyridin-2,5-dicarbonsäuredichlorid, Pyridin-2,5-dicarbonsäure-dibromid, Polyanhydride von Pyridin-2,5-dicarbonsäure, C₁-C₁₀-Alkylester von Pyridin-2,5-dicarbonsäure, C₁-C₁₀-Alkenylester von Pyridin-2,5-dicarbonsäure, Pyrimidin-4,6-dicarbonsäure, Pyrimidin-4,6-dicarbonsäureanhydrid, Pyrimidin-4,6-dicarbonsäuredifluorid, Pyrimidin-4,6-dicarbonsäuredichlorid, Pyrimidin-4,6-dicarbonsäuredibromid, Polyanhydride von Pyrimidin-4,6-dicarbonsäure, C₁-C₁₀-Alkylester von Pyrimidin-4,6-dicarbonsäure, C₁-C₁₀-Alkenylester von Pyrimidin-4,6-dicarbonsäure, Furan-2,5-dicarbonsäure, Furan-2,5-dicarbon-säureanhydrid, Furan-2,5-dicarbonsäuredifluorid, Furan-2,5-dicarbonsäure-dichlorid, Furan-2,5-dicarbonsäuredibromid, Polyanhydride von Furan-2,5-dicarbonsäure, C₁-C₁₀-Alkylester von Furan-2,5-dicarbonsäure, C₁-C₁₀-Alkenylester von Furan-2,5-dicarbonsäure, Thiophen-2,5-dicarbonsäure, Thiophen-2,5-dicarbonsäureanhydrid, Thiophen-2,5-dicarbonsäuredifluorid, Thiophen-2,5-dicarbonsäuredichlorid, Thiophen-2,5-dicarbonsäuredibromid, Polyanhydride von Thiophen-2,5-dicarbonsäure, C₁-C₁₀-Alkylester von Thiophen-2,5-dicarbonsäure und C₁-C₁₀-Alkenylester von Thiophen-2,5-dicarbonsäure.

4. Verfahren gemäß einem der Ansprüche 1 bis 3, **dadurch gekennzeichnet, dass** die Komponente (b) ausgewählt ist aus der Gruppe bestehend aus 4,6-Diamino-1,3-dihydroxybenzol, 4,6-Diamino-1,3-dithiobenzol, 4,6-Diamino-3-hydroxy-1-thiobenzol, 2,5-Diamino-1,4-dihydroxybenzol, 2,5-Diamino-1,4-dithio-benzol, 2,5-Diamino-4-hydroxy-1-thiobenzol, 4,6-Diamino-1,3-dihydroxybenzol-dihydrochlorid, 4,6-Diamino-1,3-dithiobenzol-dihydrochlorid, 4,6-Diamino-3-hydroxy-1-thiobenzol-dihydrochlorid, 2,5-Diamino-1,4-dihydroxybenzol-dihydro-chlorid, 2,5-Diamino-1,4-dithiobenzoldihydrochlorid, 2,5-Diamino-4-hydroxy-1-thiobenzol-dihydrochlorid, 3,3'-Diamino-4,4'-dihydroxybiphenyl, 3,3'-Diamino-4,4'-dihydroxybiphenyl-dihydrochlorid, 4,4'-Diamino-3,3'-dihydroxybiphenyl, 4,4'-Diamino-3,3'-dihydroxybiphenyl-dihydrochlorid, 3,3'-Diamino-4,4'-dihydroxydiphenylmethan, 3,3'-Diamino-4,4'-dihydroxydiphenylmethandihydro-chlorid, 4,4'-Diamino-3,3'-dihydroxydiphenylmethan und 4,4'-Diamino-3,3'-dihydroxydiphenylmethan-dihydrochlorid.

5. Verfahren gemäß einem der Ansprüche 1 bis 4, **dadurch gekennzeichnet, dass** das Reaktionsgemisch (R_{G}) 5 bis 25 Gew.-% der Komponente (a), 5 bis 25 Gew.-% der Komponente (b) und 50 bis 90 Gew.-% der Komponente (c) enthält, bezogen auf das Gesamtgewicht des Reaktionsgemisches (R_{G}).

6. Verfahren gemäß einem der Ansprüche 1 bis 5, **dadurch gekennzeichnet, dass** die mindestens eine ionische Flüssigkeit (IL) die allgemeine Formel (III) aufweist:
[C]ₙ⁺ [A]ⁿ⁻ (III)
in der
n = 1, 2, 3 oder 4 ist;
das Kation [C] ₙ⁺ mindestens ein Kation ist, ausgewählt aus der Gruppe bestehend aus unsubstituierten oder zumindest monosubstituierten Imidazolium-Kationen, Imidazolinium-Kationen, Imidazolidinium-Kationen, quartären Ammonium-Kationen, quartären Phosphonium-Kationen, Pyrazolium-Kationen, Pyrazolinium-Kationen, Pyridinium-Kationen, Pyridazinium-Kationen, Pyrimidinium-Kationen, Pyrazinium-Kationen, Pyrrolidinium-Kationen, Guanidinium-Kationen, Thiazolium-Kationen, Oxazolium-Kationen, Triazolium-Kationen, dem 1,8-Diazabicyclo[5.4.0]undec-7-enium-Kation, dem 1,8-Diazabicyclo[4.3.0]non-5-enium-Kation und Oligomeren oder Polymeren, die diese Kationen enthalten,
wobei die Substituenten ausgewählt sind aus der Gruppe bestehend aus linearem oder verzweigtem -C₁-C₁₈-Alkyl, -C₅-C₁₂-Cycloalkyl und -C₆-C₁₄-Aryl;
das Anion [A]ⁿ⁻ ausgewählt ist aus der Gruppe bestehend aus halogenidhaltigen Anionen, Cyanid, Thiocyanat, Cyanat, Isocyanat, Nitrit, Nitrat, unsubstituierten oder zumindest monosubstituierten Sulfaten, Sulfiten, Sulfonaten, Carboxy-Iaten, Boraten, Boronaten, Carbonaten, Kohlensäure-estern, Amiden, Carbonsäureimidaten, Sulfonylimidaten, bis(Sulfonyl)imidaten, Alkoxiden und Aryloxiden,
wobei die Substituenten ausgewählt sind aus der Gruppe bestehend aus linearem oder verzweigtem -C₁-C₁₈-Alkyl, -C₅-C₁₂-Cycloalkyl und -C₆-C₁₄-Aryl.

7. Verfahren gemäß Anspruch 6, **dadurch gekennzeichnet, dass** die mindestens eine ionische Flüssigkeit (IL) als Kation [C]ₙ⁺ mindestens ein Imidazolium-Kation der allgemeinen Formel (IV) enthält: 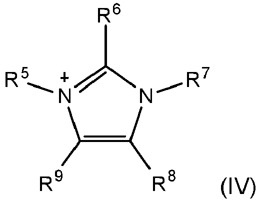 in der
R⁵, R⁶, R⁷, R⁸, R⁹ unabhängig voneinander ausgewählt sind aus der Gruppe bestehend aus -H, linearem oder verzweigtem -C₁-C₁₈-Alkyl, -C₅-C₁₂-Cycloalkyl und -C₆-C₁₄-Aryl.

8. Verfahren gemäß Anspruch 6 oder 7, **dadurch gekennzeichnet, dass** das Kation [C] ₙ⁺ mindestens ein Kation ist, ausgewählt aus der Gruppe bestehend aus 1-Methylimidazolium, 1-Methyl-2-ethylimidazolium, 1-Methyl-3-octylimidazolium, 1,2-Dimethylimidazolium, 1,3-Dimethylimidazolium, 2,3-Dimethylimidazolium, 3,4-Dimethylimidazolium, 1,2,3-Trimethylimidazolium, 1,3,4-Trimethylimida-zolium, 1,3,4,5-Tetramethylimidazolium, 1-Ethylimidazolium, 1-Ethyl-2-methylimidazolium, 1-Ethyl-3-methylimidazolium, 1-Ethyl-2,3-dimethyl-imidazolium, 2-Ethyl-3,4-dimethylimidazolium, 1-Propylimidazolium, 1-Propyl-2-methylimidazolium, 1-Propyl-3-methylimidazolium, 1-Propyl-2,3-dimethyl-imidazolium, 1,3-Dipropylimidazolium, 1-Butylimidazolium, 1-Butyl-2-methylimidazolium, 1-Butyl-3-methylimidazolium, 1-Butyl-4-methylimidazolium, 1-Butyl-2,3-dimethylimidazolium, 1-Butyl-3,4-dimethylimidazolium, 1-Butyl-3,4,5-trimethylimidazolium, 1-Butyl-2-ethylimidazolium, 1-Butyl-3-ethyl-imidazolium, 1-Butyl-2-ethyl-5-methylimidazolium, 1,3-Di-butylimidazolium, 1,3-Dibutyl-2-methylimidazolium, 1-Pentylimidazolium, 1-Pentyl-2-methyl-imidazolium, 1-Pentyl-3-methylimidazolium, 1-Pentyl-2,3-dimethylimidazolium, 1-Hexylimidazolium, 1-Hexyl-2-methylimidazolium, 1-Hexyl-3-methyl-imidazolium, 1-Hexyl-2,3-dimethylimidazolium, 1-Octyl-2-methylimidazolium, 1-Octyl-3-methylimidazolium, 1-Decyl-3-methylimidazolium, 1-Dodecyl-3-methylimidazolium, 1-Tetradecyl-3-methylimidazolium, 1-Hexadecyl-3-methylimidazolium und 1-Benzyl-3-methylimidazolium.

9. Verfahren gemäß einem der Ansprüche 1 bis 8, **dadurch gekennzeichnet, dass** die mindestens eine ionische Flüssigkeit (IL) ausgewählt ist aus der Gruppe bestehend aus 1-Methylimidazoliumchlorid, 1-Ethylimidazoliumchlorid, 1-Ethyl-3-methylimidazoliumchlorid, 1-Butylimidazoliumchlorid, 1-Butyl-3-methylimidazoliumchlorid, 1,3-Dibutylimidazoliumchlorid, 1-Methylimidazoliumtetrachloroaluminat, 1-Ethylimidazoliumtetrachloroaluminat, 1-Ethyl-3-methyl-imidazoliumtetrachloroaluminat, 1,3-Diethylimidazoliumtetrachloroaluminat, 1-Butylimidazoliumtetrachloroaluminat, 1-Butyl-3-methylimidazoliumtetrachloro-aluminat, 1,3-Dibutylimidazoliumtetrachloroaluminat, 1-Methylimidazoliumhydrogensulfat, 1-Ethylimidazoliumhydrogensulfat, 1-Butylimidazolium-hydrogensulfat, 1-Butyl-3-methylimidazoliumhydrogensulfat, 1-Methylimidazoliummethansulfonat, 1,3-Dimethylimidazoliummethansulfonat, 1-Ethylimidazoliummethansulfonat, 1-Ethyl-3-methylimidazoliummethansulfonat, 1,3-Diethylimidazoliummethansulfonat, 1-Butylimidazoliummethansulfonat, 1-Butyl-3-methylimidazoliummethansulfonat, 1,3-Dibutylimidazoliummethansulfonat, 1-Methylimidazoliumacetat, 1,3-Dimethylimidazoliumacetat, 1-Ethylimidazoliumacetat, 1-Ethyl-3-methylimidazoliumacetat, 1,3-Diethylimidazoliumacetat, 1-Butylimidazoliumacetat, 1-Butyl-3-methylimidazoliumacetat, 1,3-Dibutyl-imidazoliumacetat, 1,3-Dimethylimidazoliummethylcarbonat, 1-Ethyl-3-methyl-imidazoliummethylcarbonat, 1-Butyl-3-methylimidazoliummethylcarbonat und 1-Butyl-2,3-dimethylimidazoliummethylcarbonat.

10. Verfahren gemäß einem der Ansprüche 1 bis 9, **dadurch gekennzeichnet, dass** die Umsetzung des Reaktionsgemisches (R_{G}) in Gegenwart mindestens einer basischen Verbindung erfolgt, die ausgewählt ist aus der Gruppe bestehend aus Lithiumhydroxid, Natriumhydroxid, Kaliumhydroxid, Magnesiumhydroxid, Calciumhydroxid, Bariumhydroxid, Lithiumcarbonat, Natriumcarbonat, Kaliumcarbonat, Magnesiumcarbonat, Calciumcarbonat, Lithiumhydrid, Natriumhydrid, Kaliumhydrid, Magnesiumhydrid und Calciumhydrid.

11. Verfahren gemäß einem der Ansprüche 1 bis 10, **dadurch gekennzeichnet, dass** mindestens 40 Gew.-% des Polybenzazolpolymers (P) in der mindestens einen ionischen Flüssigkeit (IL) gelöst sind, bezogen auf das Gesamtgewicht des Polybenzazolpolymers (P) im Produktgemisch (P_{G}).

12. Polybenzazolpolymer (P), hergestellt nach dem Verfahren gemäß einem der Ansprüche 1 bis 11.

13. Polybenzazolpolymer (P) gemäß Anspruch 12, **dadurch gekennzeichnet, dass** der Gehalt an schwefelhaltigen oder phosphorhaltigen Säuren im Polybenzazolpolymer (P) kleiner als 1000 ppm ist.

14. Verwendung des Polybenzazolpolymers (P) gemäß Anspruch 11 oder 12 als Fasermaterial.

## Claims

1. A method for producing a polybenzazole polymer (P) by reacting a reaction mixture (R_{G}) comprising the following components:
(a) at least one aromatic dicarboxylic compound of the general formula (I): 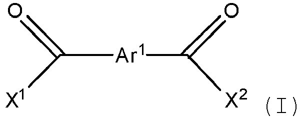 in which
Ar¹ is selected from the group consisting of unsubstituted or at least monosubstituted phenylene, naphthalenediyl, anthracenediyl, biphenyldiyl, diphenylmethanediyl, diphenyl ether diyl, diphenyl thioether diyl, diphenyl sulfone diyl, benzophenonediyl, pyridinediyl, pyrimidinediyl, furandiyl and thiophenediyl,
wherein the substituents are selected from the group consisting of -F, -Cl, -Br, -OR¹ and -C₁-C₁₀-alkyl,
wherein R¹ is -H or -C₁-C₁₀-alkyl;
X¹, X² are each independently selected from the group consisting of -OR², -F, -Cl and -Br, wherein R² is -H, -C₁-C₁₀-alkyl, -C₁-C₁₀-alkenyl or a repeating unit of the general formula (Ia): 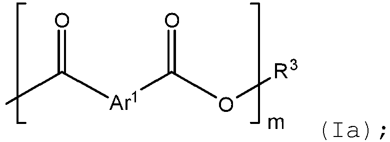
in which
m is a natural number from 1 to 50, and
R³ is -H, -C₁-C₁₀-alkyl or -C₁-C₁₀-alkenyl;
(b) at least one aromatic diamino compound of the general formula (IIa), (IIb), (IIc) and/or (IId): 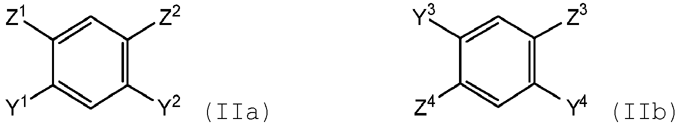 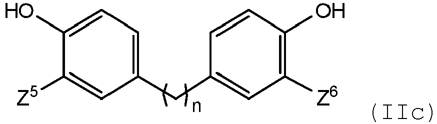 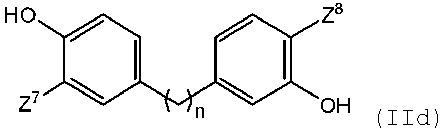 in which
n is 0 or 1
Y¹, Y², Y³, Y⁴ are each independently -H, -OR⁴ or -SR⁴,
wherein R⁴ is selected from the group consisting of -H, -C₁-C₁₀-alkyl, trimethylsilyl, tert-butyldimethylsilyl, acetyl and tert-butyloxycarbonyl, and
wherein at most one of the radicals Y¹ and Y² is -H, and
wherein at most one of the radicals Y³ and Y⁴ is -H;
Z¹, Z², Z³, Z⁴, Z⁵, Z⁶, Z⁷, Z⁸ are each independently -NH₂ or -NH₃⁺ Q⁻,
wherein Q⁻ is an anion equivalent selected from the group consisting of F⁻, Cl⁻, Br⁻, I⁻, HSO₄⁻, SO₄²⁻, H₃C-SO₃⁻, p-H₃C-C₆H₄-SO₃⁻ and NO₃⁻;
and
(c) at least one ionic liquid (IL);
to obtain a product mixture (P_{G}) comprising the polybenzazole polymer (P) and the at least one ionic liquid (IL).

2. The method according to claim 1, wherein Ar¹ is selected from the group consisting of unsubstituted or at least monosubstituted 1,3-phenylene, 1,4-phenylene, naphthalene-1,4-diyl, naphthalene-2,6-diyl, anthracene-2,6-diyl, anthracene-9,10-diyl, biphenyl-4.4'-diyl, diphenylmethane-4.4'-diyl, diphenyl ether 4,4'-diyl, diphenyl thioether 4,4'-diyl, diphenyl sulfone 4,4'-diyl, benzophenone-4.4'-diyl, pyridine-2,5-diyl, pyrimidine-4,6-diyl, furan-2,5-diyl and thiophene-2,5-diyl.

3. The method according to claim 1 or 2, wherein component (a) is selected from the group consisting of isophthalic acid, isophthalic anhydride, isophthaloyl difluoride, isophthaloyl dichloride, isophthaloyl dibromide, polyanhydrides of isophthalic acid, C₁-C₁₀-alkyl esters of isophthalic acid, C₁-C₁₀-alkenyl esters of isophthalic acid, terephthalic acid, terephthalic anhydride, terephthaloyl difluoride, terephthaloyl dichloride, terephthaloyl dibromide, polyanhydrides of terephthalic acid, C₁-C₁₀-alkyl esters of terephthalic acid, C₁-C₁₀-alkenyl esters of terephthalic acid, naphthalene-1,4-dicarboxylic acid, naphthalene-1,4-dicarboxylic anhydride, naphthalene-1,4-dicarbonyl difluoride, naphthalene-1,4-dicarbonyl dichloride, naphthalene-1,4-dicarbonyl dibromide, polyanhydrides of naphthalene-1,4-dicarboxylic acid, C₁-C₁₀-alkyl esters of naphthalene-1,4-dicarboxylic acid, C₁-C₁₀-alkenyl esters of naphthalene-1,4-dicarboxylic acid, naphthalene-2,6-dicarboxylic acid, naphthalene-2,6-dicarboxylic anhydride, naphthalene-2,6-dicarbonyl difluoride, naphthalene-2,6-dicarbonyl dichloride, naphthalene-2,6-dicarbonyl dibromide, polyanhydrides of naphthalene-2,6-dicarboxylic acid, C₁-C₁₀-alkyl esters of naphthalene-2,6-dicarboxylic acid, C₁-C₁₀-alkenyl esters of naphthalene-2,6-dicarboxylic acid, anthracene-2,6-dicarboxylic acid, anthracene-2,6-dicarboxylic anhydride, anthracene-2,6-dicarbonyl difluoride, anthracene-2,6-dicarbonyl dichloride, anthracene-2,6-dicarbonyl dibromide, polyanhydrides of anthracene-2,6-dicarboxylic acid, C₁-C₁₀-alkyl esters of anthracene-2, 6-dicarboxylic acid, C₁-C₁₀-alkenyl esters of anthracene-2,6-dicarboxylic acid, anthracene-9,10-dicarboxylic acid, anthracene-9,10-dicarboxylic anhydride, anthracene-9,10-dicarbonyl difluoride, anthracene-9,10-dicarbonyl dichloride, anthracene-9,10-dicarbonyl dibromide, polyanhydrides of anthracene-9,10-dicarboxylic acid, C₁-C₁₀-alkyl esters of anthracene-9,10-dicarboxylic acid, C₁-C₁₀-alkenyl esters of anthracene-9,10-dicarboxylic acid, biphenyl-4,4'-dicarboxylic acid, biphenyl-4,4'-dicarboxylic anhydride, biphenyl-4,4'-dicarbonyl difluoride, biphenyl-4,4'-dicarbonyl dichloride, biphenyl-4,4'-dicarbonyl dibromide, polyanhydrides of biphenyl-4,4'-dicarboxylicacid, C₁-C₁₀-alkyl esters of biphenyl-4,4 '-dicarboxylicacid, C₁-C₁₀-alkenyl esters of biphenyl-4,4'-dicarboxylic acid, diphenylmethane-4,4'-dicarboxylic acid, diphenylmethane-4,4'-dicarboxylic anhydride, diphenylmethane-4,4'-dicarbonyl difluoride, diphenylmethane-4,4'-dicarbonyl dichloride, diphenylmethane-4,4'-dicarbonyl dibromide, polyanhydrides of diphenylmethane-4,4'-dicarboxylic acid, C₁-C₁₀-alkyl esters of diphenylmethane-4, 4 '- dicarboxylic acid, C₁-C₁₀-alkenyl esters of diphenylmethane-4,4'-dicarboxylic acid, diphenyl ether 4,4'-dicarboxylic acid, diphenyl ether 4,4'-dicarboxylic anhydride, diphenyl ether 4,4'-dicarbonyl difluoride, diphenyl ether 4,4'-dicarbonyl dichloride, diphenyl ether 4,4'-dicarbonyl dibromide, polyanhydrides of diphenyl ether 4,4'-dicarboxylic acid, C₁-C₁₀-alkyl esters of diphenyl ether 4, 4'-dicarboxylicacid, C₁-C₁₀-alkenyl esters of diphenyl ether 4,4'-dicarboxylic acid, diphenyl thioether 4,4'-dicarboxylic acid, diphenyl thioether 4,4'-dicarboxylic anhydride, diphenyl thioether 4,4'-dicarbonyl difluoride, diphenyl thioether 4,4'-dicarbonyl dichloride, diphenyl thioether 4,4'-dicarbonyl dibromide, polyanhydrides of diphenyl thioether 4,4'-dicarboxylic acid, C₁-C₁₀-alkyl esters of diphenyl thioether 4,4 '-dicarboxylic acid, C₁-C₁₀-alkenyl esters of diphenyl thioether 4,4'-dicarboxylic acid, diphenyl sulfone 4,4'-dicarboxylic acid, diphenyl sulfone 4,4'-dicarboxylic anhydride, diphenyl sulfone 4,4'-dicarbonyl difluoride, diphenyl sulfone 4,4'-dicarbonyl dichloride, diphenyl sulfone 4,4'-dicarbonyl dibromide, polyanhydrides of diphenyl sulfone 4,4'-dicarboxylic acid, C₁-C₁₀-alkyl esters of diphenyl sulfone 4,4'-dicarboxylic acid, C₁-C₁₀-alkenyl esters of diphenyl sulfone 4,4'-dicarboxylic acid, benzophenone-4,4'-dicarboxylic acid, benzophenone-4,4'-dicarboxylic anhydride, benzophenone-4,4'-dicarbonyl difluoride, benzophenone-4,4'-dicarbonyl dichloride, benzophenone-4,4'-dicarbonyl dibromide, polyanhydrides of benzophenone-4,4'-dicarboxylic acid, C₁-C₁₀-alkyl esters of benzophenone-4,4'-dicarboxylic acid, C₁-C₁₀-alkenyl esters of benzophenone-4,4'-dicarboxylic acid, pyridine-2,5-dicarboxylic acid, pyridine-2,5-dicarboxylic anhydride, pyridine-2,5-dicarbonyl difluoride, pyridine-2,5-dicarbonyl dichloride, pyridine-2,5-dicarbonyl dibromide, polyanhydrides of pyridine-2,5-dicarboxylic acid, C₁-C₁₀-alkyl esters of pyridine-2,5-dicarboxylic acid, C₁-C₁₀-alkenyl esters of pyridine-2,5-dicarboxylic acid, pyrimidine-4,6-dicarboxylic acid, pyrimidine-4,6-dicarboxylic anhydride, pyrimidine-4,6-dicarbonyl difluoride, pyrimidine-4,6-dicarbonyl dichloride, pyrimidine-4,6-dicarbonyl dibromide, polyanhydrides of pyrimidine-4,6-dicarboxylic acid, C₁-C₁₀-alkyl esters of pyrimidine-4,6-dicarboxylic acid, C₁-C₁₀-alkenyl esters pyrimidine-4,6-dicarboxylic acid, furan-2,5-dicarboxylic acid, furan-2,5-dicarboxylic anhydride, furan-2,5-dicarbonyl difluoride, furan-2,5-dicarbonyl dichloride, furan-2,5-dicarbonyl dibromide, polyanhydrides of furan-2,5-dicarboxylic acid, C₁-C₁₀-alkyl esters of furan-2, 5-dicarboxylic acid, C₁-C₁₀-alkenyl esters of furan-2, 5-dicarboxylic acid, thiophene-2,5-dicarboxylic acid, thiophene-2,5-dicarboxylic anhydride, thiophene-2,5-dicarbonyl difluoride, thiophene-2,5-dicarbonyl dichloride, thiophene-2,5-dicarbonyl dibromide, polyanhydrides of thiophene-2,5-dicarboxylic acid, C₁-C₁₀-alkyl esters of thiophene-2,5-dicarboxylic acid and C₁-C₁₀-alkenyl esters of thiophene-2,5-dicarboxylic acid.

4. The method according to any of claims 1 to 3, wherein component (b) is selected from the group consisting of 4,6-diamino-1,3-dihydroxybenzene, 4,6-diamino-1,3-dithiobenzene, 4,6-diamino-3-hydroxy-1-thiobenzene, 2,5-diamino-l,4-dihydroxybenzene, 2,5-diamino-1,4-dithiobenzene, 2,5-diamino-4-hydroxy-1-thiobenzene, 4,6-diamino-1,3-dihydroxybenzene dihydrochloride, 4,6-diamino-1,3-dithiobenzene dihydrochloride, 4,6-diamino-3-hydroxy-1-thiobenzene dihydrochloride, 2,5-diamino-1,4-dihydroxybenzene dihydrochloride, 2,5-diamino-1,4-dithiobenzene dihydrochloride, 2,5-diamino-4-hydroxy-1-thiobenzene dihydrochloride, 3,3-diamino-4,4'-dihydroxybiphenyl, 3,3'-diamino-4,4'-dihydroxybiphenyl dihydrochloride, 4,4'-diamino-3,3'-dihydroxybiphenyl, 4,4'-diamino-3,3'-dihydroxybiphenyl dihydrochloride, 3,3'-diamino-4,4'-dihydroxydiphenylmethane, 3,3'-diamino-4,4'-dihydroxydiphenylmethane dihydrochloride, 4,4'-diamino-3,3'-dihydroxydiphenylmethane and 4,4'-diamino-3, 3'-dihydroxydiphenylmethane dihydrochloride.

5. The method according to any of claims 1 to 4, wherein the reaction mixture (R_{G}) comprises 5 to 25% by weight of component (a), 5 to 25% by weight of component (b) and 50 to 90% by weight of component (c), based on the total weight of the reaction mixture (R_{G}) .

6. The method according to any of claims 1 to 5, wherein the at least one ionic liquid (IL) has the general formula (III):
[C]ₙ⁺ [A]ⁿ⁻ (III)
in which
n = 1, 2, 3 or 4;
the cation [C] ₙ⁺ is at least one cation selected from the group consisting of unsubstituted or at least monosubstituted imidazolium cations, imidazolinium cations, imidazolidinium cations, quaternary ammonium cations, quaternary phosphonium cations, pyrazolium cations, pyrazolinium cations, pyridinium cations, pyridazinium cations, pyrimidinium cations, pyrazinium cations, pyrrolidinium cations, guanidinium cations, thiazolium cations, oxazolium cations, triazolium cations, the 1,8-diazabicyclo[5.4.0]undec-7-enium cation, the 1,8-diazabicyclo[4.3.0]non-5-enium cation and oligomers or polymers comprising these cations,
wherein the substituents are selected from the group consisting of linear or branched -C₁-C₁₈-alkyl, -C₅-C₁₂-cycloalkyl and -C₆-C₁₄-aryl;
the anion [A] ⁿ⁻ is selected from the group consisting of halide-containing anions, cyanide, thiocyanate, cyanate, isocyanate, nitrite, nitrate, unsubstituted or at least monosubstituted sulfates, sulfites, sulfonates, carboxylates, borates, boronates, carbonates, carbonate esters, amides, carboximidates, sulfonyl imidates, bis(sulfonyl) imidates, alkoxides and aryl oxides, wherein the substituents are selected from the group consisting of linear or branched -C₁-C₁₈-alkyl, -C₅-C₁₂-cycloalkyl and -C₆-C₁₄-aryl.

7. The method according to claim 6, wherein the at least one ionic liquid (IL) comprises at least one imidazolium cation of the general formula (IV) as cation [C] ₙ⁺: 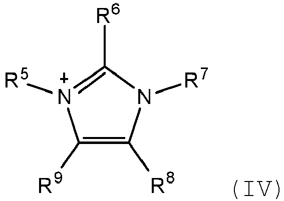 in which
R⁵, R⁶, R⁷, R⁸, R⁹ are each independently selected from the group consisting of -H, linear or branched -C₁-C₁₈-alkyl, -C₅-C₁₂-cycloalkyl and -C₆-C₁₄-aryl.

8. The method according to claim 6 or 7, wherein the cation [C] ₙ⁺ is at least one cation selected from the group consisting of 1-methylimidazolium, 1-methyl-2-ethylimidazolium, 1-methyl-3-octylimidazolium, 1,2-dimethylimidazolium, 1,3-dimethylimidazolium, 2,3-dimethylimidazolium, 3,4-dimethylimidazolium, 1,2,3-trimethylimidazolium, 1,3,4-trimethylimidazolium, 1,3,4,5-tetramethylimidazolium, 1-ethylimidazolium, 1-ethyl-2-methylimidazolium, 1-ethyl-3-methylimidazolium, 1-ethyl-2,3-dimethylimidazolium, 2-ethyl-3,4-dimethylimidazolium, 1-propylimidazolium, 1-propyl-2-methylimidazolium, 1-propyl-3-methylimidazolium, 1-propyl-2,3-dimethylimidazolium, 1,3-dipropylimidazolium, 1-butylimidazolium, 1-butyl-2-methylimidazolium, 1-butyl-3-methylimidazolium, 1-butyl-4-methylimidazolium, 1-butyl-2,3-dimethylimidazolium, 1-butyl-3,4-dimethylimidazolium, 1-butyl-3,4,5-trimethylimidazolium, 1-butyl-2-ethylimidazolium, 1-butyl-3-ethylimidazolium, 1-butyl-2-ethyl-5-methylimidazolium, 1,3-dibutylimidazolium, 1,3-dibutyl-2-methylimidazolium, 1-pentylimidazolium, 1-pentyl-2-methylimidazolium, 1-pentyl-3-methylimidazolium, 1-pentyl-2,3-dimethylimidazolium, 1-hexylimidazolium, 1-hexyl-2-methylimidazolium, 1-hexyl-3-methylimidazolium, 1-hexyl-2,3-dimethylimidazolium, 1-octyl-2-methylimidazolium, 1-octyl-3-methylimidazolium, 1-decyl-3-methylimidazolium, 1-dodecyl-3-methylimidazolium, 1-tetradecyl-3-methylimidazolium, 1-hexadecyl-3-methylimidazolium and 1-benzyl-3-methylimidazolium.

9. The method according to any of claims 1 to 8, wherein the at least one ionic liquid (IL) is selected from the group consisting of 1-methylimidazolium chloride, 1-ethylimidazolium chloride, 1-ethyl-3-methylimidazolium chloride, 1-butylimidazolium chloride, 1-butyl-3-methylimidazolium chloride, 1,3-dibutylimidazolium chloride, 1-methylimidazolium tetrachloroaluminate, 1-ethylimidazolium tetrachloroaluminate, 1-ethyl-3-methylimidazolium tetrachloroaluminate, 1,3-diethylimidazolium tetrachloroaluminate, 1-butylimidazolium tetrachloroaluminate, 1-butyl-3-methylimidazolium tetrachloroaluminate, 1,3-dibutylimidazolium tetrachloroaluminate, 1-methylimidazolium hydrogensulfate, 1-ethylimidazolium hydrogensulfate, 1-butylimidazolium hydrogensulfate, 1-butyl-3-methylimidazolium hydrogensulfate, 1-methylimidazolium methanesulfonate, 1,3-dimethylimidazolium methanesulfonate, 1-ethylimidazolium methanesulfonate, 1-ethyl-3-methylimidazolium methanesulfonate, 1,3-diethylimidazolium methanesulfonate, 1-butylimidazolium methanesulfonate, 1-butyl-3-methylimidazolium methanesulfonate, 1,3-dibutylimidazolium methanesulfonate, 1-methylimidazolium acetate, 1,3-dimethylimidazolium acetate, 1-ethylimidazolium acetate, 1-ethyl-3-methylimidazolium acetate, 1,3-diethylimidazolium acetate, 1-butylimidazolium acetate, 1-butyl-3-methylimidazolium acetate, 1,3-dibutylimidazolium acetate, 1,3-dimethylimidazolium methylcarbonate, 1-ethyl-3-methylimidazolium methylcarbonate, 1-butyl-3-methylimidazolium methylcarbonate and 1-butyl-2,3-dimethylimidazolium methylcarbonate.

10. The method according to any of claims 1 to 9, wherein the reaction mixture (R_{G}) is reacted in the presence of at least one basic compound selected from the group consisting of lithium hydroxide, sodium hydroxide, potassium hydroxide, magnesium hydroxide, calcium hydroxide, barium hydroxide, lithium carbonate, sodium carbonate, potassium carbonate, magnesium carbonate, calcium carbonate, lithium hydride, sodium hydride, potassium hydride, magnesium hydride and calcium hydride.

11. The method according to any of claims 1 to 10, wherein at least 40% by weight of the polybenzazole polymer (P) is dissolved in the at least one ionic liquid (IL), based on the total weight of the polybenzazole polymer (P) in the product mixture (P_{G}).

12. A polybenzazole polymer (P) produced by the method according to any of claims 1 to 11.

13. The polybenzazole polymer (P) according to claim 12, wherein the content of sulfur-containing or phosphorus-containing acids in the polybenzazole polymer (P) is less than 1000 ppm.

14. The use of the polybenzazole polymer (P) according to claim 11 or 12 as fiber material.

## Revendications

1. Procédé pour la préparation d'un polymère de polybenzazole (P) par transformation d'un mélange réactionnel (R_{G})₁ qui contient les composants suivants :
(a) au moins un composé dicarboxyle aromatique de formule générale (I) : 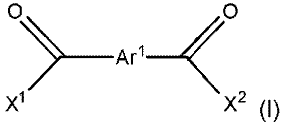 dans laquelle
Ar¹ est choisi dans le groupe constitué par le phénylène, le naphtalènediyle, l'anthracènediyle, le biphényldiyle, le diphénylméthanediyle, le diphénylétherdiyle, le diphénylthioétherdiyle, la diphénylsulfonediyle, la benzophénonediyle, la pyridinediyle, la pyrimidinediyle, le furannnediyle et le thiophènediyle, non substitués ou au moins monosubstitués,
les substituants étant choisis dans le groupe constitué par -F, -Cl, -Br, -OR¹ et -C₁-C₁₀-alkyle,
R¹ représentant -H ou -C₁-C₁₀-alkyle ;
X¹, X² sont choisis, indépendamment l'un de l'autre, dans le groupe constitué par -OR², -F, -Cl et -Br,
R² représentant -H, -C₁-C₁₀-alkyle, -C₁-C₁₀-alcényle ou un motif récurrent de formule générale (Ia) : 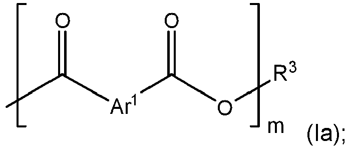 dans laquelle
m représente un nombre naturel de 1 à 50 et
R³ représente -H, -C₁-C₁₀-alkyle ou -C₁-C₁₀-alcényle ;
(b) au moins un composé diamino aromatique de formule générale (IIa), (IIb), (IIc) et/ou (IId) : 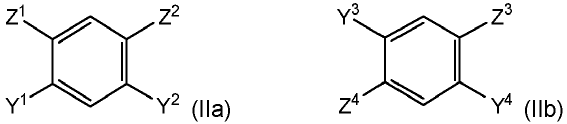 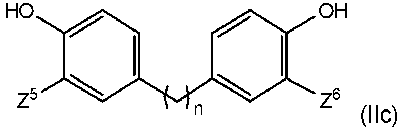 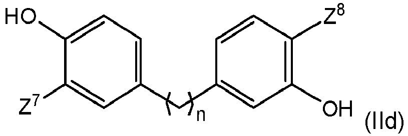 dans lesquelles
n vaut 0 ou 1,
Y¹, Y², Y³, Y⁴ représentent, indépendamment les uns des autres, -H, -OR⁴ ou -SR⁴,
R⁴ étant choisi dans le groupe constitué par -H, -C₁-C₁₀-alkyle, triméthylsilyle, tert-butyldiméthylsilyle, acétyle et tert-butyloxycarbonyle et
au plus un des radicaux Y¹ et Y² représentant -H et
au plus un des radicaux Y³ et Y⁴ représentant -H ;
Z¹, Z², Z³, Z⁴, Z⁵, Z⁶, Z⁷, Z⁸ représentent, indépendamment les uns des autres, -NH₂ ou -NH₃⁺Q⁻,
Q⁻ représentant un équivalent anionique choisi dans le groupe constitué par F⁻, Cl⁻, Br⁻, I⁻, HSO₄⁻, SO₄²⁻, H₃C-SO₃⁻, p-H₃C-C₆H₄-SO₃⁻ et NO₃⁻ ;
et
(c) au moins un liquide ionique (IL) ;
avec obtention d'un mélange produit (P_{G}), qui contient le polymère de polybenzazole (P) et ledit au moins un liquide ionique (IL).

2. Procédé selon la revendication 1, **caractérisé en ce que** Ar¹ est choisi dans le groupe constitué par le 1,3-phénylène, le 1,4-phénylène, le naphtalène-1,4-diyle, le naphtalène-2,6-diyle, l'anthracène-2,6-diyle, l'anthracène-9,10-diyle, le biphényl-4,4'-diyle, le diphénylméthane-4,4'-diyle, le diphényléther-4,4'-diyle, le diphénylthioéther-4,4'-diyle, la diphénylsulfone-4,4'-diyle, la benzophénone-4,4'-diyle, la pyridine-2,5-diyle, la pyrimidine-4,6-diyle, le furannne-2,5-diyle et le thiophène-2,5-diyle, non substitués ou au moins monosubstitués.

3. Procédé selon la revendication 1 ou 2, **caractérisé en ce que** le composant (a) est choisi dans le groupe constitué par l'acide isophtalique, l'anhydride de l'acide isophtalique, le difluorure de l'acide isophtalique, le dichlorure de l'acide isophtalique, le dibromure de l'acide isophtalique, les polyanhydrides de l'acide isophtalique, les esters C₁-C₁₀-alkyliques de l'acide isophtalique, les esters C₁-C₁₀-alcényliques de l'acide isophtalique, l'acide téréphtalique, l'anhydride de l'acide téréphtalique, le difluorure de l'acide téréphtalique, le dichlorure de l'acide téréphtalique, le dibromure de l'acide téréphtalique, les polyanhydrides de l'acide téréphtalique, les esters C₁-C₁₀-alkyliques de l'acide téréphtalique, les esters C₁-C₁₀-alcényliques de l'acide téréphtalique, l'acide naphtalène-1,4-dicarboxylique, l'anhydride de l'acide naphtalène-1,4-dicarboxylique, le difluorure de l'acide naphtalène-1,4-dicarboxylique, le dichlorure de l'acide naphtalène-1,4-dicarboxylique, le dibromure de l'acide naphtalène-1,4-dicarboxylique, les polyanhydrides de l'acide naphtalène-1,4-dicarboxylique, les esters C₁-C₁₀-alkyliques de l'acide naphtalène-1,4-dicarboxylique, les esters C₁-C₁₀-alcényliques de l'acide naphtalène-1,4-dicarboxylique, l'acide naphtalène-2,6-dicarboxylique, l'anhydride de l'acide naphtalène-2,6-dicarboxylique, le difluorure de l'acide naphtalène-2,6-dicarboxylique, le dichlorure de l'acide naphtalène-2,6-dicarboxylique, le dibromure de l'acide naphtalène-2,6-dicarboxylique, les polyanhydrides de l'acide naphtalène-2,6-dicarboxylique, les esters C₁-C₁₀-alkyliques de l'acide naphtalène-2,6-dicarboxylique, les esters C₁-C₁₀-alcényliques de l'acide naphtalène-2,6-dicarboxylique, l'acide anthracène-2,6-dicarboxylique, l'anhydride de l'acide anthracène-2,6-dicarboxylique, le difluorure de l'acide anthracène-2,6-dicarboxylique, le dichlorure de l'acide anthracène-2,6-dicarboxylique, le dibromure de l'acide anthracène-2,6-dicarboxylique, les polyanhydrides de l'acide anthracène-2,6-dicarboxylique, les esters C₁-C₁₀-alkyliques de l'acide anthracène-2,6-dicarboxylique, les esters C₁-C₁₀-alcényliques de l'acide anthracène-2,6-dicarboxylique, l'acide anthracène-9,10-dicarboxylique, l'anhydride de l'acide anthracène-9,10-dicarboxylique, le difluorure de l'acide anthracène-9,10-dicarboxylique, le dichlorure de l'acide anthracène-9,10-dicarboxylique, le dibromure de l'acide anthracène-9,10-dicarboxylique, les polyanhydrides de l'acide anthracène-9,10-dicarboxylique, les esters C₁-C₁₀-alkyliques de l'acide anthracène-9,10-dicarboxylique, les esters C₁-C₁₀-alcényliques de l'acide anthracène-9,10-dicarboxylique, l'acide biphényl-4,4'-dicarboxylique, l'anhydride de l'acide biphényl-4,4'-dicarboxylique, le difluorure de l'acide biphényl-4,4'-dicarboxylique, le dichlorure de l'acide biphényl-4,4'-dicarboxylique, le dibromure de l'acide biphényl-4,4'-dicarboxylique, les polyanhydrides de l'acide biphényl-4,4'-dicarboxylique, les esters C₁-C₁₀-alkyliques de l'acide biphényl-4,4'-dicarboxylique, les esters C₁-C₁₀-alcényliques de l'acide biphényl-4,4'-dicarboxylique, l'acide diphénylméthane-4,4'-dicarboxylique, l'anhydride de l'acide diphénylméthane-4,4'-dicarboxylique, le difluorure de l'acide diphénylméthane-4,4'-dicarboxylique, le dichlorure de l'acide diphénylméthane-4,4'-dicarboxylique, le dibromure de l'acide diphénylméthane-4,4'-dicarboxylique, les polyanhydrides de l'acide diphénylméthane-4,4'-dicarboxylique, les esters C₁-C₁₀-alkyliques de l'acide diphénylméthane-4,4'-dicarboxylique, les esters C₁-C₁₀-alcényliques de l'acide diphénylméthane-4,4'-dicarboxylique, l'acide diphényléther-4,4'-dicarboxylique, l'anhydride de l'acide diphényléther-4,4'-dicarboxylique, le difluorure de l'acide diphényléther-4,4'-dicarboxylique, le dichlorure de l'acide diphényléther-4,4'-dicarboxylique, le dibromure de l'acide diphényléther-4,4'-dicarboxylique, les polyanhydrides de l'acide diphényléther-4,4'-dicarboxylique, les esters C₁-C₁₀-alkyliques de l'acide diphényléther-4,4'-dicarboxylique, les esters C₁-C₁₀-alcényliques de l'acide diphényléther-4,4'-dicarboxylique, l'acide diphénylthioéther-4,4'-dicarboxylique, l'anhydride de l'acide diphénylthioéther-4,4'-dicarboxylique, le difluorure de l'acide diphénylthioéther-4,4'-dicarboxylique, le dichlorure de l'acide diphénylthioéther-4,4'-dicarboxylique, le dibromure de l'acide diphénylthioéther-4,4'-dicarboxylique, les polyanhydrides de l'acide diphénylthioéther-4,4'-dicarboxylique, les esters C₁-C₁₀-alkyliques de l'acide diphénylthioéther-4,4'-dicarboxylique, les esters C₁-C₁₀-alcényliques de l'acide diphénylthioéther-4,4'-dicarboxylique, l'acide diphénylsulfone-4,4'-dicarboxylique, l'anhydride de l'acide diphénylsulfone-4,4'-dicarboxylique, le difluorure de l'acide diphénylsulfone-4,4'-dicarboxylique, le dichlorure de l'acide diphénylsulfone-4,4'-dicarboxylique, le dibromure de l'acide diphénylsulfone-4,4'-dicarboxylique, les polyanhydrides de l'acide diphénylsulfone-4,4'-dicarboxylique, les esters C₁-C₁₀-alkyliques de l'acide diphénylsulfone-4,4'-dicarboxylique, les esters C₁-C₁₀-alcényliques de l'acide diphénylsulfone-4,4'-dicarboxylique, l'acide benzophénone-4,4'-dicarboxylique, l'anhydride de l'acide benzophénone-4,4'-dicarboxylique, le difluorure de l'acide benzophénone-4,4'-dicarboxylique, le dichlorure de l'acide benzophénone-4,4'-dicarboxylique, le dibromure de l'acide benzophénone-4,4'-dicarboxylique, les polyanhydrides de l'acide benzophénone-4,4'-dicarboxylique, les esters C₁-C₁₀-alkyliques de l'acide benzophénone-4,4'-dicarboxylique, les esters C₁-C₁₀-alcényliques de l'acide benzophénone-4,4'-dicarboxylique, l'acide pyridine-2,5-dicarboxylique, l'anhydride de l'acide pyridine-2,5-dicarboxylique, le difluorure de l'acide pyridine-2,5-dicarboxylique, le dichlorure de l'acide pyridine-2,5-dicarboxylique, le dibromure de l'acide pyridine-2,5-dicarboxylique, les polyanhydrides de l'acide pyridine-2,5-dicarboxylique, les esters C₁-C₁₀-alkyliques de l'acide pyridine-2,5-dicarboxylique, les esters C₁-C₁₀-alcényliques de l'acide pyridine-2,5-dicarboxylique, l'acide pyrimidine-4,6-dicarboxylique, l'anhydride de l'acide pyrimidine-4,6-dicarboxylique, le difluorure de l'acide pyrimidine-4,6-dicarboxylique, le dichlorure de l'acide pyrimidine-4,6-dicarboxylique, le dibromure de l'acide pyrimidine-4,6-dicarboxylique, les polyanhydrides de l'acide pyrimidine-4,6-dicarboxylique, les esters C₁-C₁₀-alkyliques de l'acide pyrimidine-4,6-dicarboxylique, les esters C₁-C₁₀-alcényliques de l'acide pyrimidine-4,6-dicarboxylique, l'acide furannne-2,5-dicarboxylique, l'anhydride de l'acide furannne-2,5-dicarboxylique, le difluorure de l'acide furannne-2,5-dicarboxylique, le dichlorure de l'acide furannne-2,5-dicarboxylique, le dibromure de l'acide furannne-2,5-dicarboxylique, les polyanhydrides de l'acide furannne-2,5-dicarboxylique, les esters C₁-C₁₀-alkyliques de l'acide furannne-2,5-dicarboxylique, les esters C₁-C₁₀-alcényliques de l'acide furannne-2,5-dicarboxylique, l'acide thiophène-2,5-dicarboxylique, l'anhydride de l'acide thiophène-2,5-dicarboxylique, le difluorure de l'acide thiophène-2,5-dicarboxylique, le dichlorure de l'acide thiophène-2,5-dicarboxylique, le dibromure de l'acide thiophène-2,5-dicarboxylique, les polyanhydrides de l'acide thiophène-2,5-dicarboxylique, les esters C₁-C₁₀-alkyliques de l'acide thiophène-2,5-dicarboxylique et les esters C₁-C₁₀-alcényliques de l'acide thiophène-2,5-dicarboxylique.

4. Procédé selon l'une quelconque des revendications 1 à 3, **caractérisé en ce que** le composant (b) est choisi dans le groupe constitué par le 4,6-diamino-1,3-dihydroxybenzène, le 4,6-diamino-1,3-dithiobenzène, le 4,6-diamino-3-hydroxy-1-thiobenzène, le 2,5-diamino-1,4-dihydroxybenzène, le 2,5-diamino-1,4-dithiobenzène, le 2,5-diamino-4-hydroxy-1-thiobenzène, le dichlorhydrate de 4,6-diamino-1,3-dihydroxybenzène, le dichlorhydrate de 4,6-diamino-1,3-dithiobenzène, le dichlorhydrate de 4,6-diamino-3-hydroxy-1-thiobenzène, le dichlorhydrate de 2,5-diamino-1,4-dihydroxybenzène, le dichlorhydrate de 2,5-diamino-1,4-dithiobenzène, le dichlorhydrate de 2,5-diamino-4-hydroxy-1-thiobenzène, le 3,3'-diamino-4,4'-dihydroxybiphényle, le dichlorhydrate de 3,3'-diamino-4,4'-dihydroxybiphényle, le 4,4'-diamino-3,3'-dihydroxybiphényle, le dichlorhydrate de 4,4'-diamino-3,3'-dihydroxybiphényle, le 3,3'-diamino-4,4'-dihydroxydiphénylméthane, le dichlorhydrate de 3,3'-diamino-4,4'-dihydroxydiphénylméthane, le 4,4'-diamino-3,3'-dihydroxydiphénylméthane et le dichlorhydrate de 4,4'-diamino-3,3'-dihydroxydiphénylméthane.

5. Procédé selon l'une quelconque des revendications 1 à 4, **caractérisé en ce que** le mélange réactionnel (R_{G}) contient 5 à 25% en poids du composant (a), 5 à 25% en poids du composant (b) et 50 à 90% en poids du composant (c), par rapport au poids total du mélange réactionnel (R_{G}) .

6. Procédé selon l'une quelconque des revendications 1 à 5, **caractérisé en ce que** ledit au moins un liquide ionique (IL) présente la formule générale (III) :
[C]ₙ⁺ [A]ₙ⁻ (III)
dans laquelle
n = 1, 2, 3 ou 4 ;
le cation [C]ₙ⁺ est au moins un cation choisi dans le groupe constitué par les cations imidazolium, les cations imidazolinium, les cations imidazolidinium, les cations ammonium quaternaire, les cations phosphonium quaternaire, les cations pyrazolium, les cations pyrazolinium, les cations pyridinium, les cations pyridazinium, les cations pyrimidinium, les cations pyrazinium, les cations pyrrolidinium, les cations guanidinium, les cations thiazolium, les cations oxazolium, les cations triazolium, non substitués ou au moins monosubstitués, le cation 1,8-diazabicyclo[5.4.0]undéc-7-énium, le cation 1,8-diazabicyclo[4.3.0]non-5-énium et les oligomères ou polymères qui contiennent ces cations, les substituants étant choisis dans le groupe constitué par -C₁-C₁₈-alkyle linéaire ou ramifié, -C₅-C₁₂-cycloalkyle et -C₆-C₁₄-aryle ;
l'anion [A]ⁿ⁻ est choisi dans le groupe constitué par les anions contenant de l'halogène, le cyanure, le thiocyanate, le cyanate, l'isocyanate, le nitrite, le nitrate, les sulfates, les sulfites, les sulfonates, les carboxylates, les borates, les boronates, les carbonates, les esters de l'acide carbonique, les amides, les imidates d'acide carboxylique, les imidates de sulfonyle, les imidates de bis(sulfonyle), les alcoxydes et les aryloxydes, non substitués ou au moins monosubstitués,
les substituants étant choisis dans le groupe constitué par -C₁-C₁₈-alkyle linéaire ou ramifié, -C₅-C₁₂-cycloalkyle et -C₆-C₁₄-aryle.

7. Procédé selon la revendication 6, **caractérisé en ce que** ledit au moins un liquide ionique (IL) contient, comme cation [C]ₙ⁺, au moins un cation imidazolium de formule générale (IV) : 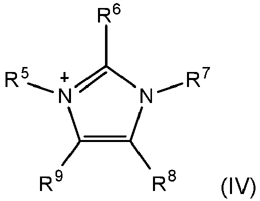 dans laquelle
R⁵, R⁶, R⁷, R⁸, R⁹ sont choisis, indépendamment les uns des autres, dans le groupe constitué par -H, -C₁-C₁₈-alkyle linéaire ou ramifié, -C₅-C₁₂-cycloalkyle et -C₆-C₁₄aryle.

8. Procédé selon la revendication 6 ou 7, **caractérisé en ce que** le cation [C]ₙ⁺ est au moins un cation choisi dans le groupe constitué par le 1-méthylimidazolium, le 1-méthyl-2-éthylimidazolium, le 1-méthyl-3-octylimidazolium, le 1,2-diméthylimidazolium, le 1,3-diméthylimidazolium, le 2,3-diméthylimidazolium, le 3,4-diméthylimidazolium, le 1,2,3-triméthylimidazolium, le 1,3,4-triméthylimidazolium, le 1,3,4,5-tétraméthylimidazolium, le 1-éthylimidazolium, le 1-éthyl-2-méthylimidazolium, le 1-éthyl-3-méthylimidazolium, le 1-éthyl-2,3-diméthylimidazolium, le 2-éthyl-3,4-diméthylimidazolium, le 1-propylimidazolium, le 1-propyl-2-méthylimidazolium, le 1-propyl-3-méthylimidazolium, le 1-propyl-2,3-diméthylimidazolium, le 1,3-dipropylimidazolium, le 1-butylimidazolium, le 1-butyl-2-méthylimidazolium, le 1-butyl-3-méthylimidazolium, le 1-butyl-4-méthylimidazolium, le 1-butyl-2,3-diméthylimidazolium, le 1-butyl-3,4-diméthylimidazolium, le 1-butyl-3,4,5-triméthylimidazolium, le 1-butyl-2-éthylimidazolium, le 1-butyl-3-éthylimidazolium, le 1-butyl-2-éthyl-5-méthylimidazolium, le 1,3-dibutylimidazolium, le 1,3-dibutyl-2-méthylimidazolium, le 1-pentylimidazolium, le 1-pentyl-2-méthylimidazolium, le 1-pentyl-3-méthylimidazolium, le 1-pentyl-2,3-diméthylimidazolium, le 1-hexylimidazolium, le 1-hexyl-2-méthylimidazolium, le 1-hexyl-3-méthylimidazolium, le 1-hexyl-2,3-diméthylimidazolium, le 1-octyl-2-méthylimidazolium, le 1-octyl-3-méthylimidazolium, le 1-décyl-3-méthylimidazolium, le 1-dodécyl-3-méthylimidazolium, le 1-tétradécyl-3-méthylimidazolium, le 1-hexadécyl-3-méthylimidazolium et le 1-benzyl-3-méthylimidazolium.

9. Procédé selon l'une quelconque des revendications 1 à 8, **caractérisé en ce que** ledit au moins un liquide ionique (IL) est choisi dans le groupe constitué par le chlorure de 1-méthylimidazolium, le chlorure de 1-éthylimidazolium, le chlorure de 1-éthyl-3-méthylimidazolium, le chlorure de 1-butylimidazolium, le chlorure de 1-butyl-3-méthylimidazolium, le chlorure de 1,3-dibutylimidazolium, le tétrachloroaluminate de 1-méthylimidazolium, le tétrachloroaluminate de 1-éthylimidazolium, le tétrachloroaluminate de 1-éthyl-3-méthylimidazolium, le tétrachloroaluminate de 1,3-diéthylimidazolium, le tétrachloroaluminate de 1-butylimidazolium, le tétrachloroaluminate de 1-butyl-3-méthylimidazolium, le tétrachloroaluminate de 1,3-dibutylimidazolium, l'hydrogénosulfate de 1-méthylimidazolium, l'hydrogénosulfate de 1-éthylimidazolium, l'hydrogénosulfate de 1-butylimidazolium, l'hydrogénosulfate de 1-butyl-3-méthylimidazolium, le méthanesulfonate de 1-méthylimidazolium, le méthanesulfonate de 1,3-diméthylimidazolium, le méthanesulfonate de 1-éthylimidazolium, le méthanesulfonate de 1-éthyl-3-méthylimidazolium, le méthanesulfonate de 1,3-diéthylimidazolium, le méthanesulfonate de 1-butylimidazolium, le méthanesulfonate de 1-butyl-3-méthylimidazolium, le méthanesulfonate de 1,3-dibutylimidazolium, l'acétate de 1-méthylimidazolium, l'acétate de 1,3-diméthylimidazolium, l'acétate de 1-éthylimidazolium, l'acétate de 1-éthyl-3-méthylimidazolium, l'acétate de 1,3-diéthylimidazolium, l'acétate de 1-butylimidazolium, l'acétate de 1-butyl-3-méthylimidazolium, l'acétate de 1,3-dibutylimidazolium, le méthylcarbonate de 1,3-diméthylimidazolium, le méthylcarbonate de 1-éthyl-3-méthylimidazolium, le méthylcarbonate de 1-butyl-3-méthylimidazolium et le méthylcarbonate de 1-butyl-2,3-diméthylimidazolium.

10. Procédé selon l'une quelconque des revendications 1 à 9, **caractérisé en ce que** la transformation du mélange réactionnel (R_{G}) a lieu en présence d'au moins un composé basique qui est choisi dans le groupe constitué par l'hydroxyde de lithium, l'hydroxyde de sodium, l'hydroxyde de potassium, l'hydroxyde de magnésium, l'hydroxyde de calcium, l'hydroxyde de baryum, le carbonate de lithium, le carbonate de sodium, le carbonate de potassium, le carbonate de magnésium, le carbonate de calcium, l'hydrure de lithium, l'hydrure de sodium, l'hydrure de potassium, l'hydrure de magnésium et l'hydrure de calcium.

11. Procédé selon l'une quelconque des revendications 1 à 10, **caractérisé**
**en ce qu'**au moins 40% en poids du polymère de polybenzazole (P) sont dissous dans ledit au moins un liquide ionique (IL), par rapport au poids total du polymère de polybenzazole (P) dans le mélange produit (P_{G}).

12. Polymère de polybenzazole (P), préparé selon le procédé selon l'une quelconque des revendications 1 à 11.

13. Polymère de polybenzazole (P) selon la revendication 12, **caractérisé en ce que** la teneur en acides contenant du soufre ou contenant du phosphore dans le polymère de polybenzazole (P) est inférieure à 1000 ppm.

14. Utilisation du polymère de polybenzazole (P) selon la revendication 11 ou 12 comme matériau fibreux.
